# EUROPEAN PATENT SPECIFICATION

(11) **EP 4 246 941 B1**
(45) Date of publication and mention of the grant of the patent: **21.05.2025**
(21) Application number: 21914215.5
(22) Date of filing: 25.12.2021
(51) Int. Cl.: H04M 1/02, G06F 1/16

(54) **FOLDING MECHANISM**
KLAPPMECHANISMUS
MÉCANISME DE PLIAGE

(30) Priority: 29.12.2020 CN 202011602760
(43) Date of publication of application: 20.09.2023
(73) Proprietor: Huawei Technologies Co., Ltd., Shenzhen, Guangdong 518129 (CN)
(72) Inventor: YU, Weidong, Shenzhen, Guangdong 518129 (CN); ZHAN, Qiang, Shenzhen, Guangdong 518129 (CN); MAO, Weihua, Shenzhen, Guangdong 518129 (CN); HUANG, Bo, Shenzhen, Guangdong 518129 (CN); ZHA, Peng, Shenzhen, Guangdong 518129 (CN)
(74) Representative: Gill Jennings & Every LLP
(86) International application number: PCT/CN2021/141406
(87) International publication number: WO 2022/143478

(56) References cited:
- CN-A- 106 255 935
- CN-A- 108 965 503
- CN-A- 109 862 162
- CN-A- 110 784 570
- CN-A- 111 692 196
- CN-U- 208 421 694
- US-A1- 2020 267 856
- US-A1- 2020 293 094

## Description

This application claims priority to Chinese Patent Application No. 202011602760.1, filed with the China National Intellectual Property Administration on December 29, 2020 and entitled "FOLDING MECHANISM AND ELECTRONIC DEVICE".

### TECHNICAL FIELD

This application relates to the field of folding technologies, and in particular, to a folding mechanism.

### BACKGROUND

In recent years, a foldable electronic device is becoming a mainstream development trend because of a variable size of a flexible display of the foldable electronic device in different application scenarios.

The foldable electronic device usually implements relative folding or relative unfolding of the flexible display by using a folding mechanism. Currently, when the folding mechanism is folded, a crease can be clearly seen on the flexible display; and after the folding mechanism is folded, a large gap is formed on a side of the foldable electronic device. Consequently, the foldable electronic device is compromising in aesthetics and the flexible display is vulnerable to damage.

Therefore, the industry is researching on how to properly construct the folding mechanism to reduce the crease of the flexible display correspondingly disposed on the folding mechanism, and reduce the gap on the side of the foldable electronic device formed after the folding mechanism is folded.
CN 208421694 U discloses electronic equipment including first casing, second casing, third casing, flexible screen and clamp plate, the third casing is including relative first side that sets up and second side, form accommodating space between first side and the second side, first casing rotates to be connected in first side, the second casing rotates to connect and inclines in the second, flexible screen is including the first fixed area that connects gradually, buckle and distinguish and the second fixed area, first fixed area is fixed in first casing, the second fixed area is fixed in the second casing, at least, the district is buckled just to accommodating space when flexible screen is in the flat state of exhibition to the part, at least, accept in accommodating space when flexible screen is in fold condition in the partial district of buckling, pressing plate portion divides or whole one side of keeping away from accommodating space that is located the district of buckling, and the clamp plate connects in the third casing, and the clamp plate is used for the folding in -process at flexible screen, prevents flexible screen to remove towards the direction of keeping away from accommodating space.
CN 106255935 A discloses an electronic device comprising: a flexible display; a first body and a second body supporting the flexible display; and a hinge foldably connected with the first body by a first rotation shaft and foldably connected with the second body by a second rotation shaft, wherein, when the flexible display is folded or unfolded, the first body rotates about the first rotation shaft and slides along the hinge, and the second body rotates about the second rotation shaft and slides along the hinge, and thus the distance between the first and second rotation shafts changes.

### SUMMARY

The invention is defined in the appended claims. This application provides a folding mechanism. The folding mechanism is used in the electronic device. The folding mechanism in this application can reduce a crease of a flexible display correspondingly disposed on the folding mechanism, and reduce a gap on a side of the electronic device formed after the folding mechanism is folded.

According to a first aspect, this application provides a folding mechanism according to claim 1. The kinematic pair in this application may be of an integrated structure, and the kinematic pair of the integrated structure has high structural strength. In addition, the kinematic pair of the integrated structure can make cooperation between a rotation action between the support plate and the support and a sliding action between the support plate and the shaft base more accurate, so that the folding mechanism has high reliability and good stability.

The door plate can move relative to the shaft base in a second direction, that is, the door plate can move towards the shaft base in the second direction, or the door plate can move away from the shaft base in the second direction. The second direction is perpendicular to the first direction, and in the unfolded state, the second direction is perpendicular to a plane on which the main plate is located.

In a process of relative rotation between the support and the shaft base, the support plate can be driven to move and the door plate can be driven to move relative to the shaft base in the second direction, so that the support plate and the door plate are switched between the unfolded state and a folded state. In the unfolded state, the support plate and the door plate are disposed side by side in the first direction, and form a support surface for jointly supporting a flexible display. The first plate edge is adjacent to the door plate, and the first plate edge is located between the second plate edge and the door plate; and a spacing between the first plate edge and the door plate in the first direction is a first length. In the folded state, the spacing between the first plate edge and the door plate in the first direction is a second dimension, and the second dimension is greater than the first dimension. In the second direction, a vertical projection of the second plate edge on the door plate is located in the door plate, and the second direction is perpendicular to the first direction. In another implementation, when a dimension of the door plate in the first direction is small, in the folded state, the vertical projection of the second plate edge on the door plate in the second direction may alternatively not be in the door plate.

In this application, the first dimension and the second dimension are defined, and the second dimension is defined to be greater than the first dimension. In other words, in a folding process, the first plate edge of the support plate moves away from the door plate, so that in the folding process, the support plate and the door plate automatically avoid each other to form accommodating space for accommodating the flexible display, and a size of an area that is of the accommodating space and that is adjacent to the door plate is large. In this way, after the folding mechanism is folded, a crease corresponding to the flexible display disposed on the folding mechanism is not obvious, and damage to the flexible display in a bending process can be avoided. In addition, in this application, the vertical projection of the second plate edge on the door plate is located in the door plate, that is, when there are two support plates, in a folding process of the folding mechanism, second plate edges of the two support plates are close to each other. In this way, there is no gap on the side after an electronic device to which the folding mechanism is applied folded, so that good waterproof, dustproof and foreign matter-proof effect is achieved.

It should be noted that there may be two supports in this application, which are respectively referred to as a first support and a second support for differentiation. Correspondingly, there may be also two support plates, which are respectively referred to as a first support plate and a second support plate for differentiation. The first support is rotatably connected to the shaft base, and the second support is rotatably connected to the shaft base. The first support plate is rotatably connected to the first support, the first support plate is slidably connected to the shaft base, the second support plate is rotatably connected to the second support, and the second support plate is slidably connected to the shaft base. The first support and the second support are distributed on two opposite sides of the shaft base, the first support plate is disposed corresponding to the first support, and the second support plate is disposed corresponding to the second support. The first support plate and the second support plate are located on two opposite sides of the door plate.

The first support and the second support may have a same or similar structure, and the first support and the second support are symmetrically disposed. The first support plate and the second support plate may have a same or similar structure, and the first support plate and the second support plate are symmetrically disposed.

The folding mechanism in this application can be stably switched from the unfolded state to the folded state or from the folded state to the unfolded state. The folding mechanism has high precision in controlling internal movement such as a rotation action or a sliding action, and has good stability. Specifically, in this application, the support is rotatably connected to the shaft base by using a built-in revolute pair, and is accurate in movement. The support plate and the support and the shaft base are connected by using a built-in kinematic pair, and have a few connection structures and simple fitting, so that the folding mechanism has high precision in controlling the internal movement such as the rotation action or sliding action during a folding or unfolding process, and has high reliability and good stability.

In a possible implementation, the door plate includes a first side end and a second side end that are disposed opposite to each other in a third direction, and a third side end and a fourth side end that are disposed opposite to each other in the first direction, where the third direction is perpendicular to the first direction. In the unfolded state, the first plate edge is adjacent to the third side end and/or the fourth side end. It may be understood that there may be two support plates, where a first plate edge of one support plate is located at the third side end, and a first plate edge of the other support plate is located at the fourth side end. Alternatively, when there is one support plate, the first plate edge of the support plate may be located at the third side end or the fourth side end. The revolute pair and the kinematic pair are located in an area between the first side end and the second side end. In this application, the revolute pair and the kinematic pair are disposed between the first side end and the second side end of the door plate, that is, in the third direction, the revolute pair and the kinematic pair are disposed within a size range of the door plate. This reduces a dimension of the folding mechanism in the third direction, helps reduce a bezel of the electronic device, and implements a narrow bezel design of the electronic device.

In a possible implementation, a dimension of the shaft base in the third direction is less than a dimension of the support plate in the third direction, and the kinematic pair and the shaft base are disposed side by side in the third direction. That is, vertical projections of the kinematic pair and the shaft base on the plane on which the door plate is located do not overlap. In other words, in the third direction, the kinematic pair is located at an end part of the shaft base. In this way, space for accommodating the kinematic pair does not need to be separately reserved in the shaft base. This can reduce a size of the shaft base, and facilitates miniaturization and thinness of the shaft base and the electronic device.

The kinematic pair includes a rotating structure and a sliding structure. The rotating structure is rotatably connected to the support, the sliding structure is slidably connected to the shaft base. In a possible implementation, the rotating structure and the sliding structure are located on a side that is of the support plate and that faces the support. A joint is disposed between the rotating structure and the sliding structure, the rotating structure extends from the joint to the second plate edge, and the sliding structure extends from the joint to the first plate edge. The rotating structure extends from the joint to the second plate edge, so as to be rotatably connected to the support. The sliding structure extends from the joint to the first plate edge, so as to be slidably connected to the shaft base. The rotating structure and the sliding structure may be of an integrated structure, to enhance structural strength of the kinematic pair. In addition, control precision of the rotation action and the sliding action is high, so that stability of the folding mechanism is good.

In a possible implementation, the main body of the support is provided with a first end part and a second end part that are disposed opposite to each other in the third direction, each of the first end part and the second end part is provided with a connection structure, and the rotating structure is rotatably connected to the connection structure. The connection structure is located at the first end part and the second end part of the support, that is, the rotating structure rotatably connected to the connection structure is also located at the first end part and the second end part of the support, and the rotating structure and the shaft base are disposed side by side in the third direction. In this way, the rotating structure does not occupy internal space of the shaft base, and a size of the shaft base can be reduced, which facilitates miniaturization and thinness of the shaft base and the electronic device.

In a possible implementation, the connection structure is provided with an arc groove, the rotating structure includes an arc strip, and the arc strip fits the arc groove and can move in the arc groove. The arc strip can move in the arc groove to implement a rotatable connection between the support plate and the support. It may be understood that a radian of the arc strip is consistent with a radian of the arc groove, and the arc groove and the arc strip can rotate relative to each other. It should be noted that a connection manner between the support and the support plate is not limited to a connection manner between the arc strip and the arc groove, provided that the rotatable connection between the support and the support plate can be implemented.

In this implementation, the support and the support plate are rotatably connected by using a virtual shaft, so that design difficulty of the folding mechanism can be reduced, a requirement on a size of the folding mechanism is low, and lightness and thinness of the folding mechanism and the electronic device are facilitated. In some other embodiments, the support and the support plate may alternatively be rotatably connected by using a physical shaft. This is not strictly limited in this embodiment of this application.

In a possible implementation, the arc groove includes an opening and a bottom wall that are disposed opposite to each other, and a direction extending from the opening to the bottom wall is the third direction. The opening and the bottom wall extend in the third direction, which is consistent with a rotation direction of the support.

In a possible implementation, the sliding structure is provided with a sliding slot, and the sliding slot includes a first sliding end and a second sliding end. The first sliding end is adjacent to the j oint, and the second sliding end is adjacent to the first plate edge or extends out of the first plate edge. The shaft base includes a sliding pin, and the sliding pin can slide relative to the sliding structure in the sliding slot. When the folding mechanism is in the unfolded state, the sliding pin is located at the first sliding end, and when the folding mechanism is in the folded state, the sliding pin is located at the second sliding end. Specifically, a rotatable connection hole is provided on the shaft base, the sliding slot corresponds to the rotatable connection hole of the shaft base, and the sliding pin passes through the sliding slot and the rotatable connection hole, and fixedly fits the rotatable connection hole. In this way, a sliding connection between the support plate and the shaft base can be implemented.

It may be understood that the sliding slot may be a straight sliding slot, or may be a curved sliding slot. When the sliding slot is the straight sliding slot, the support plate slides at a high speed relative to the shaft base, so that the folding mechanism can be quickly folded or unfolded. When the sliding slot is the curved sliding slot, a folding or unfolding speed of the folding mechanism is low. This can improve folding or unfolding stability of the folding mechanism through fitting between the sliding slot and another driving structure, so that user experience is improved.

In a possible implementation, the sliding structure is provided with a first pressing part, and the first pressing part extends out of the first plate edge. The first pressing part is configured to press against the door plate, to drive the door plate to move away from the shaft base in the second direction. In the unfolded state, the first pressing part is configured to support movement of the door plate. In the second direction, the door plate may move away from the shaft base, or the door plate may move towards the shaft base. The movement of the door plate away from the shaft base may be driven by using the first pressing part. That is, because the first pressing part is located on the sliding structure, the movement of the door plate away from the shaft base may be driven by using a sliding structure that is of the support plate and that is slidably connected to the shaft base. In this way, a driving structure that drives the door plate to move away from the shaft base does not need to be separately disposed, so that the sliding structure is simple in structure and conveniently mounted. This can implement coherent cooperation of a rotation action, a sliding action, a moving action and the like of the folding mechanism, so that the folding mechanism has high control precision, high reliability and good stability.

In a possible implementation, mounting space is disposed on the shaft base, and an arc strip is disposed on a side wall of the mounting space. The revolute pair includes an arc plate and a bump located on a concave side of the arc plate. An edge of the arc plate and an edge of the bump form an arc groove, the arc strip is located in the arc groove, and the arc strip fits the arc groove and can move in the arc groove. The arc strip can move in the arc groove to implement a rotatable connection between the shaft base and the support. It may be understood that a radian of the arc strip is consistent with a radian of the arc groove, and the arc groove and the arc strip can rotate relative to each other. It should be noted that a connection manner between the support and the shaft base is not limited to a connection manner between the arc strip and the arc groove, provided that the rotatable connection between the support and the shaft base can be implemented.

In a possible implementation, the folding mechanism includes a slider and an ejecting structure, the slider is slidably connected to the shaft base, the slider can slide on the shaft base in the first direction, and the revolute pair is rotatably connected to the slider. The ejecting structure is configured to apply an ejecting force in the first direction to the revolute pair. The slider may slide in the first direction relative to the shaft base, and the revolute pair of the support is rotatably connected to the slider. In this way, the support may also slide in the first direction relative to the shaft base. When the folding mechanism is almost in the unfolded state, the ejecting structure ejects the revolute pair of the support, so that the support and the slider slide in the first direction at the same time, and the main body of the support gradually moves away from the shaft base. In this way, the support drives the support plate to move in the first direction, and the support plate moves away from the door plate, to tension the flexible display fastened to the folding mechanism, so as to reduce a problem of an uneven surface of the flexible display or a crease in the unfolded state.

When there is not slider, the revolute pair and the shaft base are rotatably connected directly. In the unfolded state, the revolute pair cannot slide in the first direction relative to the shaft base. In this case, the support cannot drive the support plate to move in the first direction, and the flexible display fastened to the folding mechanism cannot be tensioned. In this embodiment, the slider that can slide relative to the shaft base is disposed, and the revolute pair of the support is rotatably connected to the slider. In this way, the support may rotate relative to the shaft base and the support may also slide relative to the shaft base in the first direction. When the ejecting structure presses against the revolute pair, the ejecting structure may move the support and the slider in the first direction at the same time.

In a possible implementation, the slider includes a body, and a first accommodating groove and a second accommodating groove that are located on the body. The first accommodating groove communicates with the second accommodating groove, the ejecting structure is mounted on the shaft base, and a portion of the ejecting structure is located in the first accommodating groove. The revolute pair is located in the second accommodating groove and can rotate in the second accommodating groove, and when the folding mechanism is in the unfolded state, the ejecting structure ejects the revolute pair. It can be understood that the ejecting structure and the revolute pair are both accommodated in space of the slider.

In a possible implementation, the ejecting structure includes an end cover, an elastic part, and an ejector pin that are connected in sequence. The end cover is mounted on the shaft base, the elastic part and the ejector pin extend into the first accommodating groove, and when the folding mechanism is in the unfolded state, the ejector pin presses against the revolute pair. When the folding mechanism is almost in the unfolded state, the ejector pin of the ejecting structure ejects the revolute pair of the support, so that the support and the slider slide in the first direction at the same time, and the main body of the support gradually moves away from the shaft base. In this way, the support drives the support plate to move in the first direction, and the support plate moves away from the door plate, to tension the flexible display fastened to the folding mechanism, so as to reduce a problem of an uneven surface of the flexible display or a crease in the unfolded state.

In a possible implementation, an arc strip is disposed on a groove wall of the second accommodating groove. The revolute pair includes an arc plate and a bump located on a concave side of the arc plate. An edge of the arc plate and an edge of the bump form an arc groove, the arc strip is located in the arc groove, and the arc strip fits the arc groove and can move in the arc groove. The arc strip can move in the arc groove to implement a rotatable connection between the support and the slider on the shaft base. It may be understood that a radian of the arc strip is consistent with a radian of the arc groove, and the arc groove and the arc strip can rotate relative to each other. It should be noted that a connection manner between the support and the slider on the shaft base is not limited to a connection manner between the arc strip and the arc groove, provided that the rotatable connection between the support and the slider on the shaft base can be implemented.

In this implementation, the support and the slider on the shaft base are rotatably connected by using a virtual shaft, so that design difficulty of the folding mechanism can be reduced, a requirement on a size of the folding mechanism is low, and lightness and thinness of the folding mechanism and the electronic device are facilitated. In some other embodiments, the support and the slider on the shaft base may alternatively be rotatably connected by using a physical shaft. This is not strictly limited in this embodiment of this application.

In a possible implementation, the revolute pair includes a second pressing part, and the second pressing part extends out of the first plate edge. The second pressing part is configured to press against the door plate, to drive the door plate to move away from the shaft base in the second direction. In the unfolded state, the second pressing part is configured to support the door plate. In the second direction, the door plate may move away from the shaft base, or the door plate may move towards the shaft base. The movement of the door plate away from the shaft base may be driven by using the second pressing part. That is, because the second pressing part is located on the revolute pair, the movement of the door plate away from the shaft base may be driven by using a revolute pair that is of the support and that is rotatably connected to the shaft base. In this way, a driving structure that drives the door plate to move away from the shaft base does not need to be separately disposed, so that the revolute pair is simple in structure and conveniently mounted. This can implement coherent cooperation of a rotation action, a sliding action, a moving action and the like of the folding mechanism, so that the folding mechanism has high control precision, high reliability and good stability.

In a possible implementation, there are two supports and the two supports are distributed on two sides of the shaft base, and the two supports are respectively a first support and a second support. There are two support plates and the two support plates are distributed on two sides of the door plate, and the two support plates are respectively a first support plate and a second support plate. The first support plate is rotatably connected to the first support and slidably connected to the shaft base, and the second support plate is rotatably connected to the second support and slidably connected to the shaft base. It may be understood that the first support and the second support are symmetrically disposed, and the first support plate and the second support plate are symmetrically disposed.

In a possible implementation, the folding mechanism further includes a first synchronous arm and a second synchronous arm. The first synchronous arm is slidably connected and rotatably connected to the first support. The second synchronous arm is slidably connected and rotatably connected to the second support. The first synchronous arm and the second synchronous arm are connected by using a synchronous gear disposed on the shaft base, to implement synchronous rotation of the first support and the second support. The first synchronous arm and the second synchronous arm have a same or similar structure, and the first synchronous arm and the second synchronous arm are symmetrically disposed. The first synchronous arm and the second synchronous arm work together to enable the first support and the second support to move synchronously.

In a possible implementation, the first synchronous arm and the second synchronous arm are both located in an area between the first side end and the second side end of the door plate. In this embodiment, the first synchronous arm and the second synchronous arm are disposed in the area between the first side end to the second side end of the door plate, that is, in the third direction, the first synchronous arm and the second synchronous arm are disposed within a size range of the door plate. This reduces a dimension of the folding mechanism in the third direction, helps reduce a bezel of the electronic device, and implements a narrow bezel design of the electronic device.

In a possible implementation, an end that is of the first synchronous arm and that is engaged with the synchronous gear includes a third pressing part. The third pressing part is configured to press against the door plate, to drive the door plate to move away from the shaft base in the second direction. In the unfolded state, the third pressing part is configured to support the door plate. In the second direction, the door plate may move away from the shaft base, or the door plate may move towards the shaft base. The movement of the door plate away from the shaft base may be driven by using the third pressing part. That is, because the third pressing part is located on the first synchronous arm, the movement of the door plate away from the shaft base may be driven by using a structure that is of the first synchronous arm and that is rotatably connected to the shaft base. In this way, a driving structure that drives the door plate to move away from the shaft base does not need to be separately disposed, so that the first synchronous arm is simple in structure and conveniently mounted. This can implement coherent cooperation of a rotation action, a sliding action, a moving action and the like of the folding mechanism, so that the folding mechanism has high control precision, high reliability and good stability.

Similarly, the second synchronous arm may also include a third pressing part, that is, the second synchronous arm may also drive the door plate to move away from the shaft base. For details, refer to the first synchronous arm, and details are not described herein again.

In a possible implementation, the folding mechanism includes an elastic connection structure, the elastic connection structure elastically connects the shaft base to the door plate, and in a folding process of the folding mechanism, the elastic connection structure drives the door plate to move towards the shaft base in the second direction. That is, the door plate may move towards the shaft base by using the elastic connection structure.

In a possible implementation, the elastic connection structure includes a fastening element and an elastic part, the fastening element is fixedly connected to the door plate, the elastic part is sleeved on the fastening element and is elastically connected between the fastening element and the shaft base and an elastic force of the elastic part can drive the door plate to move towards the shaft base. The elastic part of the elastic connection structure has an elastic deformation capability, the elastic part of the elastic connection structure may be a spring, or the like, and the elastic part of the elastic connection structure is in a compressed state. When the door plate moves in a direction close to the shaft base, the elastic part of the elastic connection structure applies a force towards the shaft base to the door plate, so that the door plate quickly moves towards the shaft base, to quickly fold the folding mechanism and provide good use experience for a user.

In a possible implementation, the elastic connection structure includes a guide block and an elastic part, and the guide block is located on a side that is of the shaft base and that is away from the door plate. The guide block includes a mounting part, and a first bearing part and a second bearing part that are distributed on two opposite sides of the mounting part. The mounting part is fixedly connected to the door plate, a first accommodating part is formed between the first bearing part and the shaft base, and a second accommodating part is formed between the second bearing part and the shaft base. The elastic part is located in the first accommodating part and the second accommodating part, and elastically presses against the shaft base and the guide block.

In this embodiment, the elastic part elastically presses against the shaft base and the guide block. In this way, in the second direction, the shaft base does not need large space to accommodate the elastic part, and a dimension of the shaft base in the second direction can be reduced, so that miniaturization and thinness of the electronic device are facilitated.

### BRIEF DESCRIPTION OF DRAWINGS

The following describes the accompanying drawings used in embodiments of this application.
FIG. 1 is a schematic diagram of an exploded structure of an electronic device in an unfolded state according to an embodiment of this application;
FIG. 2 is an exploded diagram of a structure of a support apparatus in an unfolded state according to an embodiment of this application;
FIG. 3 is a schematic diagram of a structure of a support mechanism in a folded state according to an embodiment of this application;
FIG. 4 is an exploded diagram of a structure of a support apparatus in a folded state according to an embodiment of this application;
FIG. 5 is an enlarged schematic diagram of a structure of A of the support apparatus shown in FIG. 2;
FIG. 6 is an enlarged schematic diagram of a structure of B of the support apparatus shown in FIG. 4;
FIG. 7 is a schematic diagram of an exploded structure of a folding mechanism according to an embodiment of this application;
FIG. 8 is a schematic diagram of a structure of a housing shown in FIG. 7;
FIG. 9 is a schematic diagram of a structure of a shaft base shown in FIG. 7;
FIG. 10 is a schematic diagram of a partial structure of the shaft base shown in FIG. 9;
FIG. 11 is an exploded diagram of a partial structure of the shaft base shown in FIG. 10;
FIG. 12 is a schematic diagram of a structure of a slider according to an embodiment of this application;
FIG. 13 is a schematic diagram of a structure of a slider mounted on a shaft base according to an embodiment of this application;
FIG. 14 is a schematic diagram of structures of a first support and a second support shown in FIG. 7;
FIG. 15 is a schematic diagram of structures of a first revolute pair and a first connection arm according to an embodiment of this application;
FIG. 16 is a schematic diagram of structures of a second revolute pair and a second connection arm according to an embodiment of this application;
FIG. 17 is a schematic diagram of a partial structure of a first support according to an embodiment of this application;
FIG. 18 is a schematic diagram of a structure of another first support according to an embodiment of this application;
FIG. 19 is an exploded diagram of structures of a synchronization apparatus, a first synchronous arm, and a second synchronous arm shown in FIG. 7;
FIG. 20 is an exploded diagram of an assembled structure of the synchronization apparatus, the first synchronous arm, and the second synchronous arm shown in FIG. 19;
FIG. 21 is an exploded diagram of a partial structure of a folding mechanism according to an embodiment of this application;
FIG. 22 is a schematic diagram of fitting between some structures of a folding mechanism according to an embodiment of this application;
FIG. 23 is a structural diagram of a partial structure of a structure shown in FIG. 22;
FIG. 24 is a cross-sectional view of the structure shown in FIG. 22 along A-A;
FIG. 25 is a schematic diagram of the structure shown in FIG. 24 in another use state;
FIG. 26 is a cross-sectional view of the structure shown in FIG. 22 along B-B;
FIG. 27 is a schematic diagram of the structure shown in FIG. 26 in another use state;
FIG. 28 is a cross-sectional view of the structure shown in FIG. 22 along C-C;
FIG. 29 is a schematic diagram of the structure shown in FIG. 28 in another use state;
FIG. 30 is a schematic diagram of structures of a first support plate and a second support plate shown in FIG. 7;
FIG. 31 is a schematic diagram of a structure of a first kinematic pair of the first support plate shown in FIG. 30;
FIG. 32 is a schematic diagram of a structure of the first kinematic pair shown in FIG. 31 from another angle of view;
FIG. 33 is a schematic diagram of a structure of fitting between a first kinematic pair and a first main plate according to an embodiment of this application;
FIG. 34 is a schematic diagram of a partial structure of a folding mechanism according to an embodiment of this application;
FIG. 35 is a schematic diagram of a structure of fitting between a first support and a first support plate according to an embodiment of this application;
FIG. 36 is a schematic diagram of a partial structure of the folding mechanism shown in FIG. 7;
FIG. 37 is a cross-sectional view of the structure shown in FIG. 34 along D-D;
FIG. 38 is a schematic diagram of the structure shown in FIG. 37 in another use state;
FIG. 39 is a schematic diagram of a structure of a door plate shown in FIG. 7;
FIG. 40 is a schematic diagram of a structure of the door plate shown in FIG. 39 from another angle of view;
FIG. 41 is a schematic diagram of a partial structure of the folding mechanism shown in FIG. 7;
FIG. 42 is a schematic diagram of a structure of fitting between a door plate and a shaft base according to an embodiment of this application;
FIG. 43 is a schematic diagram of a structure of a guide block according to an embodiment of this application;
FIG. 44 is a schematic diagram of a structure of another shaft base according to an embodiment of this application;
FIG. 45 is a schematic diagram of a structure of the folding mechanism shown in FIG. 7;
FIG. 46 is a cross-sectional view of the structure shown in FIG. 45 along E-E;
FIG. 47 is a schematic diagram of a partial structure of the structure shown in FIG. 46 in another use state;
FIG. 48 is a cross-sectional view of the structure shown in FIG. 45 along F-F;
FIG. 49 is a schematic diagram of a partial structure of the structure shown in FIG. 48 in another use state;
FIG. 50 is a cross-sectional view of the structure shown in FIG. 45 along G-G;
FIG. 51 is a schematic diagram of a partial structure of the structure shown in FIG. 50 in another use state;
FIG. 52 is a cross-sectional view of the structure shown in FIG. 45 along H-H;
FIG. 53 is a schematic diagram of a partial structure of the structure shown in FIG. 52 in another use state;
FIG. 54 is a schematic diagram of a structure of fitting between a folding mechanism and a flexible display according to an embodiment of this application; and
FIG. 55 is a schematic diagram of the structure shown in FIG. 54 in another use state.

### DESCRIPTION OF EMBODIMENTS

The following describes embodiments of this application with reference to the accompanying drawings in embodiments of this application.

In the descriptions of embodiments of this application, it should be noted that, unless otherwise specified and limited, the terms "mount" and "connect" should be understood in a broad sense. For example, a "connection" may be a detachable connection, or an undetachable connection; may be a direct connection, or may be an indirect connection through an intermediate medium. A "fixed connection" means a connection to each other and that a relative position relationship after the connection remains unchanged. A "rotatable connection" means connection with each other and that relative rotation can be implemented after the connection. A "slidable connection" means connection with each other and that slidable rotation can be implemented after the connection. Orientation terms mentioned in embodiments of this application, for example, "on", "below", "inside", and "outside", are merely directions based on the accompanying drawings. Therefore, the orientation terms are used to better and more clearly describe and understand embodiments of this application, instead of indicating or implying that a specified apparatus or element should have a specific orientation, and be constructed and operated in the specific orientation. Therefore, this cannot be understood as a limitation on embodiments of this application.

This application provides an electronic device. The electronic device may be a foldable electronic product like a mobile phone, a tablet computer, a notebook computer, or a wearable device. This embodiment of this application is described by using an example in which the electronic device is a mobile phone.

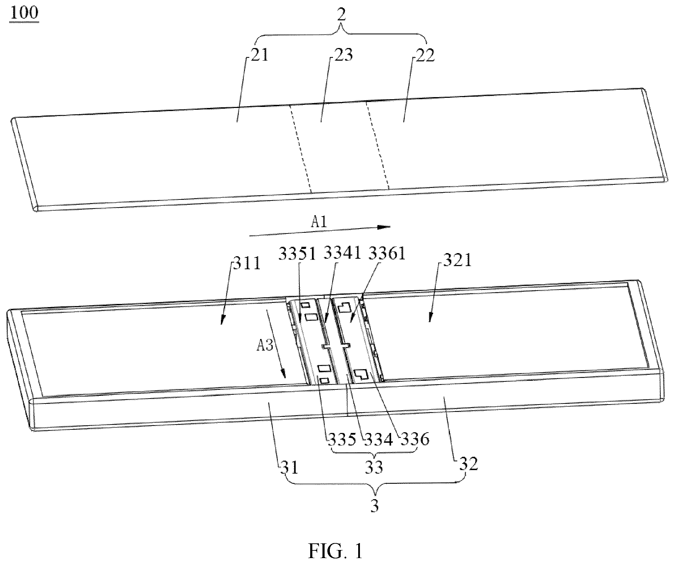

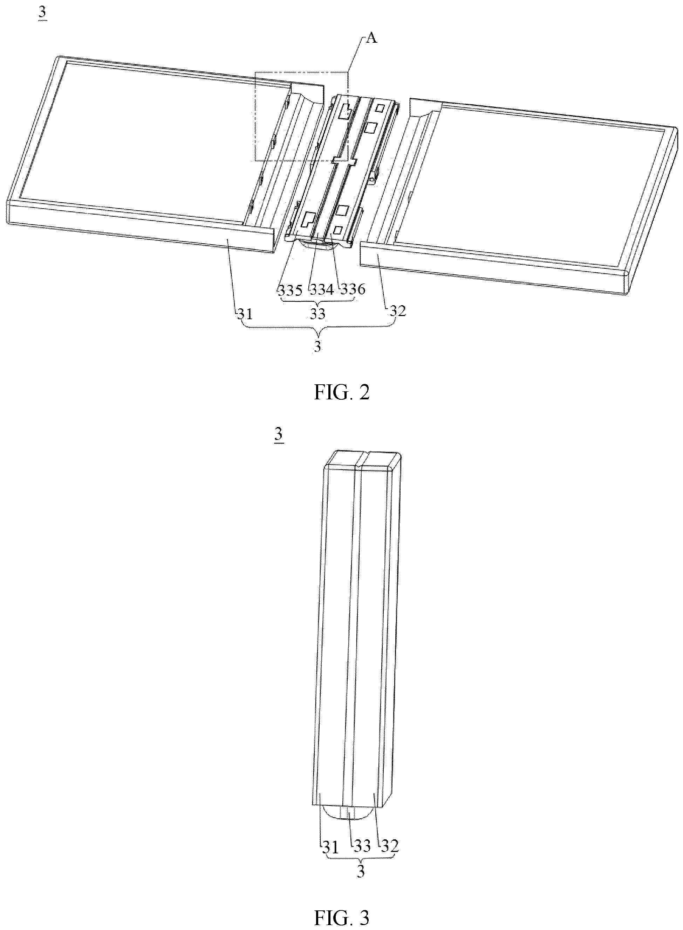

FIG. 1 is a schematic diagram of an exploded structure of an electronic device 100 in an unfolded state according to an embodiment of this application. FIG. 2 is an exploded diagram of a structure of a support apparatus 3 in an unfolded state according to an embodiment of this application. The electronic device 100 includes a flexible display 2 and a support apparatus 3. The support apparatus 3 is configured to carry the flexible display 2, and the support apparatus 3 can drive the flexible display 2 to fold or unfold. The support apparatus 3 includes a first frame body 31, a second frame body 32, and a folding mechanism 33. The folding mechanism 33 is located between the first frame body 31 and the second frame body 32, the first frame body 31 is fixedly connected to the folding mechanism 33, and the second frame body 32 is fixedly connected to the folding mechanism 33. The flexible display 2 includes a first non-bending portion 21, a second non-bending portion 22, and a bending portion 23. The bending portion 23 is connected between the first non-bending portion 21 and the second non-bending portion 22. The first non-bending portion 21 is disposed corresponding to the first frame body 31, the second non-bending portion 22 is disposed corresponding to the second frame body 32, and the bending portion 23 is disposed corresponding to the folding mechanism 33.

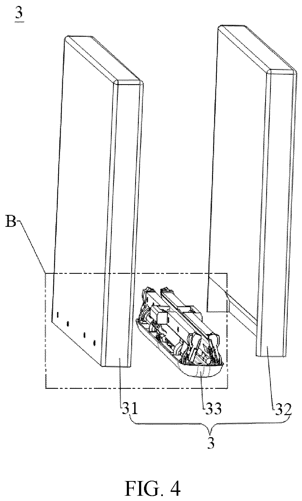

FIG. 3 is a schematic diagram of a structure of a support mechanism 3 in a folded state according to an embodiment of this application. FIG. 4 is an exploded diagram of a structure of a support apparatus 3 in a folded state according to an embodiment of this application. When the folding mechanism 33 is deformed, the first frame body 31 and the second frame body 32 can be driven to fold to a folded state, the flexible display (not shown in FIG. 3 and FIG. 4) is folded along with the support apparatus 3 to be in a folded state. The flexible display is located inside the support apparatus 3 and wrapped by the support apparatus 3. In other words, the electronic device 100 is an inward foldable flexible display folding device.

Specifically, in a process in which the first frame body 31 and the second frame body 32 are unfolded or folded relative to each other, the bending portion 23 of the flexible display 2 is deformed. The first frame body 31 drives the first non-bending portion 21 to move, and the second frame body 32 drives the second non-bending portion 22 to move, so that the first non-bending portion 21 and the second non-bending portion 22 are folded or unfolded relative to each other.

Refer to FIG. 1. The flexible display 2 is mounted on the support apparatus 3. Specifically, the first non-bending portion 21 is fixedly connected to the first frame body 31. For example, the first non-bending portion 21 may be bonded to a support surface 311 of the first frame body 31 by using an adhesive layer. The second non-bending portion 22 is fixedly connected to the second frame body 32. For example, the second non-bending portion 22 may be bonded to a support surface 321 of the second frame body 32 by using an adhesive layer. The bending portion 23 includes a first area close to the first non-bending portion 21, a second area close to the second non-bending portion 22, and a third area located between the first area and the second area. The folding mechanism 33 includes a door plate 334, a first support plate 335, and a second support plate 336. The first support plate 335 includes a support surface 335 configured to carry the flexible display 2, the door plate 334 includes a support surface 3341 configured to carry the flexible display 2, and the second support plate 336 includes a support surface 3361 configured to carry the flexible display 2. The first area may be fixedly connected to a partial area of the support surface 3351 of the first support plate 335, for example, may be fastened by using an adhesive layer. The second area may be fixedly connected to a partial area of the support surface 3361 of the second support plate 336, for example, may be fastened by using an adhesive layer. The third portion corresponds to the support surface 3341 of the door plate 334, and the third portion may move relative to the support surface 3341 of the door plate 334.

It can be understood that the adhesive layer between the first non-bending portion 21 and the first frame body 31, the adhesive layer between the second non-bending portion 22 and the second frame body 32, the adhesive layer between the first area of the bending portion 23 and the support surface 3351 of the first support plate 335, and the adhesive layer between the second area of the bending portion 23 and the support surface 3361 of the second support plate 336 may be continuous entire adhesive layers, or may be dot-break adhesive layers, or may be adhesive layers having hollow-out areas. A specific solution of the adhesive layer is not strictly limited in this embodiment of this application.

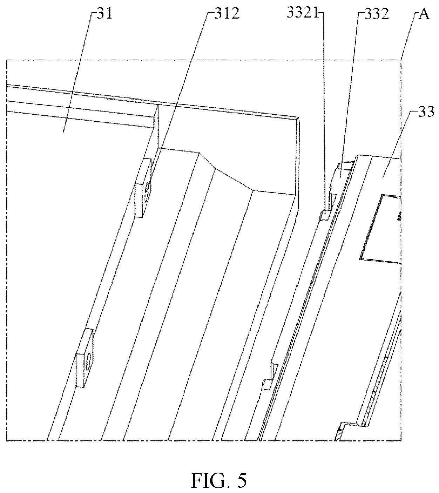

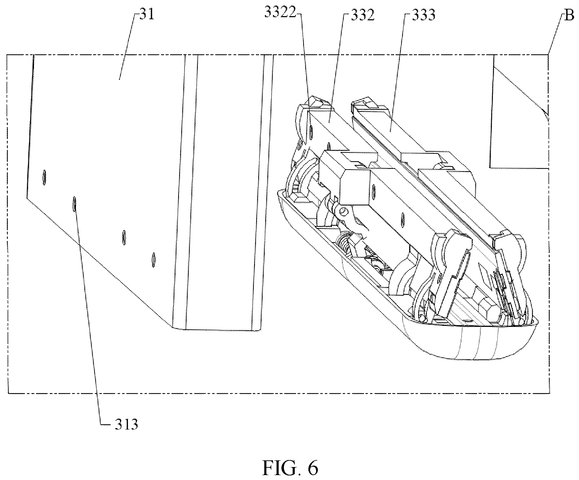

FIG. 5 is an enlarged schematic diagram of a structure of A of the support apparatus 3 shown in FIG. 2. FIG. 6 is an enlarged schematic diagram of a structure of B of the support apparatus 3 shown in FIG. 4. The first frame body 31 and the second frame body 32 are fixedly connected to the folding mechanism 33. Specifically, a connection between the first frame body 31 and the folding mechanism 33 is used as an example. The folding mechanism 33 is provided with a first support 332, the first frame body 31 is fixedly connected to the first support 332, and a positioning post 3321 and a first fastening hole 3322 are disposed on the first support 332. A positioning hole 312 and a second fastening hole 313 are provided on the first frame body 31. During mounting, the positioning post 3321 passes through the positioning hole 312 to implement initial positioning and mounting of the first frame body 31 and the folding mechanism 33, and the first fastening hole 3322 and the second fastening hole 313 are correspondingly disposed. A fastening structure (not shown in FIG. 5 and FIG. 6) passes through the first fastening hole 3322 and the second fastening hole 313 to implement a fixed connection between the first frame body 31 and the folding mechanism 33. The fastening structure may be a screw, a bolt, and the like. The second frame body 32 and the first frame body 31 are disposed opposite to each other, and the second frame body 32 is fixedly connected to the folding mechanism 33. Specifically, the folding mechanism 33 is provided with a second support 333. For a connection manner between the second frame body 32 and the second support 333 of the folding mechanism 33, refer to a connection manner between the first frame body 31 and the folding mechanism 33, and details are not described herein again.

It can be understood that, a connection manner between the first frame body 31 and the folding mechanism 33 and a connection manner between the second frame body 32 and the folding mechanism 33 are not limited to fastening by using a fastening structure, and may alternatively be fixedly mounted by welding, bonding, snap-fastening, and the like, to implement a fixed connection between the first frame body 31 and the folding mechanism 33, and a fixed connection between the second frame body 32 and the folding mechanism 33. In this way, in a process of opening or closing the folding mechanism 33, the first frame body 31 and the second frame body 32 are driven to open or close.

As shown in FIG. 1, when the electronic device 100 is in the unfolded state, that is, the support apparatus 3 is in the unfolded state, and the flexible display 2 is unfolded along with the support apparatus 3 to be in the unfolded state. For example, the folding mechanism 33, the first frame body 31, and the second frame body 32 may be on a same plane. In other words, an included angle between the first frame body 31 and the second frame body 32 may be approximately 180°. In another implementation, when the support apparatus 3 is in the unfolded state, the included angle between the first frame body 31 and the second frame body 32 may alternatively be 175°, 183°, 168°, or the like. That is, the included angle between the first frame body 31 and the second frame body 32 may have some deviation relative to 180 degrees.

For example, when the support apparatus 3 is in the unfolded state, the first frame body 31 and the second frame body 32 are spliced. The first frame body 31 and the second frame body 32 that are spliced may press against each other. The first frame body 31 and the second frame body 32 can be spliced to stop an unfolding action of the support apparatus 3, to prevent the support apparatus 3 from being excessively bent during unfolding. In this way, damage to the flexible display 2 and the folding mechanism 33 is avoided, so that reliability of the flexible display 2 and the electronic device 100. The first frame body 31 and the second frame body 32 are spliced together to form an appearance of the electronic device 100, and the appearance of the folding mechanism 33 is shielded by the first frame body 31 and the second frame body 32.

As shown in FIG. 3, when the electronic device 100 is in the folded state, that is, the support apparatus 3 is in the folded state, the flexible display 2 (not shown in FIG. 3) is folded along with the support apparatus 3 to be in the folded state. The electronic device 100 is an inward foldable device, and the folded flexible display 2 is located inside the support apparatus 3. It may be understood that, when a user does not use the electronic device 100 and folds the electronic device 100, the support apparatus 3 protects the flexible display 2 inside, to avoid scratching, damage due to a collision, and the like of the flexible display 2.

When the support apparatus 3 is in the folded state, the first frame body 31 and the second frame body 32 are completely closed with no gap or a small gap between the first frame body 31 and the second frame body 32, to achieve good waterproof, dustproof and foreign matter-proof effect, so as to improve reliability of the electronic device 100. The first frame body 31 and the second frame body 32 can be completely closed to expose the folding mechanism 33, so that the first frame body 31, the second frame body 32, and the folding mechanism 33 jointly form an appearance of the electronic device 100.

The first frame body 31 and the second frame body 32 may alternatively be unfolded or folded relative to each other to an intermediate state, so that the folding mechanism 33, the support apparatus 3, and the electronic device 100 are in the intermediate state, where the intermediate state may be any state between the unfolded state and the folded state. The flexible display 2 moves along with the support apparatus 3.

In this embodiment, the flexible display 2 is folded and unfolded along with the support apparatus 3. When the electronic device 100 is in the unfolded state, the flexible display 2 is in the unfolded state, and the flexible display 2 can be used by the user for displaying. It may be understood that the flexible display 2 may be a bezel-less screen display. In this way, the electronic device 100 has a large display area, to improve user experience. When the electronic device 100 is in the folded state, the flexible display 2 is folded, and an overall planar size of the electronic device 100 is small, so that it is convenient for a user to carry and place the electronic device.

For example, the flexible display 2 may be an organic light-emitting diode (organic light-emitting diode, OLED) display, an active-matrix organic light-emitting diode (active-matrix organic light-emitting diode, AMOLED) display, a mini organic light-emitting diode (mini organic light-emitting diode) display, a micro light-emitting diode (micro organic light-emitting diode) display, a micro organic light-emitting diode (micro organic light-emitting diode) display, or a quantum dot light-emitting diode (quantum dot light-emitting diode, QLED) display.

In some embodiments, the electronic device 100 may further include a plurality of modules (not shown in the figure), and the plurality of modules may be accommodated inside the support apparatus 3. The plurality of modules of the electronic device 100 may include but are not limited to a mainboard, a processor, a memory, a battery, a camera module, an earpiece module, a speaker module, a microphone module, an antenna module, a sensor module, and the like. A quantity, types, locations, and the like of modules of the electronic device 100 are not specifically limited in this embodiment of this application.

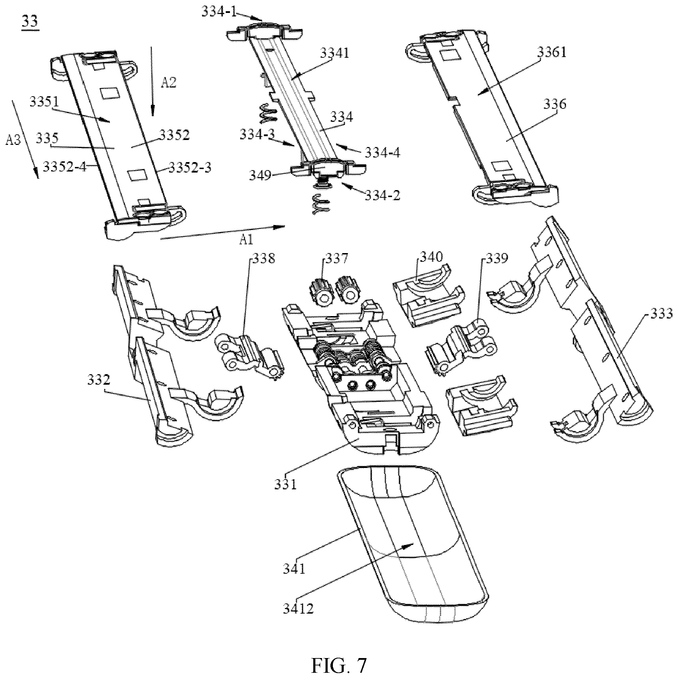

FIG. 7 is a schematic diagram of an exploded structure of a folding mechanism 33 according to an embodiment of this application. The folding mechanism 33 includes a shaft base 331, a first support 332, a second support 333, a door plate 334, a first support plate 335, a second support plate 336, a synchronization apparatus 337, a first synchronous arm 338, a second synchronous arm 339, a slider 340, and a housing 341.

The first support 332 may be rotatably connected to the shaft base 331, the second support 333 may be rotatably connected to the shaft base 331, the first support 332 and the second support 333 are oppositely disposed on two sides of the shaft base 331, and the shaft base 331 is mounted in the housing 341. The first support 332 is fixedly connected to the first frame body 31, and the second support 333 is fixedly connected to the second frame body 32. Therefore, when the first support 332 rotates relative to the shaft base 331 and the second support 333 rotates relative to the shaft base 331, the first frame body 31 moves relative to the second frame body 32. In other words, the first support 332 drives the first frame body 31, and the second support 333 drives the second frame body 32 to fold or unfold relative to each other.

In another implementation, the slider 340 is mounted on the shaft base 331, the slider 340 is slidably connected to the shaft base 331, and the first support 332 and the second support 333 are rotatably connected to the slider 340. That is, the first support 332 and the second support 333 are rotatably connected to the shaft base 331 by using the slider 340.

In this embodiment, there is a small quantity of rotatable connection parts between the first support 332 and the shaft base 331 and between the second support 333 and the shaft base 331, and the parts have a simple fitting relationship, a short dimensional chain, and a small accumulated transmission error, so that control precision of the folding mechanism 33 is high. This improves rotation precision of the support apparatus 3, and helps improve use experience of the electronic device 100 to which the support apparatus 3 is applied.

The synchronization apparatus 337 may be mounted on the shaft base 331, and the synchronization apparatus 337 is rotatably connected to the shaft base 331. One end of the first synchronous arm 338 is slidably connected to the first support 332, and the other end of the first synchronous arm 338 is rotatably connected to the shaft base 331, and is mutually engaged with the synchronization apparatus 337 on the shaft base 331. One end of the second synchronous arm 339 is slidably connected to the second support 333, and the other end of the second synchronous arm 339 is rotatably connected to the shaft base 331, and is mutually engaged with the synchronization apparatus 337 on the shaft base 331. The synchronization apparatus 337 is configured to make the first synchronous arm 338 and the second synchronous arm 339 synchronously move during movement of the support apparatus 3. The first synchronous arm 338 and the second synchronous arm 339 drive the first support 332 and the second support 333 to synchronously move, and the first support 332 and the second support 333 drive the first frame body 31 and the second frame body 32 to move synchronously, so as to synchronously fold or unfold the first frame body 31 and the second frame body 32 relative to each other. This improves mechanism operation experience of the support apparatus 3 and the electronic device 100.

The door plate 334 is mounted on the shaft base 331. In a process of switching the folding mechanism 33 between an unfolded state and a folded state, the door plate 334 can move in a second direction A2 relative to the shaft base 331, that is, in the second direction A2, the door plate 334 can move in a direction away from the shaft base 331, and the door plate 334 can move in a direction close to the shaft base 331. In other words, the door plate 334 is a liftable plate body, and the door plate 334 is connected to the shaft base 331 in a lifting manner. Specifically, in a process of unfolding the folding mechanism 33, the door plate 334 moves in the direction away from the shaft base 331, that is, the door plate 334 gradually rises, to support the flexible display 2. In a process of closing the folding mechanism 33, the door plate 334 moves in the direction close to the shaft base 331, that is, the door plate 334 gradually drops, to jointly form accommodating space with the first support plate 335 and the second support plate 336 for accommodating the flexible display 2.

The first support plate 335 is rotatably connected to the first support 332, and the first support plate 335 is slidably connected to the shaft base 331. The first support plate 335 may further slide relative to the shaft base 331 while rotating relative to the first support 332. The first support plate 335 and the second support plate 336 are distributed on two sides of the door plate 334. The second support plate 336 is rotatably connected to the second support 333, and the second support plate 336 is slidably connected to the shaft base 331. The second support plate 336 may further slide relative to the shaft base 331 while rotating relative to the second support 333.

It should be noted that the first support plate 335 is provided with a first main plate 3352, and the first main plate 3352 includes a first plate edge 3352-3 and a second plate edge 3352-4 that are disposed opposite to each other. When the folding mechanism 33 is in the unfolded state, the first plate edge 3352-3 and the second plate edge 3352-4 are arranged in a first direction A1, where the second direction A2 is perpendicular to the first direction A1. In addition, in the unfolded state, the second direction A2 is perpendicular to a plane on which the first main plate 3352 is located, and a direction perpendicular to the first direction A1 and the second direction A2 is a third direction A3. It may be understood that the second direction A2 is also perpendicular to the door plate 334.

Refer to FIG. 4 and FIG. 7. In a process of folding the folding mechanism 33, the door plate 334 moves in the direction close to the shaft base 331. An end that is of the first support plate 335 and that is adjacent to the door plate 334, and an end that is of the second support plate 336 and that is adjacent to the door plate 334 move in the direction away from the door plate 334. An end that is of the first support plate 335 and that is away from the door plate 334, and an end that is of the second support plate 336 and that is away from the door plate 334 are close to each other. The door plate 334, the first support plate 335, and the second support plate 336 automatically avoid each other to jointly form accommodating space for accommodating the flexible display 2.

Refer to FIG. 2 and FIG. 7. In a process of unfolding the folding mechanism 33, the door plate 334 moves in the direction away from the shaft base 331. When the electronic device 100 is completely in the unfolded state, a support surface 3341 of the door plate 334 is flush with a support surface 3351 of the first support plate 335 and a support surface 3361 of the second support plate 336. In other words, when the folding mechanism 33 is in the unfolded state, the support surface 3341 of the door plate 334, the support surface 3351 of the first support plate 335, and the support surface 3361 of the second support plate 336 are configured to make the flexible display 2 to be in the unfolded state. When the user performs a touch operation, the door plate 334, the first support plate 335, and the second support plate 336 can provide flat strong support for the flexible display 2, thereby improving operation experience and picture viewing experience of the user.

The folding mechanism 33 in this application can be stably switched from the unfolded state to the folded state or from the folded state to the unfolded state. The folding mechanism 33 has high precision in controlling internal movement such as a rotation action or a sliding action, and has good stability.

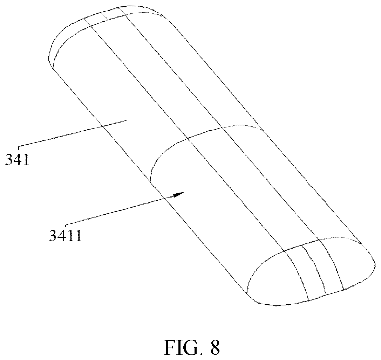

FIG. 8 is a schematic diagram of a structure of a housing 341 shown in FIG. 7. Specifically, FIG. 8 is a schematic diagram of a structure obtained after the housing 341 shown in FIG. 7 is flipped by 180 degrees. The housing 341 includes a housing surface 3411 and a mounting cavity 3412, where the housing surface 3411 is a smooth surface, and the shaft base 331 is mounted in the mounting cavity 3412. The housing 341 may be of an integrated structure, so that structural strength of the housing 341 can be effectively improved and aesthetic smoothness of the housing 341 can be improved.

For example, the shaft base 331 may be fastened to the housing 341 by using a fastening structure (not shown in the figure, for example, a screw and a bolt). The shaft base 331 may alternatively be fastened to the housing 341 by using an adhesive, welding, or snap fastening. This is not limited in this application, provided that the shaft base 331 and the housing 341 can be fixedly connected firmly.

Refer to FIG. 1, FIG. 2, FIG. 7, and FIG. 8 together. When the first frame body 31 and the second frame body 32 are unfolded relative to each other to the unfolded state, the first frame body 31 and the second frame body 32 cover the housing surface 3411 of the housing 341. In other words, when the support apparatus 3 is in the unfolded state, the first frame body 31 and the second frame body 32 can shield the housing 341 from a back side (namely, a side facing the flexible display 2) of the support apparatus 3. In this case, the first frame body 31 and the second frame body 32 can also shield other components of the folding mechanism 33 from the back side of the support apparatus 3, so that the support apparatus 3 implements self-shielding on the back side, to protect the folding mechanism 33. In addition, the support apparatus 3 and the electronic device 100 are integral in aesthetics, with satisfying aesthetic experience and good waterproof and dustproof performance. In other words, an appearance seen from the back side of the electronic device 100 is an appearance of the first frame body 31 and the second frame body 32.

Refer to FIG. 3, FIG. 4, FIG. 7, and FIG. 8 together. When the first frame body 31 and the second frame body 32 are folded relative to each other to the folded state, the housing surface 3411 of the housing 341 is exposed relative to the first frame body 31 and the second frame body 32. In this case, the first frame body 31, the second frame body 32, and the housing 341 jointly form an appearance part of the electronic device 100. In this way, the electronic device 100 can implement self-shielding on the back side in the folded state, so that aesthetic integrity is improved, and waterproof and dustproof performance is good.

It may be understood that the housing surface 3411 may form a curved surface or a shape similar to a curved surface, and has good smoothness. In this way, when the electronic device 100 is in the folded state and the housing surface 3411 is exposed, aesthetic experience and holding experience of the electronic device 100 can be effectively improved.

In another implementation, the housing 341 may be integrally formed on a side that is of the shaft base 331 and that is away from the flexible display 2, so that an assembly process is simplified, production efficiency is improved, and mechanical strength of the folding mechanism 33 can be effectively improved.

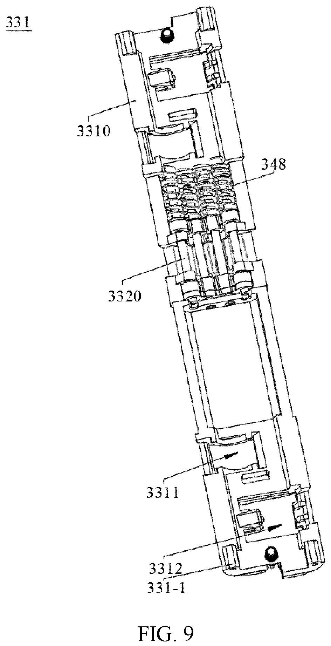

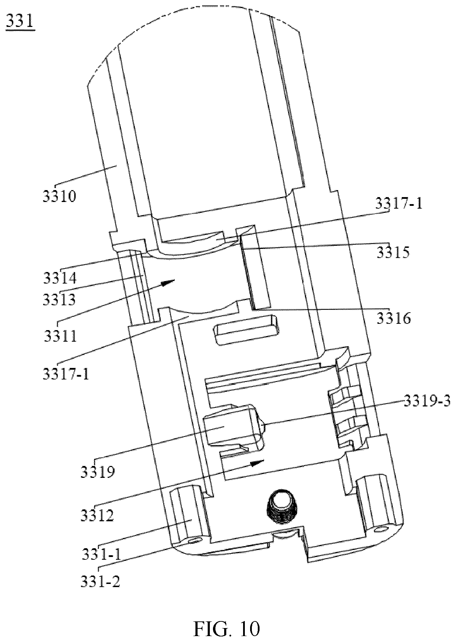

FIG. 9 is a schematic diagram of a structure of the shaft base 331 shown in FIG. 7. FIG. 10 is a schematic diagram of a partial structure of the shaft base 331 shown in FIG. 9. The shaft base 331 includes a base body 3310, and first mounting space 3311, second mounting space 3312, a rotating shaft 3320, and a connection bump 331-1 that are located on the base body 3310. The first mounting space 3311 and the second mounting space 3312 are configured to mount the first support 332 and the second support 333, and the rotating shaft 3320 is configured to connect the synchronization apparatus 337, the first synchronous arm 338, and the second synchronous arm 339. The connection bump 331-1 is configured to connect the first support plate 335 and the second support plate 336.

As shown in FIG. 10, the first mounting space 3311 includes a first side wall 3313, a second side wall 3314, a third side wall 3315, and a fourth side wall 3316. The first side wall 3313 and the third side wall 3315 of the first mounting space 3311 are disposed opposite to each other, and the second side wall 3314 and the fourth side wall 3316 of the first mounting space 3311 are disposed opposite to each other. The second side wall 3314 of the first mounting space 3311 is provided with an arc strip 3317-1, and the fourth side wall 3316 of the first mounting space 3311 is provided with an arc strip 3317-1.

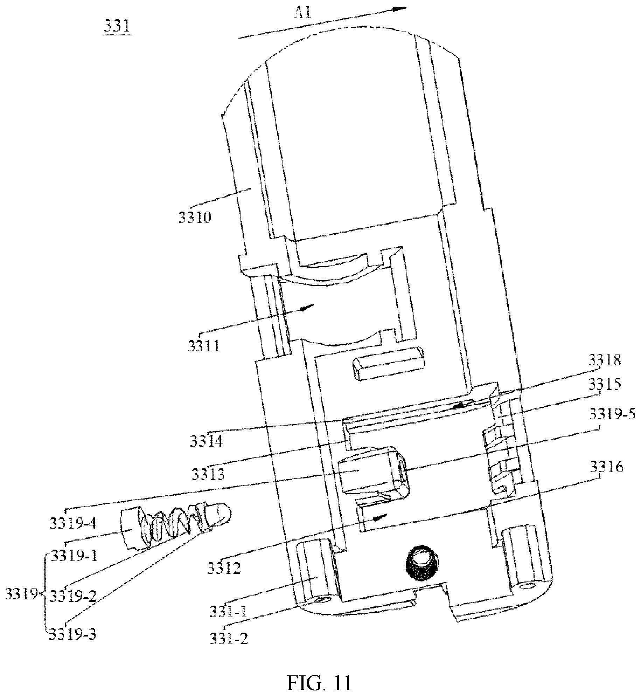

FIG. 11 is an exploded diagram of a partial structure of the shaft base 331 shown in FIG. 10. The second mounting space 3312 includes a first side wall 3313, a second side wall 3314, a third side wall 3315, and a fourth side wall 3316. The first side wall 3313 and the third side wall 3315 of the second mounting space 3312 are disposed opposite to each other, and the second side wall 3314 and the fourth side wall 3316 of the second mounting space 3312 are disposed opposite to each other. A sliding slot 3318 is provided on the second side wall 3314 of the second mounting space 3312. Correspondingly, a sliding slot 3318 (not shown in the figure) is provided on the fourth side wall 3316 of the second mounting space 3312.

The folding mechanism 33 is provided with an ejecting structure 3319 and a housing 3319-4, and the ejecting structure 3319 and the housing 3319-4 are mounted on the shaft base 331. The ejecting structure 3319 includes an end cover 3319-1, an elastic part 3319-2, and an ejector pin 3319-3 that are connected in sequence, that is, one end of the elastic part 3319-2 is fastened to the end cover 3319-1, and the other end of elastic part 3319-2 is fastened to ejector pin 3319-3. The housing 3319-4 is fastened to the first side wall 3313 of the second mounting space 3312, the housing 3319-4 is provided with a through hole 3319-5, and the end cover 3319-1 is mounted on the shaft base 331. The elastic part 3319-2 and the ejector pin 3319-3 extend into the through hole 3319-5 of the housing 3319-4, and at least a portion of the ejector pin 3319-3 extends out of the through hole 3319-5 of the housing 3319-4, that is, the end cover 3319-1 is mounted on the base body 3310 of the shaft base 331, and the elastic part 3319-2 and the ejector pin 3319-3 extend into the through hole 3319-5 of the housing 3319-4. The housing 3319 is configured to limit the ejector pin 3319-3 to prevent the ejector pin from coming out in the first direction A1. It may be understood that, the base body 3310 may be provided with a limiting structure, and a surface that is of the end cover 3319-1 and that faces the elastic part 3319-2 may fit the limiting structure of the base body 3310, to limit a position of the end cover 3319-1 in the base body 3310. The second mounting space 3312 is configured to fit the slider 340.

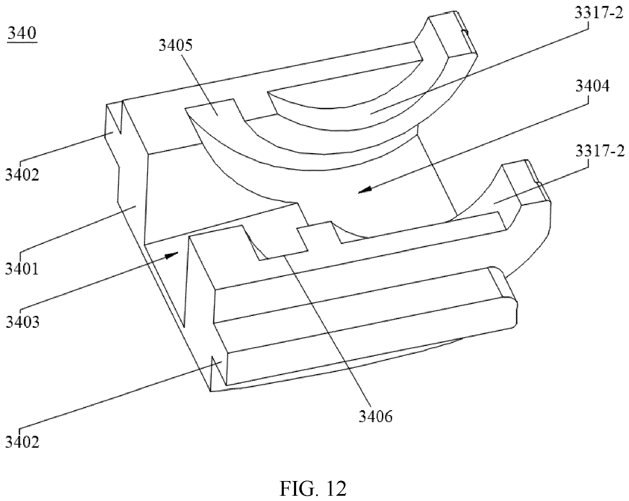

FIG. 12 is a schematic diagram of a structure of the slider 340. The slider 340 includes a body 3401, and a first accommodating groove 3403 and a second accommodating groove 3404 that are located on the body 3401. The first accommodating groove 3403 and the second accommodating groove 3404 communicate with each other. A bump 3402 is disposed on each of two opposite outer walls of the body 3401. The second accommodating groove 3404 includes two opposite groove walls (referred to as a first groove wall 3405 and a second groove wall 3406 for distinguishing), and the first groove wall 3405 and the second groove wall 3406 are both provided with arc strips 3317-2.

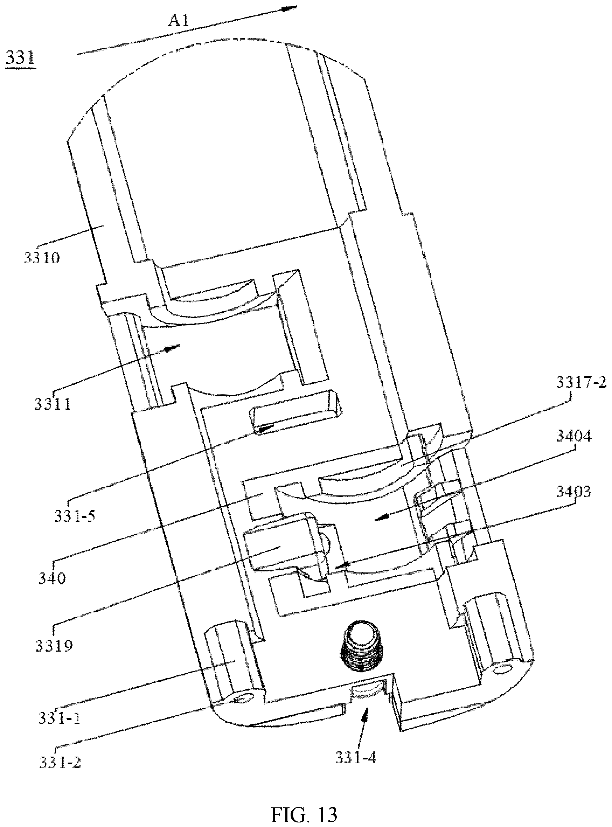

Refer to FIG. 11, FIG. 12, and FIG. 13 together. FIG. 13 is a schematic diagram of a structure of the slider 340 mounted on the shaft base 331. The slider 340 is slidably connected to the shaft base 331. The slider 340 is mounted in the second mounting space 3312 of the shaft base 331, and the slider 340 can slide in the second mounting space 3312 of the shaft base 331 in the first direction A1. Specifically, the bumps 3402 on the two outer side walls of the slider 340 are respectively located in the sliding slot 3318 on the second side wall 3314 and the sliding slot 3318 on the fourth side wall 3316 of the second mounting space 3312, to implement a slidable connection between the slider 340 and the shaft base 331. The ejecting structure 3319 is mounted on the shaft base 331 and a portion of the ejecting structure 3319 (namely, the elastic part 3319-2 and ejector pin 3319-3) is located in the first accommodating groove 3403. It may be understood that the slider 340 may slide in the second mounting space 3312 of the shaft base 331 in the first direction A1.

It should be noted that structures of the first mounting space 3311 and the second mounting space 3312 on the shaft base 331 may be the same or different. Specifically, the ejecting component 3319 and the slider 340 may also be disposed in the first mounting space 3311 on the shaft base 331. That is, a structure of the first mounting space 3311 is the same as a structure of the second mounting space 3312. Alternatively, the ejecting component 3319 and the slider 340 may not be disposed in the second mounting space 3312 on the shaft base 331. That is, a structure of the second mounting space 3312 is the same as a structure of the first mounting space 3311. Alternatively, as shown in FIG. 9, the first mounting space 3311 in which the ejecting component 3319 and the slider 340 are not disposed and the second mounting space 3312 in which the ejecting component 3319 and the slider 340 are disposed may be included on the shaft base 331.

Refer to FIG. 7 and FIG. 9 together. A plurality of rotating shafts 3320 and an elastic part 348 are disposed on the shaft base 331, the plurality of rotating shafts 3320 are spaced from each other, and the plurality of rotating shafts 3320 respectively fit the synchronization apparatus 337, the first synchronous arm 338, and the second synchronous arm 339, to implement a rotatable connection between the synchronization apparatus 337, the first synchronous arm 338, the second synchronous arm 339, and the shaft base 331. It should be noted that there are four rotating shafts 3320 in FIG. 9, but the quantity of rotating shafts 3320 in this implementation is not limited to four. FIG. 9 is merely an example for representation. The quantity of rotating shafts 3320 may alternatively be three, five, or the like, and may be set according to a requirement and mounting space. The elastic part 348 of the shaft base 331 is sleeved on the partial rotating shaft 3320.

Refer to FIG. 10. A connection bump 331-1 may be disposed on the shaft base 331, the connection bump 331-1 is protruded relative to the base body 3310, and the connection bump 331-1 is provided with a rotatable connection hole 331-2.

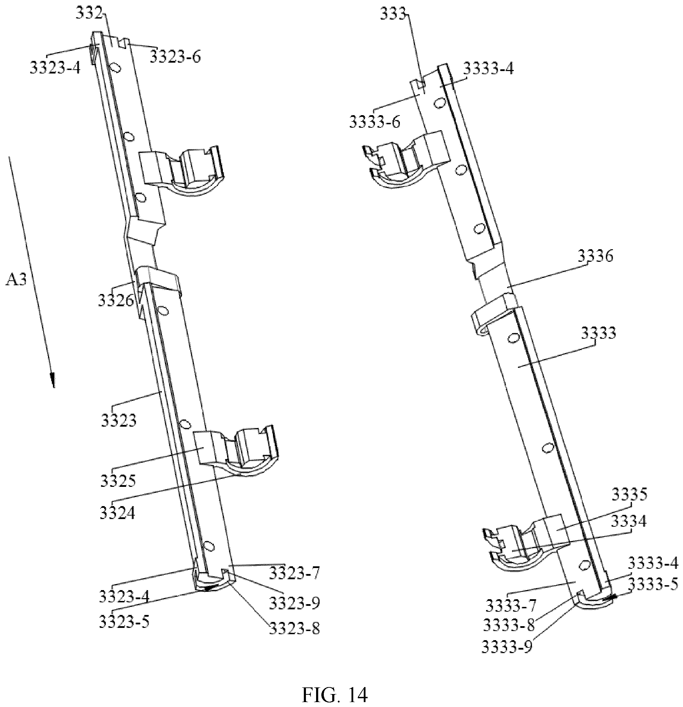

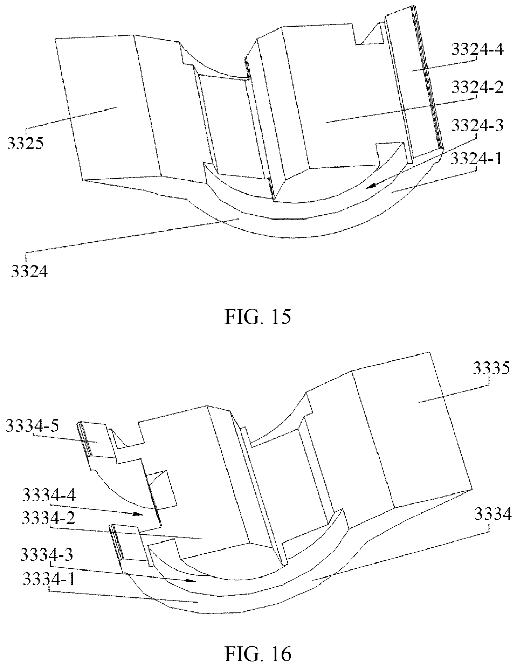

FIG. 14 is a schematic diagram of structures of the first support 332 and the second support 333 shown in FIG. 7. FIG. 15 is a schematic diagram of structures of a first revolute pair 3324 and a first connection arm 3325. The first support 332 includes a first main body 3323, the first revolute pair 3324, and the first connection arm 3325 located between the first main body 3323 and the first revolute pair 3324. The first revolute pair 3324 is fixedly connected to the first main body 3323 by using the first connection arm 3325, that is, the first connection arm 3325 is configured to fixedly connect the first main body 3323 and the first revolute pair 3324.

Refer to FIG. 14. The first main body 3323 is provided with a first end part 3323-6 and a second end part 3323-7 that are disposed opposite to each other in a third direction A3. Each of the first end part 3323-6 and the second end part 3323-7 of the first main body 3323 is provided with a first connection structure 3323-4, and the first connection structure 3323-4 is provided with a first arc groove 3323-5. The first arc groove 3323-5 includes an opening 3323-8 and a bottom wall 3323-9 that are disposed opposite to each other, and the opening 3323-8 and the bottom wall 3323-9 of the first arc groove 3323-5 extend in the third direction A3.

Refer to FIG. 15. The first revolute pair 3324 includes a first arc plate 3324-1 and a first bump 3324-2 located on a concave side of the first arc plate 3324-1. An edge of the first arc plate 3324-1 fits an edge of the first bump 3324-2 to form a second arc groove 3324-3. It may be understood that the second arc groove 3324-3 is space formed between a surface that is of the first arc plate 3324-1 and that faces the first bump 3324-2, and a surface that is of the first bump 3324-2 and that faces the first arc plate 3324-1.

The first revolute pair 3324 further includes a second pressing part 3324-4, and the second pressing part 3324-4 of the first revolute pair 3324 may be located at an end part of the first revolute pair 3324, or may be located at another position of the first revolute pair 3324.

It should be noted that FIG. 14 is merely an example indicating that a quantity of first revolute pairs 3324 of the first support 332 is two. In another implementation, the quantity of first revolute pairs 3324 of the first support 332 may alternatively be three, four, or the like. This is not limited in this application.

FIG. 16 is a schematic diagram of structures of a second revolute pair 3334 and a second connection arm 3335. The second support 333 includes a second main body 3333, the second revolute pair 3334, and the second connection arm 3335 located between the second main body 3333 and the second revolute pair 3334, and the second revolute pair 3334 is fixedly connected to the second main body 3333 by using the second connection arm 3335. In other words, the second connection arm 3335 is configured to fixedly connect the second main body 3333 and the second revolute pair 3334.

Refer to FIG. 14. The second main body 3333 is provided with a first end part 3333-6 and a second end part 3333-7 that are disposed opposite to each other in a third direction A3. Each of the first end part 3333-6 and the second end part 3333-7 of the second main body 3333 is provided with a second connection structure 3333-4, and the second connection structure 3333-4 is provided with a third arc groove 3333-5. The third arc groove 3333-5 includes an opening 3333-8 and a bottom wall 3333-9 that are disposed opposite to each other, and the opening 3333-8 and the bottom wall 3333-9 of the third arc groove 3333-5 extend in the third direction A3.

Refer to FIG. 16. The second revolute pair 3334 includes a second arc plate 3334-1 and a second bump 3334-2 located on a concave side of the second arc plate 3334-1. An edge of the second arc plate 3334-1 fits an edge of the second bump 3334-2 to form a fourth arc groove 3334-3. It may be understood that the fourth arc groove 3334-3 is space formed between a surface that is of the second arc plate 3334-1 and that faces the second bump 3334-2, and a surface that is of the second bump 3334-2 and that faces the second arc plate 3334-1.

The second revolute pair 3334 is further provided with an open slot 3334-4, and a second pressing part 3334-5, and the open slot 3334-4 separates an end that is of the second arc plate 3334-1 and that is away from the second connection arm 3335 into two portions. The second pressing part 3334-5 of the second revolute pair 3334 may be located at an end part of the second revolute pair 3334, or may be located at another position of the second revolute pair 3334.

It should be noted that FIG. 14 is merely an example indicating that a quantity of second revolute pairs 3334 of the second support 333 is two. In another implementation, the quantity of second revolute pairs 3334 of the second support 333 may alternatively be three, four, or the like. This is not limited in this application.

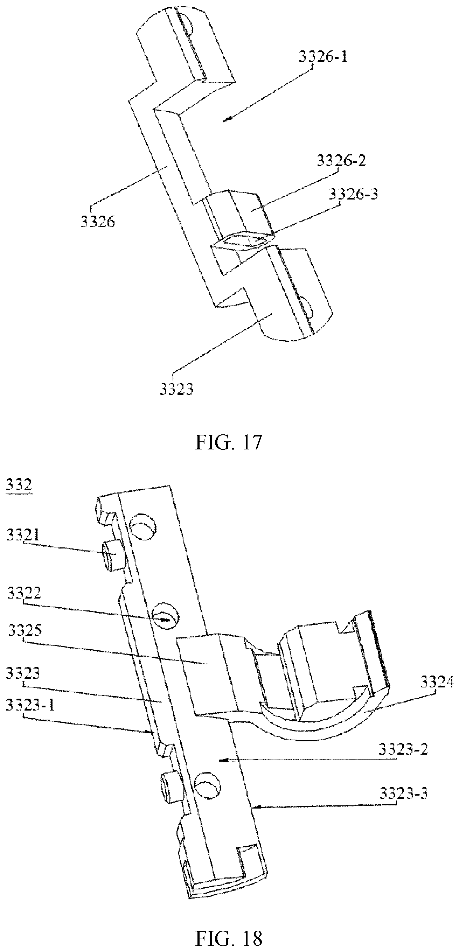

As shown in FIG. 14 and FIG. 17, FIG. 17 is a schematic diagram of a partial structure of the first support 332. A first connection part 3326 is disposed on the first main body 3323 of the first support 332, and a second connection part 3336 is disposed on the second main body 3333 of the second support 333. The first connection part 3326 on the first support 332 is used as an example. Refer to FIG. 17. The first connection part 3326 includes a sinking groove 3326-1, a protrusion 3326-2 is arranged on a groove wall of the sinking groove 3326-1, and a connection hole 3326-3 is provided on the protrusion 3326-2. The connection hole 3326-3 penetrates through two opposite sides of the protrusion 3326-2.

FIG. 18 is a schematic diagram of a structure of another first support 332 according to this embodiment. The first main body 3323 of the first support 332 includes a first surface 3323-1, a second surface 3323-2, and a third surface 3323-3. The third surface 3323-3 may be an arc surface. For example, the first connection arm 3325 connects the first revolute pair 3324 and the second surface 3323-2. A positioning post 3321 on the first support 332 is located on a side of the first main body 3323 on which the first surface 3323-1 is located, and a first fastening hole 3322 on the first support 332 penetrates through the second surface 3323-2 and the third surface 3323-3. Refer to FIG. 5 and FIG. 6 together. The positioning post 3321 passes through the positioning hole 312 of the first frame body 31 to implement preliminary positioning and mounting of the first frame body 31 and the folding mechanism 33. The first fastening hole 3322 of the first support 332 and the second fastening hole 313 of the first frame body 31 are correspondingly disposed. The fastening structure passes through the first fastening hole 3322 and the second fastening hole 313 to implement a fixed connection between the first frame body 31 and the folding mechanism 33.

For a setting of the positioning post and the fastening hole on the second support 333, refer to the first support 332. For a connection manner between the second support 333 and the second frame body 32, refer to the connection manner between the first support 332 and the first frame body 31. Details are not described herein again. It should be noted that the connection manner between the second support 333 and the second frame body 32 may be the same as or different from the connection manner between the first support 332 and the first frame body 31. For example, the first support 332 and the first frame body 31 may be fastened by using the fastening structure. The second support 333 and the second frame body 32 may be fastened by using the fastening structure, or may be fastened by bonding.

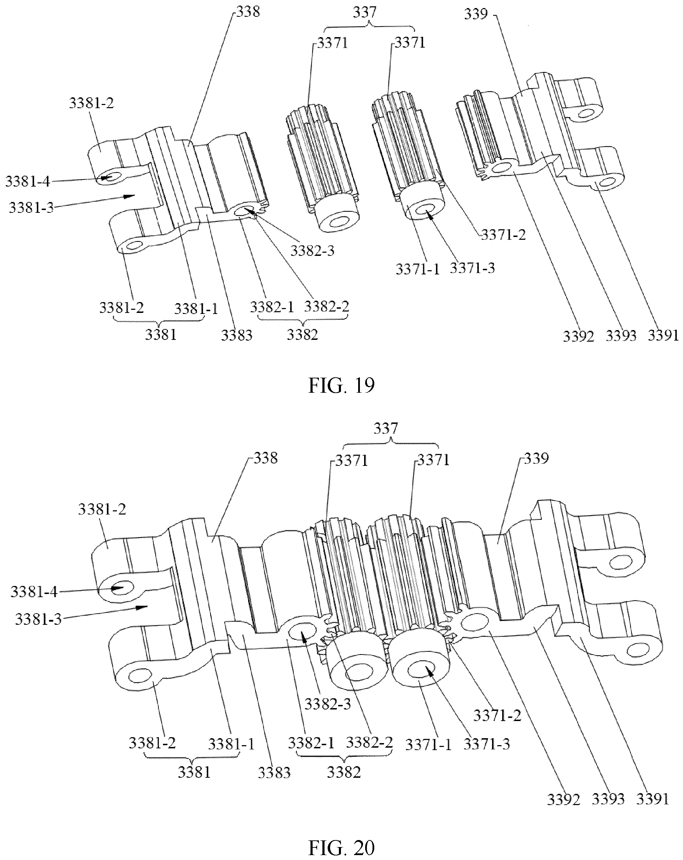

FIG. 19 is an exploded diagram of structures of the synchronization apparatus 337, the first synchronous arm 338, and the second synchronous arm 339 shown in FIG. 7. FIG. 20 is an exploded diagram of an assembled structure of the synchronization apparatus 337, the first synchronous arm 338, and the second synchronous arm 339 shown in FIG. 19. The synchronization apparatus 337, the first synchronous arm 338, and the second synchronous arm 339 work together to move the first support 332 and the second support 333 synchronously.

The synchronization apparatus 337 may include a plurality of synchronous gears 3371. The synchronous gear 3371 includes a rotating part 3371-1 and a gear part 3371-2 arranged around the rotating part 3371-1. The rotating part 3371-1 is provided with a rotating hole 3371-3, and the rotating hole 3371-3 penetrates through the rotating part 3371-1. The gear part 3371-2 is provided with a plurality of gears, and the plurality of gears protrude relative to the rotating part 3371-1.

It may be understood that there may be a plurality of synchronous gears 3371, the plurality of synchronous gears 3371 are arranged in a string, and gear parts 3371-2 of two adjacent synchronous gears 3371 are engaged with each other. The synchronous gear 3371 may be an integrally formed mechanical part, to have high structural strength.

A quantity, sizes, and the like of synchronous gears 3371 of the synchronization apparatus 337 may be designed according to a specific product form, a size, and the like. This is not strictly limited in this application. The larger quantity of synchronous gears 3371, the smaller size of the synchronous gear 3371, so that more space can be released. The smaller quantity of synchronous gears 3371, the larger size of the synchronous gear 3371, and the smaller accumulated transmission error of the synchronous gear 3371, which helps improve movement accuracy.

The first synchronous arm 338 includes a movable end 3381, a synchronization end 3382, and a connection segment 3383. The connection segment 3383 connects the movable end 3381 and the synchronization end 3382. The movable end 3381 of the first synchronous arm 338 includes a fastening part 3381-1 and extension parts 3381-2 located at two ends of the fastening part 3381-1. A groove 3381-3 is formed between two adjacent extension parts 3381-2. An end that is of the extension part 3381-2 and that is away from the fastening part 3381-1 is provided with a rotating shaft hole 3381-4, and the rotating shaft hole 3381-4 penetrates through the extension part 3381-2. The synchronization end 3382 of the first synchronous arm 338 includes a rotating part 3382-1 and a gear part 3382-2 arranged around the rotating part 3382-1. The gear part 3382-2 is provided with a plurality of gears, the rotating part 3382-1 is provided with a rotating hole 3382-3, and the rotating hole 3382-3 penetrates through the rotating part 3382-1. The first synchronous arm 338 may be an integrally formed mechanical part, to have high structural strength.

The second synchronous arm 339 includes a movable end 3391, a synchronization end 3392, and a connection segment 3393. The connection segment 3393 connects the movable end 3391 and the synchronization end 3392. For specific structures of the movable end 3391 and the synchronization end 3392 of the second synchronous arm 339, refer to structures of the movable end 3381 and the synchronization end 3382 of the first synchronous arm 338. Details are not described herein again. The second synchronous arm 339 may be an integrally formed mechanical part, to have high structural strength.

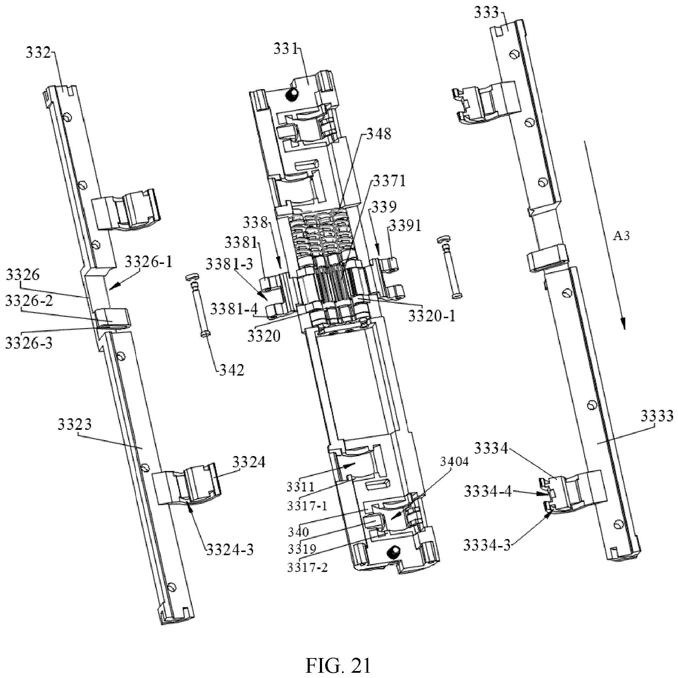

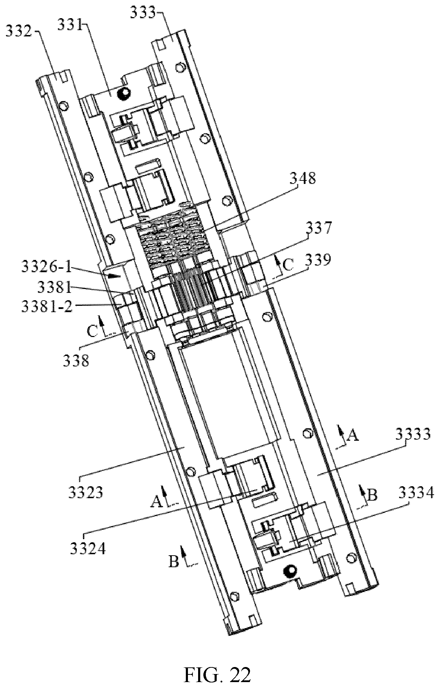

FIG. 21 is an exploded view of a partial structure of the folding mechanism 33. FIG. 22 is a schematic diagram of fitting between some structures of the folding mechanism 33. FIG. 21 and FIG. 22 show structures of fitting between the shaft base 331, the first support 332, the second support 333, the synchronization apparatus 337, the first synchronous arm 338, and the second synchronous arm 339 of the folding mechanism 33.

The first revolute pair 3324 of the first support 332 is rotatably connected to the shaft base 331. The first revolute pair 3324 of the first support 332 may be mounted in the first mounting space 3311 of the shaft base 331, and the first main body 3323 of the first support 332 may be located in outer space of the shaft base 331. The first revolute pair 3324 can rotate in the first mounting space 3311.

The second revolute pair 3334 of the second support 333 is rotatably connected to the shaft base 331. The second revolute pair 3334 of the second support 333 may be mounted on the slider 340 in the second mounting space 3312 of the shaft base 331, and the second main body 3333 of the second support 333 may be located in the outer space of the shaft base 331. The second revolute pair 3334 can rotate in the second mounting space 3312.

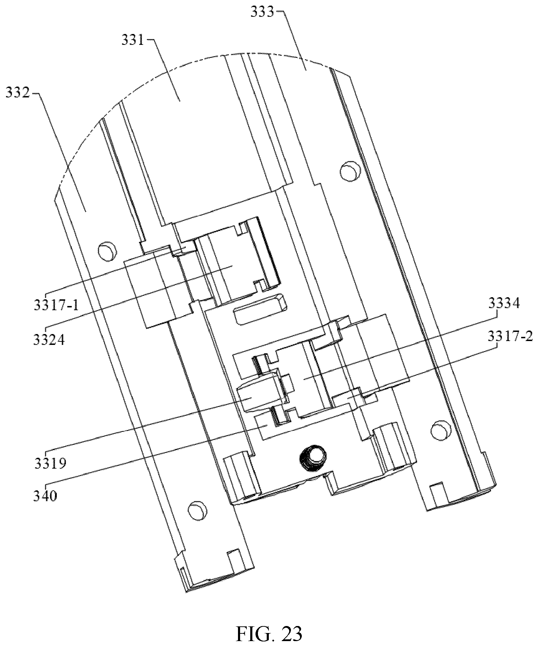

For example, refer to FIG. 21 and FIG. 23 together. FIG. 23 is a schematic diagram of a partial structure of the structure shown in FIG. 22. The first revolute pair 3324 of the first support 332 is mounted in the first mounting space 3311 of the shaft base 331, so as to be rotatably connected to the shaft base 331. Specifically, the arc strip 3317-1 of the first mounting space 3311 is located in the second arc groove 3324-3 on the first revolute pair 3324. The arc strip 3317-1 of the first mounting space 3311 fits the second arc groove 3324-3 on the first revolute pair 3324 and can move in the second arc groove 3324-3 on the first revolute pair 3324, to implement a rotatable connection between the first revolute pair 3324 and the shaft base 331. It may be understood that a radian of the arc strip 3317-1 of the first mounting space 3311 is consistent with a radian of the second arc groove 3324-3 on the first revolute pair 3324. The first revolute pair 3324 can rotate in a bending direction of the arc strip 3317-1 of the first mounting space 3311.

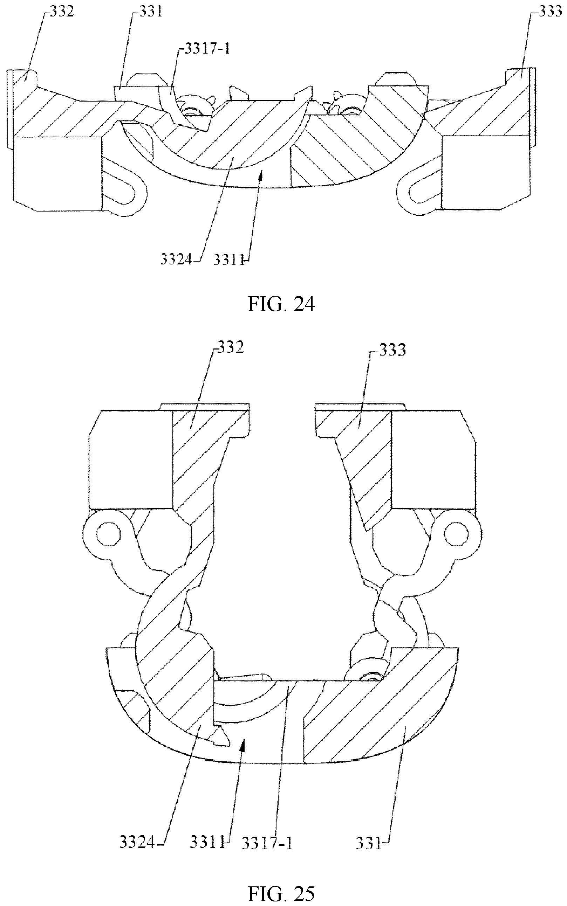

FIG. 24 is a cross-sectional view of the structure shown in FIG. 22 along A-A. FIG. 25 is a schematic diagram of the structure shown in FIG. 24 in another use state. When the structure shown in FIG. 24 is in an unfolded state, the first revolute pair 3324 rotates into the first mounting space 3311. When the structure shown in FIG. 25 is in a folded state, the first revolute pair 3324 partially rotates out of the first mounting space 3311.

In this embodiment, the second arc groove 3324-3 of the first revolute pair 3324 fits the arc strip 3317-1 of the first mounting space 3311 to form a rotatable connection structure using a virtual shaft. The first support 332 and the shaft base 331 are rotatably connected by using a virtual shaft. This can reduce design difficulty of the folding mechanism 33, has a low requirement on a size of the folding mechanism 33, and facilitates lightness and thinness of the folding mechanism 33 and the support apparatus 3. In some other embodiments, the first support 332 and the shaft base 331 may alternatively be rotatably connected by using a physical shaft. This is not strictly limited in this embodiment of this application.

For example, refer to FIG. 21 and FIG. 23 together. The slider 340 is mounted in the second mounting space 3312 of the shaft base 331. For a structure of the slider 340, and mounting of the slider 340 and the second mounting space 3312 through fitting, refer to related descriptions in FIG. 11, FIG. 12, and FIG. 13. Details are not described herein again. The second revolute pair 3334 of the second support 333 is rotatably connected to the slider 340 of the shaft base 331. The ejecting structure 3319 is configured to apply an ejecting force in the first direction A1 to the second revolute pair 3334. The second revolute pair 3334 is located in the second accommodating groove 3404, and can rotate in the second accommodating groove 3404. Specifically, the arc strip 3317-2 on the slider 340 is located in the fourth arc groove 3334-3 on the second revolute pair 3334. The arc strip 3317-2 on the slider 340 fits the fourth arc groove 3334-3 on the second revolute pair 3334 and can move in the fourth arc groove 3334-3 on the second revolute pair 3334. The ejecting structure 3319 on the shaft base 331 fits the open slot 3334-4 on the second revolute pair 3334. It may be understood that, a radian of the arc strip 3317-2 on the slider 340 is consistent with a radian of the fourth arc groove 3334-3, and the second revolute pair 3334 can rotate in a bending direction of the arc strip 3317-2 on the slider 340, so that the second revolute pair 3334 is rotatably connected to the slider 340.

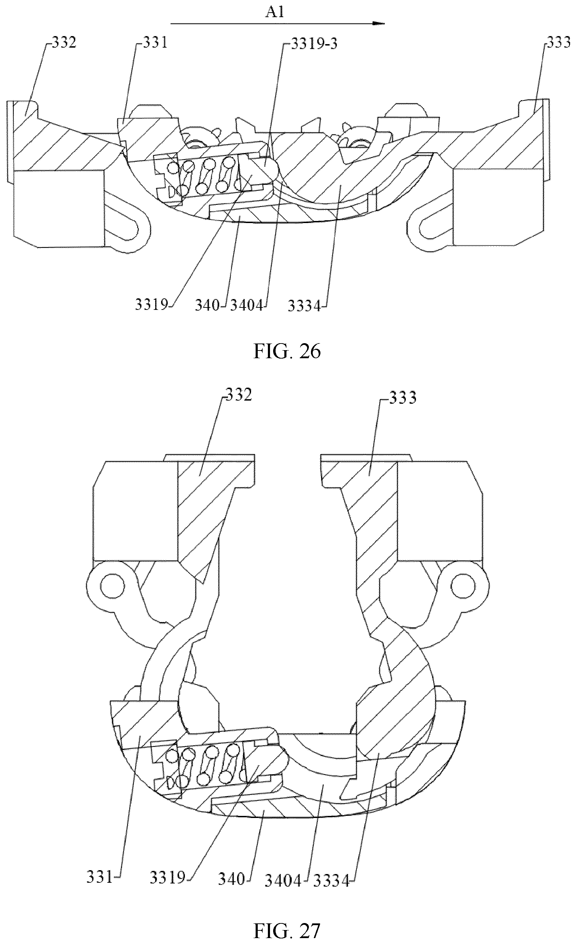

FIG. 26 is a cross-sectional view of the structure shown in FIG. 22 along B-B. FIG. 27 is a schematic diagram of the structure shown in FIG. 26 in another use state. When the structure shown in FIG. 26 is in an unfolded state, the second revolute pair 3334 rotates into the second accommodating groove 3404 of the slider 340. When the structure shown in FIG. 27 is in a folded state, the second revolute pair 3334 partially rotates out of the second accommodating groove 3404 of the slider 340.

Refer to FIG. 26. In this embodiment, when the folding mechanism 33 is in the unfolded state, the second support 333 is rotatably connected to the slider 340, the slider 340 is slidably connected to the shaft base 331, and the slider 340 may slide in a first direction A1 relative to the shaft base 331. In other words, the second support 333 may slide in the first direction A1 relative to the shaft base 331. In this way, when the folding mechanism 33 is in the unfolded state, the ejecting structure 3319 ejects the second revolute pair 3334, specifically, the ejector pin 3319-3 of the ejecting structure 3319 presses against the second revolute pair 3334, so that in the first direction A1, the second support 333 and the slider 340 simultaneously slide in a direction away from the shaft base 331.

In this embodiment, the second revolute pair 3334 fits the arc strip 3317-2 of the slider 340 to form a rotatable connection structure using a virtual shaft. The second support 333 and the shaft base 331 are rotatably connected by using a virtual shaft. This can reduce design difficulty of the folding mechanism 33, has a low requirement on a size of the folding mechanism 33, and facilitates lightness and thinness of the folding mechanism 33 and the support apparatus 3. In some other embodiments, the second support 333 and the shaft base 331 may alternatively be rotatably connected by using a physical shaft. This is not strictly limited in this embodiment of this application.

In this embodiment, there is a small quantity of moving mechanism parts between the first support 332 and the shaft base 331 and between the second support 333 and the shaft base 331, and the parts have a simple fitting relationship, a short dimensional chain, a small accumulated transmission error, and high control precision.

It should be noted that a structure of the first revolute pair 3324 of the first support 332 and a structure of the second revolute pair 3334 of the second support 333 may be the same. For example, the second revolute pair 3334 of the second support 333 may adopt a structure that is the same as that of the first revolute pair 3324, and that is not provided with an open slot 3334-4, and correspondingly, a structure of the second mounting space 3312 is the same as that of the first mounting space 3311. Alternatively, the first revolute pair 3324 of the first support 332 may adopt a structure that is the same as that of the second revolute pair 3334, and that is provided with an open slot 3334-4, and correspondingly, a structure of the first mounting space 3311 is the same as that of the second mounting space 3312. Alternatively, a structure of the first revolute pair 3324 of the first support 332 and a structure of the second revolute pair 3334 of the second support 333 may be different from that as shown in FIG. 14. This is not limited in this application.

It may be understood that the first support 332 may be of a segmented structure. For example, the first support 332 may be of a two-segment structure. In other words, the first support 332 includes a first portion and a second portion that are split. At least one first revolute pair 3324 is disposed on the first portion, and at least one first revolute pair 3324 is disposed on the second portion. In another implementation, the first support 332 may alternatively be of a three-segment structure, that is, the first support 332 includes a first portion, a second portion, and a third portion that are split. At least one first revolute pair 3324 is disposed on the first portion, at least one first revolute pair 3324 is disposed on the second portion, and at least one first revolute pair 3324 is disposed on the third portion. The first support 332 may alternatively be of a four-segment structure, a five-segment structure, or the like. This is not limited in this application. Similarly, the second support 333 may also be of a segmented structure.

When the first support 332 and the second support 333 are of a segmented structure, the first support 332 of each portion is rotatably connected to the shaft base 331 separately, and is fixedly connected to the first frame body 31 separately, and the second support 333 of each portion is rotatably connected to the shaft base 331 separately, and is fixedly connected to the second frame body 32 separately.

Refer to FIG. 20, FIG. 21, and FIG. 22 together. The synchronization apparatus 337 is rotatably connected to the shaft base 331, the movable end 3381 of the first synchronous arm 338 is slidably connected to the first support 332, and the movable end 3381 of the first synchronous arm 338 is further rotatably connected to the first support 332. The synchronization end 3382 of the first synchronous arm 338 is rotatably connected to the shaft base 331, and the synchronization end 3382 of the first synchronous arm 338 is engaged with the synchronization apparatus 337. The movable end 3391 of the second synchronous arm 339 is slidably connected to the second support 333, and the movable end 3391 of the second synchronous arm 339 is further rotatably connected to the second support 333. The synchronization end 3392 of the second synchronous arm 339 is rotatably connected to the shaft base 331, and the synchronization end 3392 of the second synchronous arm 339 is engaged with the synchronization apparatus 337. It may be understood that the first synchronous arm 338 and the second synchronous arm 339 are connected by using the synchronous gear 3371 rotatably connected to the shaft base 331, to implement synchronous rotation of the first support 332 and the second support 333.

Refer to FIG. 9, FIG. 20, and FIG. 21 together. For example, a quantity of synchronous gears 3371 of the synchronization apparatus 337 is two, and two rotating shafts 3320 in the middle of the shaft base 331 respectively pass through rotating holes 3371-3 of the two synchronous gears 3371, to implement a rotatable connection between synchronous gear 3371 and the shaft base 331. A plurality of gears of the gear part 3371-2 of two adjacent synchronous gears 3371 are engaged with each other.

The rotating shaft 3320 on an edge of the shaft base 331 passes through the rotating hole 3382-3 of the rotating part 3382-1 of the first synchronous arm 338, to implement a rotatable connection between the first synchronous arm 338 and the shaft base 331. A plurality of gears of the gear part 3382-2 of the synchronization end 3382 of the first synchronous arm 338 are engaged with a plurality of gears of the adjacent synchronous gear 3371.

For a rotatable connection between the synchronization end 3392 of the second synchronous arm 339 and the rotating shaft 3320 of the shaft base 331, and a connection in which the plurality of gears of the synchronization end 3392 of the second synchronous arm 339 are engaged with the plurality of gears of the adjacent synchronous gear 3371, refer to the connection between the first synchronous arm 338 and the shaft base 331. Details are not described herein again.

Refer to FIG. 20 and FIG. 21 together. A limiting block 3320-1 is disposed on the rotating shaft 3320, and in a third direction A3, the limiting block 3320-1 limits the synchronization end 3382 of the first synchronous arm 338, the synchronous gear 3371, and the synchronization end 3392 of the second synchronous arm 339, to prevent the first synchronous arm 338, the synchronous gear 3371, and the second synchronous arm 339 from sliding in the third direction A3. In this way, a fitting relationship between the synchronization end 3382 of the first synchronous arm 338, the synchronous gear 3371, the synchronization end 3392 of the second synchronous arm 339, and the shaft base 331 is more stable, so as to enhance reliability of the folding mechanism 33.

Refer to FIG. 20, FIG. 21, and FIG. 22 together. The movable end 3381 of the first synchronous arm 338 is slidably and rotatably connected to the first support 332. The extension part 3381-2 of the movable end 3381 of the first synchronous arm 338 is mounted in the sinking groove 3326-1, and can slide in the sinking groove 3326-1. The extension part 3381-2 further can rotate in the sinking groove 3326-1. Specifically, the sinking groove 3326-1 of the first connection part 3326 of the first support 332 fits the movable end 3381 of the first synchronous arm 338. At least a portion of the protrusion 3326-2 of the first connection part 3326 is located in the groove 3381-3 of the movable end 3381 of the first synchronous arm 338, so that the connection hole 3326-3 in the protrusion 3326-2 corresponds to the rotating shaft hole 3381-4 of the movable end 3381 of the first synchronous arm 338. A fitting part 342 of the folding mechanism 33 sequentially passes through the rotating shaft hole 3381-4, the connection hole 3326-3, and the rotating shaft hole 3381-4, and the first synchronous arm 338 can rotate and slide relative to the first support 332, so that the first synchronous arm 338 is rotatably and slidably connected to the first support 332.

For a connection manner between the second synchronous arm 339 and the second support 333, refer to the connection manner between the first synchronous arm 338 and the first support 332. Details are not described herein again. The second synchronous arm 339 can rotate and slide relative to the second support 333, so that the second synchronous arm 339 is rotatably and slidably connected to the second support 333.

It should be noted that the elastic part 348 on the shaft base 331 can provide a damping force for opening and closing. In this way, in a process in which the first synchronous arm 338 drives the first support 332, and the second synchronous arm 339 drives the second support 333 to rotate synchronously, the damping force for opening and closing provided by the elastic part 348 on the shaft base 331 may slightly reduce a folding or unfolding speed of the folding mechanism 33. This can improve folding or unfolding stability of the folding mechanism 33 through fitting between the elastic part 348 and another driving structure, so that user experience is improved.

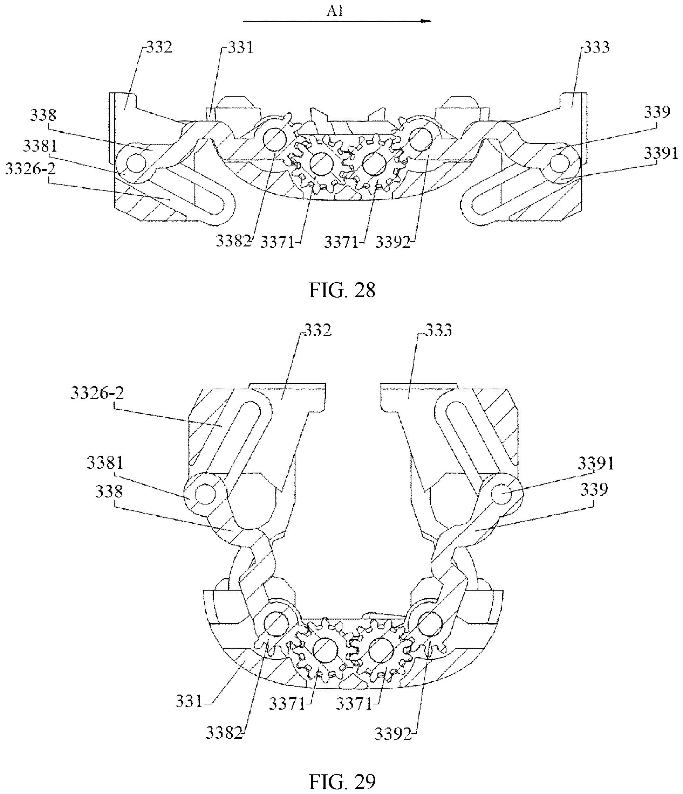

FIG. 28 is a cross-sectional view of the structure shown in FIG. 22 along C-C. FIG. 29 is a schematic diagram of the structure shown in FIG. 28 in another use state. In a process of switching between the unfolded state and the folded state, the first synchronous arm 338 rotates relative to the shaft base 331, and the first synchronous arm 338 slides relative to the first support 332 and rotates relative to the first support 332. The second synchronous arm 339 rotates relative to the shaft base 331, and the second synchronous arm 339 can slide relative to the second support and rotate relative to the second support 333.

In this embodiment, the synchronization end 3382 of the first synchronous arm 338 and the synchronization end 3392 of the second synchronous arm 339 are connected by using the plurality of synchronous gears 3371, so that the synchronization end 3382 of the first synchronous arm 338 and the synchronization end 3392 of the second synchronous arm 339 have same rotation angles and opposite directions. In this way, rotation actions of the first synchronous arm 338 and the second synchronous arm 339 relative to the shaft base 331 are kept synchronous.

The movable end 3381 of the first synchronous arm 338 is rotatably and slidably connected to the first support 332, and the movable end 3391 of the second synchronous arm 339 is rotatably and slidably connected to the second support 333. Therefore, in a process in which the first support 332 and the second support 333 rotate relative to the shaft base 331, the first synchronous arm 338 affects a rotation angle of the first support 332, and the second synchronous arm 339 affects a rotation angle of the second support 333. In this way, in a process in which the first synchronous arm 338 and the second synchronous arm 339 rotate synchronously relative to the shaft base 331, the first support 332 and the second support 333 are driven to rotate synchronously relative to the shaft base 331.

Refer to FIG. 28 and FIG. 29 together. In this embodiment, the synchronization end 3382 of the first synchronous arm 338, the two synchronous gears 3371, and the synchronization end 3392 of the second synchronous arm 339 are arranged in an arc shape. Specifically, a rotation center of the synchronization end 3382 of the first synchronous arm 338, rotation centers of the two synchronous gears 3371, and a rotation center of the synchronization end 3392 of the second synchronous arm 339 are arranged in an arc shape. Compared with arranging the rotation center of the synchronization end 3382 of the first synchronous arm 338, the rotation centers of the plurality of synchronous gears 3371, and the rotation center of the synchronization end 3392 of the second synchronous arm 339 in a straight line, arranging the rotation center of the synchronization end 3382 of the first synchronous arm 338, the rotation centers of the plurality of synchronous gears 3371, and the rotation center of the synchronization end 3392 of the second synchronous arm 339 in the arc shape can sufficiently utilize internal space of the shaft base 331, reduce a dimension of the shaft base 331 in the first direction A1, and release more internal space of the shaft base 331 to accommodate a flexible display. This helps improve compactness of mechanical part arrangement of the electronic device 100, reduce a size of the electronic device 100, and facilitate miniaturization and thinness of the electronic device 100.

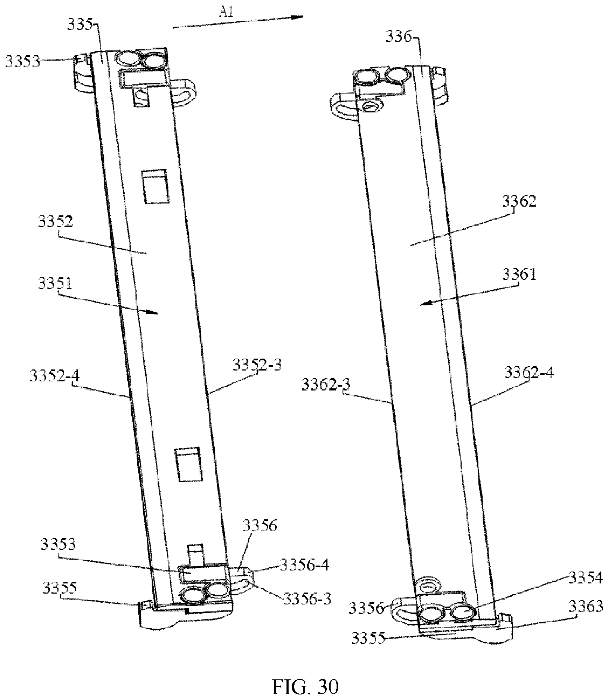

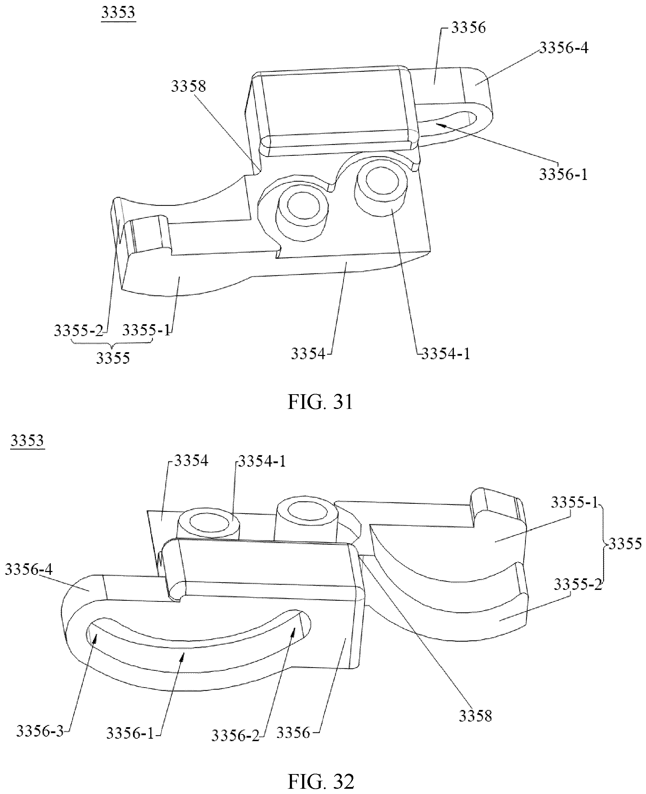

FIG. 30 is a schematic diagram of structures of the first support plate 335 and the second support plate 336 shown in FIG. 7. FIG. 31 is a schematic diagram of a structure of a first kinematic pair 3353 of the first support plate 335 shown in FIG. 30. FIG. 32 is a schematic diagram of a structure of the first kinematic pair 3353 shown in FIG. 31 from another angle of view, where FIG. 32 is a schematic diagram of a structure obtained after the first kinematic pair 3353 shown in FIG. 31 is flipped by 180 degrees. The first support plate 335 includes a first main plate 3352 and a first kinematic pair 3353. The first kinematic pair 3353 is fixedly connected to the first main plate 3352. The first kinematic pair 3353 may be of an integrated structure, to have high structural strength. The support surface 3351 of the first support plate 335 is formed on the first main plate 3352. The first plate edge 3352-3 and the second plate edge 3352-4 of the first main plate 3352 of the first support plate 335 are arranged in the first direction A1.

The first kinematic pair 3353 includes a fastening structure 3354, a rotating structure 3355, and a sliding structure 3356. The rotating structure 3355 and the sliding structure 3356 are respectively located at two side ends adjacent to the fastening structure 3354. The rotating structure 3355 and the sliding structure 3356 may be of an integrated structure. The first kinematic pair 3353 is located on a side that is of the first support plate 335 and that faces the first support 332, that is, the rotating structure 3355 and the sliding structure 3356 are located on a side that is of the first support plate 335 and that faces the first support 332. A joint 3358 is disposed between the rotating structure 3355 and the sliding structure 3356 of the first kinematic pair 3353, and the rotating structure 3355 of the first kinematic pair 3353 extends from the joint 3358 to the second plate edge 3352-4. The sliding structure 3356 of the first kinematic pair 3353 extends from the joint 3358 to the first plate edge 3352-3.

A protrusion 3354-1 is disposed on the fastening structure 3354, and the protrusion 3354-1 may be a hollow column-shaped structure. The rotating structure 3355 is provided with a fitting part 3355-1 and an arc strip 3355-2, and the arc strip 3355-2 is of an arc strip-shaped structure. The sliding structure 3356 includes a sliding slot 3356-1 and a first pressing part 3356-4. The first pressing part 3356-4 extends out of the first plate edge 3352-3, and the first pressing part 3356-4 of the sliding structure 3356 may be a portion of a structure that forms the sliding slot 3356-1. The sliding slot 3356-1 includes a first sliding end 3356-2 and a second sliding end 3356-3. The first sliding end 3356-2 is adjacent to the joint 3358, and the second sliding end 3356-3 is adjacent to or extends out of the first plate edge 3352-3. The sliding slot 3356-1 may be a curve sliding slot, or may be a straight sliding slot.

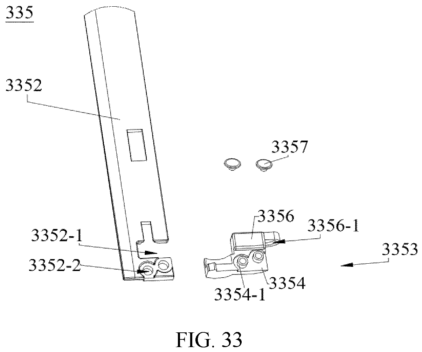

FIG. 33 is a schematic diagram of a structure of fitting between the first kinematic pair 3353 and the first main plate 3352. The first main plate 3352 is provided with a concave groove 3352-1 and a fitting hole 3352-2. In a process in which the first kinematic pair 3353 is mounted on the first main plate 3352 to form the first support plate 335, the sliding structure 3356 is located in the concave groove 3352-1, and the protrusion 3354-1 on the fastening structure 3354 passes through the fitting hole 3352-2. A fastening element 3357 is in interference fit with the hollow protrusion 3354-1 to mount the first kinematic pair 3353 on the first support plate 335.

Refer to FIG. 30. The second support plate 336 includes a second main plate 3362 and a second kinematic pair 3363. The second kinematic pair 3363 is fixedly connected to the second main plate 3362, and the second kinematic pair 3363 may be of an integrated structure. A support surface 3361 of the second support plate 336 is formed on the second main plate 3362. The second main plate 3362 of the second support plate 336 includes a first plate edge 3362-3 and a second plate edge 3362-4 that are disposed opposite to each other. The first plate edge 3362-3 of the second main plate 3362 and the second plate edge 3362-4 of the second main plate 3362 are arranged in the first direction A1. The second kinematic pair 3363 also includes a fastening structure 3354, a rotating structure 3355, and a sliding structure 3356. For specific structures and connection relationships of the second main plate 3362 and the second kinematic pair 3363, refer to the first main plate 3352 and the first kinematic pair 3353. Details are not described herein again. The first kinematic pairs 3353 may be fastened to two ends of the first main plate 3352. Similarly, the second kinematic pairs 3363 may also be fastened to two ends of the second main plate 3362. Specific structures of the first support plate 335 and the second support plate 336 are not strictly limited in this embodiment of this application.

In another implementation, the first support plate 335 may be of an integrally formed mechanical part, that is, the first main plate 3352 and the first kinematic pair 3353 are of an integral structure. In this way, the first support plate 335 has high structural strength. In addition, mounting of the first kinematic pair 3353 and the first main plate 3352 is avoided, and an assembly process is simplified. The second support plate 336 may be also of an integrally formed mechanical part, that is, the second main plate 3362 and the second kinematic pair 3363 are of an integral structure. In this way, the second support plate 336 has high structural strength. In addition, mounting of the second kinematic pair 3363 and the second main plate 3362 is avoided, and an assembly process is simplified.

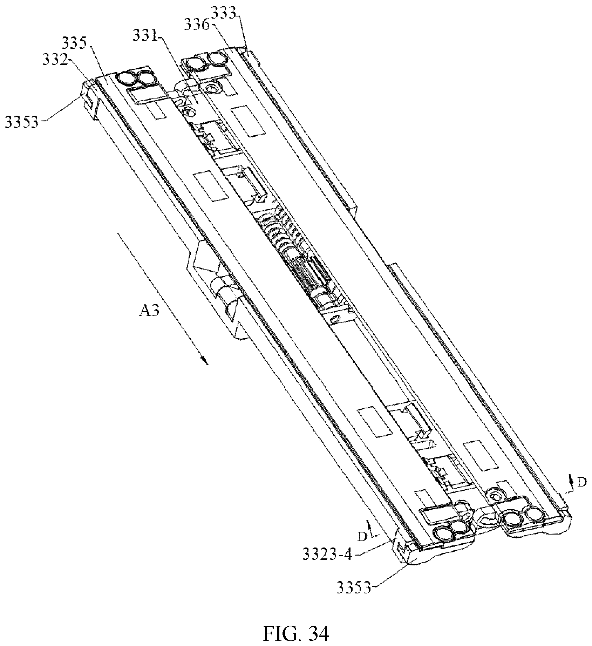

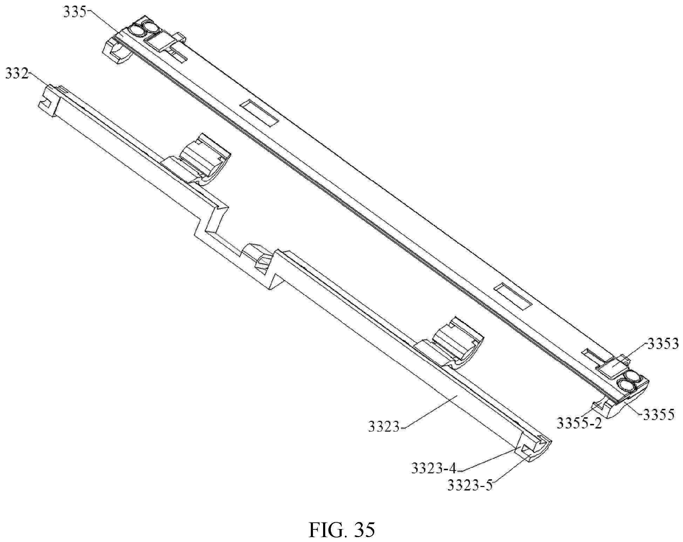

FIG. 34 is a schematic diagram of a partial structure of the folding mechanism 33. FIG. 35 is a schematic diagram of a structure of fitting between the first support 332 and the first support plate 335. FIG. 34 shows a structure of fitting between the shaft base 331, the first support 332, the second support 333, the first support plate 335, and the second support plate 336 of the folding mechanism 33.

The first support plate 335 is mounted on the first support 332, so as to be rotatably connected to the first support 332. In a process in which the first support plate 335 is mounted on the first support 332, the rotating structure 3355 of the first kinematic pair 3353 is rotatably connected to the first connection structure 3323-4 of the first main body 3323. Specifically, the arc strip 3355-2 of the rotating structure 3355 of the first kinematic pair 3353 fits the first arc groove 3323-5 of the first connection structure 3323-4 of the first main body 3323. It may be understood that: A radian of the arc strip 3355-2 of the rotating structure 3355 is consistent with a radian of the first arc groove 3323-5, and the arc strip 3355-2 of the rotating structure 3355 can move in the first arc groove 3323-5, to implement a rotatable connection between the first support plate 335 and the first support 332.

It should be noted that a connection manner between the first support plate 335 and the first support 332 is not limited to a manner in which the arc strip 3355-2 fits the first arc groove 3323-5, provided that the rotatable connection between the first support plate 335 and the first support 332 can be implemented.

In this embodiment, the first kinematic pair 3353 of the first support plate 335 fits the first arc groove 3323-5 of the first support 332 to form a rotatable connection structure using a virtual shaft. The first support plate 335 and the first support 332 are rotatably connected by using a virtual shaft. This can reduce design difficulty of the folding mechanism 33, has a low requirement on a size of the folding mechanism 33, and facilitates lightness and thinness of the folding mechanism 33 and the support apparatus 3. In some other embodiments, the first support plate 335 and the first support 332 may alternatively be rotatably connected by using a physical shaft. This is not strictly limited in this embodiment of this application.

The second support plate 336 is mounted on the second support 333, so as to be rotatably connected to the second support 333, and a rotating structure of the second support plate 336 is rotatably connected to the second main body 3333 of the second support 333. For a specific connection manner between the second support plate 336 and the second support 333, refer to the connection manner between the first support plate 335 and the first support 332. Details are not described herein again.

Refer to FIG. 22 and FIG. 34 together. A dimension of the shaft base 331 in the third direction A3 is less than a dimension of the first support plate 335 in the third direction A3, and the first kinematic pair 3353 and the shaft base 331 are disposed side by side in the third direction A3. In other words, in the third direction A3, the first kinematic pairs 3353 are located at two ends of the shaft base 331. In this way, space for accommodating the first kinematic pair 3353 does not need to be separately reserved in the shaft base 331. This can reduce a size of the shaft base 331, and facilitates miniaturization and thinness of the shaft base 331 and the electronic device 100.

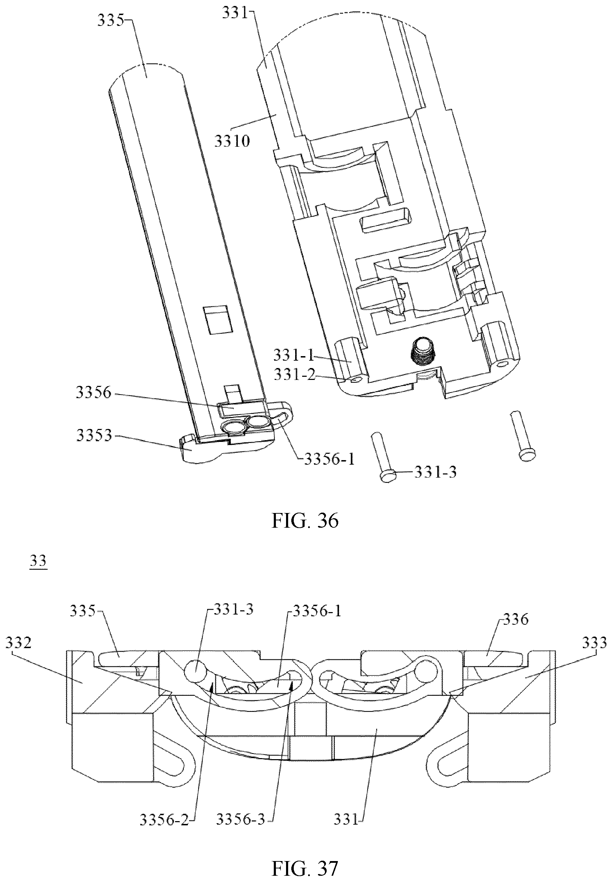

Refer to FIG. 32 and FIG. 36 together. FIG. 36 is a schematic diagram of a partial structure of the folding mechanism 33 shown in FIG. 7. Specifically, FIG. 36 is a schematic diagram of a structure of fitting between the first support plate 335 and the shaft base 331.

The first support plate 335 is mounted on the shaft base 331, so as to be slidably connected to the shaft base 331. The sliding structure 3356 of the first support plate 335 is slidably connected to the shaft base 331. The shaft base 331 is provided with a sliding pin 331-3. In a processor in which the first support plate 335 is mounted on the shaft base 331, the sliding slot 3356-1 of the sliding structure 3356 of the first support plate 335 corresponds to the rotatable connection hole 331-2 on the connection bump 331-1 of the shaft base 331. The sliding pin 331-3 passes through the sliding slot 3356-1 and the rotatable connection hole 331-2, and fixedly fits the rotatable connection hole 331-2, and the sliding pin 331-3 can slide relative to the sliding structure 3356 in the sliding slot 3356-1, so that the first support plate 335 is slidably connected to the shaft base 331.

The sliding structure of the second support plate 336 is slidably connected to the shaft base 331. For a specific connection manner between the second support plate 336 and the shaft base 331, refer to the connection manner between the first support plate 335 and the shaft base 331. Details are not described herein again.

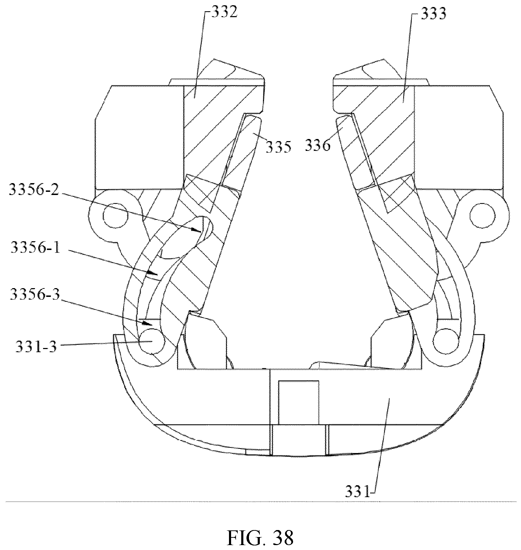

FIG. 37 is a cross-sectional view of the structure shown in FIG. 34 along D-D. FIG. 38 is a schematic diagram of the structure shown in FIG. 37 in another use state. As shown in FIG. 37, the first support plate 335 is used as an example. When the folding mechanism 33 is in an unfolded state, the sliding pin 331-3 is located at the first sliding end 3356-2 of the sliding slot 3356-1 of the first support plate 335. As shown in FIG. 38, when the folding mechanism 33 is in a folded state, the sliding pin 331-3 is located at the second sliding end 3356-3 of the sliding slot 3356-1 of the first support plate 335. When the folding mechanism 33 moves from the unfolded state shown in FIG. 37 to the folded state shown in FIG. 38, or when the folding mechanism 33 moves from the folded state shown in FIG. 38 to the unfolded state shown in FIG. 37, a movement track of the first support plate 335 is jointly defined by the first support 332 and the sliding slot 3356-1, and the first support plate 335 has a determined movement track. For the movement of the second support plate 336, refer to the first support plate 335. Details are not described herein again.

The sliding slot 3356-1 may be a curve sliding slot, or may be a straight sliding slot. When the sliding slot 3356-1 is the straight sliding slot, the first support plate 335 slides at a high speed relative to the shaft base 331, so that the folding mechanism 33 can be quickly folded or unfolded. When the sliding slot 3356-1 is the curved sliding slot, a folding or unfolding speed of the folding mechanism 33 is low. This can improve folding or unfolding stability of the folding mechanism 33 through fitting between the sliding slot and another driving structure, so that user experience is improved.

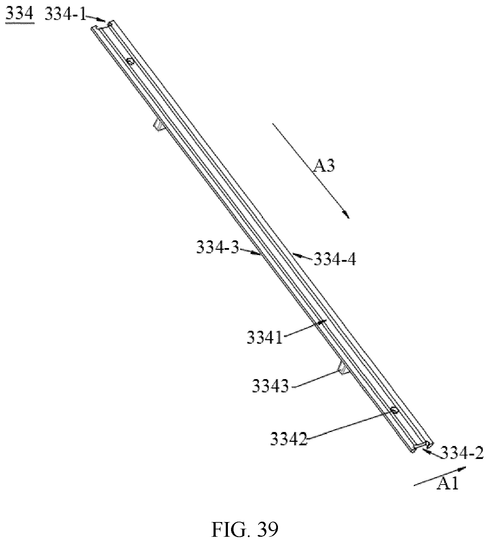

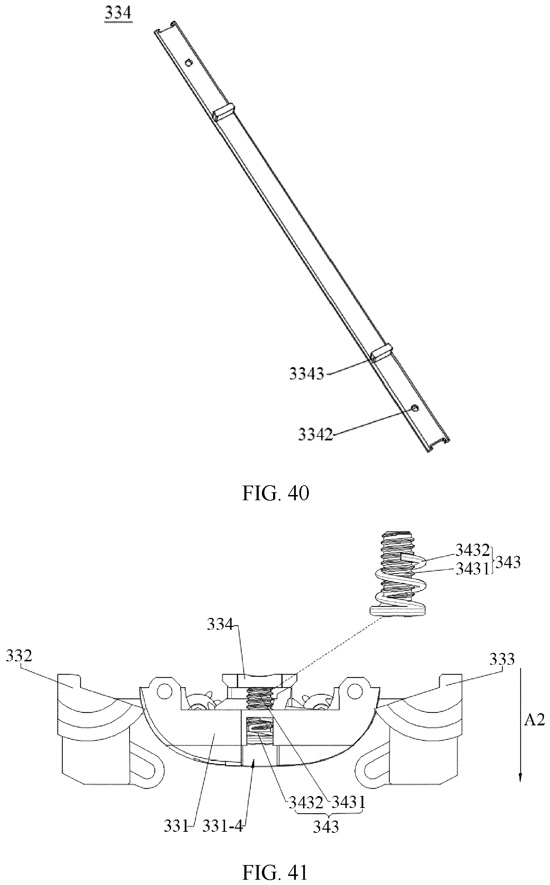

FIG. 39 is a schematic diagram of a structure of the door plate 334 shown in FIG. 7. FIG. 40 is a schematic diagram of a structure of the door plate 334 shown in FIG. 39 from another angle of view. The door plate 334 includes a first side end 334-1 and a second side end 334-2 that are disposed opposite to each other in a third direction A3, and a third side end 334-3 and a fourth side end 334-4 that are disposed opposite to each other in a first direction A1. A fastening hole 3342 and a positioning protrusion 3343 are disposed on the door plate 334. A support surface 3341 of the door plate 334 is configured to carry a flexible display, and the positioning protrusion 3343 is located on a surface that is of the door plate 334 and that is back to the support surface 3341.

The door plate 334 fits the shaft base 331 by using an elastic connection structure. A specific structure of the elastic connection structure includes but is not limited to the following two solutions. Details are shown below.

Solution 1: Refer to FIG. 40 and FIG. 41 together. FIG. 41 is a schematic diagram of a partial structure of the folding mechanism 33 shown in FIG. 7. Specifically, FIG. 41 shows a structure of fitting between the shaft base 331, the first support 332, the second support 333, and the door plate 334. The folding mechanism 33 includes a first elastic connection structure 343, and the door plate 334 is elastically connected to the shaft base 331 by using the first elastic connection structure 343. In a folding process of the folding mechanism 33, the first elastic connection structure 343 drives the door plate 334 to move towards the shaft base 331 in a second direction A2. The first elastic connection structure 343 includes a fastening element 3431 and an elastic part 3432. The fastening element 3431 is fixedly connected to the door plate 334, the elastic part 3432 of the first elastic connection structure 343 is sleeved on the fastening element 3431 of the first elastic connection structure 343, and is elastically connected between the fastening element 3431 and the shaft base 331. That is, one end of the elastic part 3432 of the first elastic connection structure 343 presses against the fastening element 3431, and the other end of the elastic part 3432 of the first elastic connection structure 343 presses against the shaft base 331. An elastic force of the elastic part 3432 can drive the door plate 334 to move towards the shaft base 331. The shaft base 331 is provided with a communication hole 331-4 and a positioning slot 331-5 (refer to FIG. 13). In a process in which the door plate 334 is mounted on the shaft base 331, a support surface 3341 of the door plate 334 is away from the shaft base 331, and a positioning protrusion 3343 on the door plate 334 is mounted in the positioning slot 331-5 on the shaft base 331, to implement positioning between the door plate 334 and the shaft base 331. After preliminary positioning is implemented, the door plate 334 and the shaft base 331 are connected by using the first elastic connection structure 343. That is, the fastening element 3431 of the first elastic connection structure 343 is inserted into the communication hole 331-4 of the shaft base 331 and the fastening hole 3342 of the door plate 334, the elastic part 3432 of the first elastic connection structure 343 is located in the communication hole 331-4 of the shaft base 331.

The elastic part 3432 of the first elastic connection structure 343 has an elastic deformation capability. The elastic part 3432 of the first elastic connection structure 343 may be a spring or the like, and the elastic part 3432 of the first elastic connection structure 343 is in a compressed state. When the door plate 334 moves in a direction away from the shaft base 331, the elastic part 3432 of the first elastic connection structure 343 is continuously compressed. When the door plate 334 moves in a direction close to the shaft base 331, the elastic part 3432 of the first elastic connection structure 343 applies a force towards the shaft base 331 to the door plate 334, so that the door plate 334 quickly moves towards the shaft base 331, to quickly fold the folding mechanism 33, and provide good use experience for a user.

In this embodiment, the fastening element 3431 and the elastic part 3432 of the first elastic connection structure 343 mutually fit to implement a liftable connection between the door plate 334 and the shaft base 331. The first elastic connection structure 343 is simple in structure and convenient to operate, and has high control precision on liftable movement of the door plate 334.

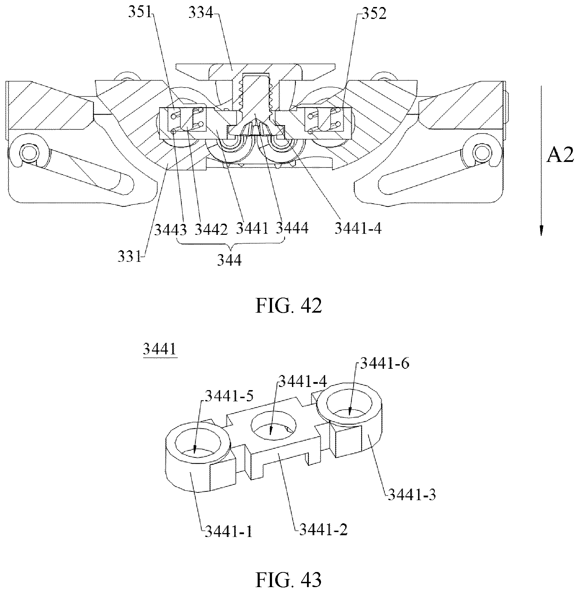

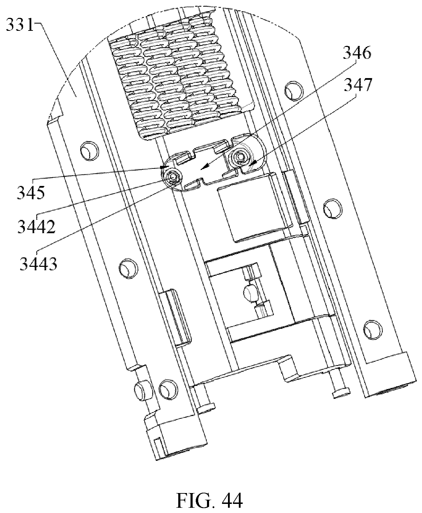

Second solution: FIG. 42 is another schematic diagram of a structure of fitting between the door plate 334 and the shaft base 331 according to an embodiment of this application. FIG. 43 is a schematic diagram of a structure of a guide block. FIG. 44 is a schematic diagram of a structure of another shaft base 331 according to an embodiment of this application. FIG. 44 is a structural diagram of a side that is of the shaft base 331 and that is away from the door plate 334 from a view angle. In this implementation, the folding mechanism 33 includes a second elastic connection structure 344, and the door plate 334 is elastically connected to the shaft base 331 by using the second elastic connection structure 344. In a folding process of the folding mechanism 33, the second elastic connection structure 344 drives the door plate 334 to move towards the shaft base 331 in a second direction A2. The second elastic connection structure 344 includes a guide block 3441, a stud 3442, an elastic part 3443, and a fastening element 3444. The guide block 3441 includes a first bearing part 3441-1, a mounting part 3441-2, and a second bearing part 3441-3, and the first bearing part 3441-1 and the second bearing part 3441-3 are distributed on two opposite sides of the mounting part 3441-2. The mounting part 3441-2 is provided with a locking hole 3441-4, the locking hole 3441-4 penetrates through the mounting part 3441-2, the first bearing part 3441-1 is provided with a first bearing groove 3441-5, and the second bearing part 3441-3 is provided with a second bearing groove 3441-6.

The shaft base 331 includes a first guide groove 345, a guide hole 346, and a second guide groove 347. The guide hole 346 passes through the shaft base 331, the first guide groove 345 and the second guide groove 347 are located on a side that is of the shaft base 331 and that is away from the door plate 334, and the first guide groove 345 and the second guide groove 347 are located at two opposite ends of the guide hole 346. The first guide groove 345 communicates with the guide hole 346, and the second guide groove 347 communicates with the guide hole 346. The stud 3442 is fastened to the shaft base 331, and the elastic part 3443 of the second elastic connection structure 344 is sleeved outside the stud 3442.

In a process in which the door plate 334 is mounted on the shaft base 331, the guide block 3441 is located on the side that is of the shaft base 331 and that is away from the door plate 334, the first bearing part 3441-1 of the guide block 3441 is located in the first guide groove 345 and forms a first accommodating part 351 with the shaft base 331, the mounting part 3441-2 of the guide block 3441 is located in the guide hole 346 and is fixedly connected to the door plate 334, and the second bearing part 3441-3 of the guide block 3441 is located in the second guide groove 347 and forms a second accommodating part 352 with the shaft base 331. One stud 3442 and the elastic part 3443 are located in the first accommodating part 351, and the other stud 3442 and the elastic part 3443 are located in the second accommodating part 352. That is, the elastic part 3443 of the second elastic connection structure 344 elastically presses against the shaft base 331 and the guide block 3441. The guide block 3441 is fixedly connected to the door plate 334 by using the fastening element 3444. Specifically, the fastening element 3444 is connected to the door plate 334 through the locking hole 3441-4 of the mounting part 3441-2.

It can be understood that the first accommodating part 351 is a structure jointly formed by the first bearing groove 3441-5 of the first bearing part 3441-1 of the guide block 3411 and the shaft base 331. The second accommodating part 352 is a structure jointly formed by the second bearing groove 3441-6 of the second bearing part 3441-3 of the guide block 3411 and the shaft base 331.

The elastic part 3443 of the second elastic connection structure 344 has an elastic deformation capability. The elastic part 3443 of the second elastic connection structure 344 may be a spring or the like, and the elastic part 3443 of the second elastic connection structure 344 is in a compressed state. When the door plate 334 moves in a direction away from the shaft base 331, the elastic part 3443 of the second elastic connection structure 344 is continuously compressed. When the door plate 334 moves in a direction close to the shaft base 331, the elastic part 3443 of the second elastic connection structure 344 applies a force towards the shaft base 331 to the guide block 3441. Because the guide block 3441 is fixedly connected to the door plate 334, the elastic part 3443 of the second elastic connection structure 344 applies a driving force towards the shaft base 331 to the door plate 334, so that the door plate 334 moves towards the shaft base 331, to quickly fold the folding mechanism 33, and provide good use experience for a user.

In this embodiment, the elastic part 3443 of the second elastic connection structure 344 is no longer sleeved on the fastening element 3444, that is, the elastic part 3443 and the fastening element 3444 of the second elastic connection structure 344 are not on a same straight line. In this way, in a second direction A2 (namely, a direction perpendicular to the door plate 334), there is sufficient space to accommodate the elastic part 3443 of the second elastic connection structure 344, so that when the elastic part 3443 is sleeved on the fastening element 3444, large space is required in the second direction A2 to accommodate the elastic part 3343. The elastic part 3443 of the second elastic connection structure 344 is no longer sleeved on the fastening element 3444, so that a dimension of the shaft base 331 in the second direction A2 can be reduced, that is, a thickness of the shaft base 331 is reduced, which facilitates miniaturization and lightness of the electronic device 100.

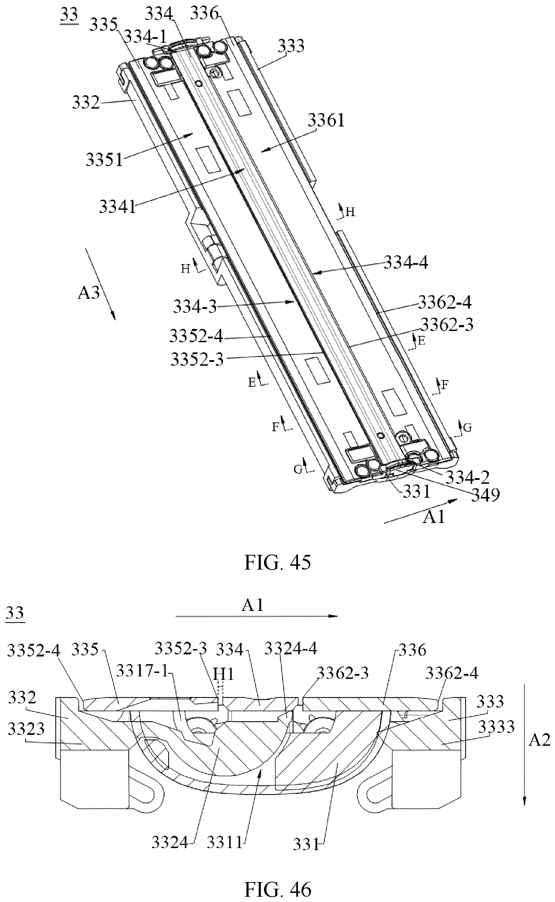

FIG. 45 is a schematic diagram of a structure of the folding mechanism 33 shown in FIG. 7. Refer to FIG. 1 and FIG. 45 together. When the folding mechanism 33 is in an unfolded state, the first support plate 335, the door plate 334, and the second support plate 336 are disposed side by side in a first direction A1, and form a support surface for supporting a flexible display. The first plate edge 3352-3 of the first support plate 335 is disposed adjacent to the third side end 334-3 of the door plate 334, and the first plate edge 3362-3 of the second support plate 336 is disposed adjacent to the fourth side end 334-4 of the door plate 334. The first support plate 335 shields a portion of the shaft base 331, the second support plate 336 shields a portion of the shaft base 331, and the door plate 334 shields a portion of the shaft base 331. The first support plate 335 is spliced with the door plate 334, and the second support plate 336 is spliced with the door plate 334, to jointly provide support for the flexible display 2.

The first revolute pair of the first support plate 335, the second revolute pair of the second support 336, the first kinematic pair of the first support plate 335, the second kinematic pair of the second support plate 336, the synchronization apparatus 337, the first synchronous arm 338, and the second synchronous arm 339 (that are referred to as driving structures of the folding mechanism 33, and not shown in FIG. 45 because the driving structures of the folding mechanism 33 are covered by the first support plate 335, the door plate 334, and the second support plate 336 shown in FIG. 45) are located in an area between the first side end 334-1 and the second side end 334-2 of the door plate 334. That is, in a third direction A3, the first revolute pair of the first support 335, the second revolute pair of the second support 336, the first kinematic pair of the first support plate 335, the second kinematic pair of the second support plate 336, the synchronization apparatus 337, the first synchronous arm 338, and the second synchronous arm 339 are disposed within a size range of the door plate 334. This reduces a dimension of the folding mechanism 33 in the third direction A3, helps reduce a bezel of the electronic device 100, and implements a narrow bezel design of the electronic device 100.

Refer to FIG. 1 and FIG. 45 together. When the first frame body 31 and the second frame body 32 are unfolded relative to each other to an unfolded state, the folding mechanism 33 is in the unfolded state. The folding mechanism 33 adopts a three-plate structure, and the first support plate 335, the door plate 334, and the second support plate 336 are sequentially spliced to provide planar support for the bending portion 23 of the flexible display 2. Specifically, the support surface 3351 of the first support plate 335, the support surface 3341 of the door plate 334, and the support surface 3361 of the second support plate 336 are sequentially spliced to form a support surface for the bending portion 23 of the flexible display 2. In this way, when the electronic device 100 is in the unfolded state, the flexible display 2 is not prone to have a problem like a dent and damage under pressing of the user in a process of using the electronic device 100. This helps improve a service life and reliability of the flexible display 2.

In a process of gradually unfolding the support apparatus 3 to the unfolded state, the first plate edge 3352-3 of the first support plate 335 approaches the door plate 334 until being spliced with the door plate 334, and the first plate edge 3362-3 of the second support plate 336 approaches the door plate 334 until being spliced with the door plate 334. In this embodiment, splicing of the first support plate 335 and the door plate 334 is used as an example. For splicing of the second support plate 336 and the door plate 334, refer to a splicing condition of the first support plate 335 and the door plate 334. It may be understood that a case in which the first support plate 335 is spliced with the door plate 334 includes but is not limited to the following: After the first support plate 335 is spliced with the door plate 334, the first support plate 335 and the door plate 334 are connected to each other with no gap or a small gap between the first support plate 335 and the door plate 334. Alternatively, a portion of the first support plate 335 and a portion of the door plate 334 are connected to each other with no gap there-between or a small gap between the other portion of the first support plate 335 and the other portion of the door plate 334.

When there is no gap between the first support plate 335 and the door plate 334, the first support plate 335 and the door plate 334 may provide strong support for the flexible display 2. When there is a small gap between the first support plate 335 and the door plate 334, or a small gap between a portion of the first support plate 335 and a portion of the door plate 334, a corresponding area of the flexible display 2 is not prone to have an obvious dent or damage under pressing of a user.

When there is a large gap between the first support plate 335 and the door plate 334, an area that is of the flexible display 2 and that corresponds to the gap is prevented from having a dent under pressing by adjusting a size and a shape of a component of the folding mechanism 33, and reducing a size of the gap as much as possible. This helps improve a service life and reliability of the electronic device 100.

When the folding mechanism 33 is in the unfolded state, the support surface 3351 of the first support plate 335, the support surface 3341 of the door plate 334, and the support surface 3361 of the second support plate 336 can make the bending portion 23 of the flexible display 2 to be in the unfolded state. In this way, the first support plate 335, the door plate 334, and the second support plate 336 can provide flat strong support for the bending portion 23 of the flexible display 2, so as to improve user experience in touch operations and picture viewing.

For example, the support surface 3351 of the first support plate 335, the support surface 3341 of the door plate 334, and the support surface 3361 of the second support plate 336 may all be planes, and are coplanar, so that the flexible display 2 can be better supported.

Refer to FIG. 7 and FIG. 45 together. The folding mechanism 33 may further be provided with a stopper 349. The stopper 349 may be fixedly connected to the door plate 334, or the stopper 349 may be fixedly connected to the shaft base 331, or the stopper 349 may be fixedly connected to the housing 341. Specifically, when the stopper 349 is fixedly connected to the door plate 334, the stopper 349 may be fastened to the first side end 334-1 and the second side end 334-2 of the door plate. For example, the stopper 349 is fastened to the door plate through gluing, a fastener, and the like. In addition, the stopper 349 may move towards or away from the shaft base 331 along with the door plate 334. When the stopper 349 is fixedly connected to the shaft base 331, the stopper 349 is fastened to an end part of the shaft base 331, for example, the stopper 349 is fastened to the shaft base 331 through gluing, a fastener, and the like. It should be noted that, when the stopper 349 is fixedly connected to the shaft base 331, there needs to be space between the stopper 349 and the shaft base 331 in which the door plate 334 can move in the second direction A2. When the stopper 349 is fixedly connected to the housing 341, the stopper 349 is fastened to an end part of the housing 341, for example, the stopper 349 is fastened to the housing 341 through gluing, a fastener, and the like. The stopper 349 may cover sides of the flexible display, to implement dustproof effect, and increase aesthetic integrity of the folding mechanism 33.

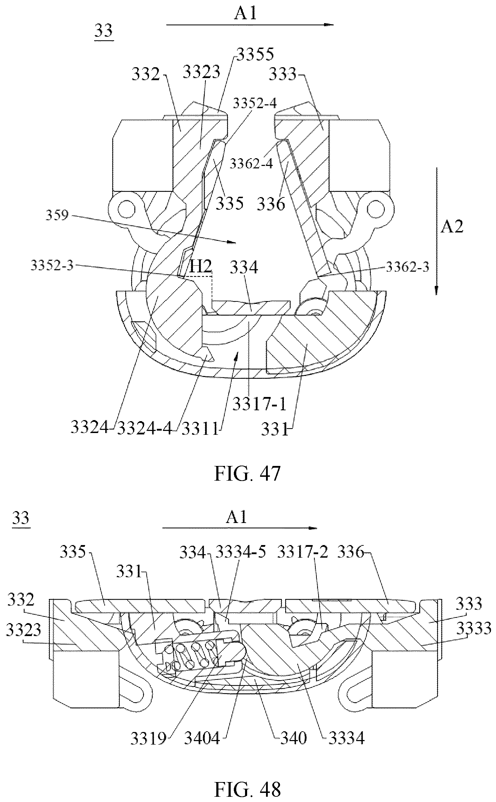

FIG. 46 is a cross-sectional view of the structure shown in FIG. 45 along E-E. FIG. 47 is a schematic diagram of the structure shown in FIG. 46 in another use state.

Refer to FIG. 21, FIG. 46, and FIG. 47 together. The first support 332 is rotatably connected to the shaft base 331. Specifically, the first revolute pair 3324 of the first support 332 is mounted in the first mounting space 3311 of the shaft base 331, such that the second arc groove 3324-3 on the first revolute pair 3324 fits the arc strip 3317-1 of the first mounting space 3311. In this way, the first revolute pair 3324 can rotate along the arc strip 3317-1, to implement a rotatable connection between the first support 332 and the shaft base 331.

Refer to FIG. 46. When the folding mechanism 33 is in an unfolded state, the first revolute pair 3324 rotates into the first mounting space 3311 and fits the arc strip 3317-1. In this case, the second pressing part 3324-4 of the first revolute pair 3324 extends out of the first plate edge 3352-3 of the first support plate 335, and the second pressing part 3324-4 of the first revolute pair 3324 presses against the door plate 334. The second pressing part 3324-4 of the first revolute pair 3324 provides an upward driving force for the door plate 334, to drive the door plate 334 to move away from the shaft base 331 in a second direction A2. The upward driving force herein is a driving force away from the shaft base 331. When the folding mechanism 33 is in the unfolded state, the second pressing part 3324-4 of the first revolute pair 3324 presses against the door plate 334, and is used to support the door plate 334.

Refer to FIG. 47. When the folding mechanism 33 is in a folded state, a portion of the first revolute pair 3324 rotates out of the first mounting space 3311, and another portion of the first revolute pair 3324 that does not rotate out fits the arc strip 3317-1 in the first mounting space 3311. In this case, the second pressing part 3324-4 of the first revolute pair 3324 is separated from the door plate 334, that is, the second pressing part 3324-4 of the first revolute pair 3324 is no longer in contact with the door plate 334, and the first revolute pair 3324 no longer provides an upward driving force for the door plate 334.

Refer to FIG. 46 and FIG. 47 together. When the folding mechanism 33 is in the unfolded state, the first support plate 335, the door plate 334, and the second support plate 336 are disposed side by side in a first direction A1, and jointly support a flexible display. A relationship between the first support plate 335 and the door plate 334 is used as an example. When the folding mechanism 33 is in the unfolded state, the first plate edge 3352-3 of the first support plate 335 is adjacent to the door plate 334. In the first direction A1, the first plate edge 3352-3 of the first support plate 335 is located between the second plate edge 3352-4 of the first support plate 335 and the door plate 334, and a spacing between the first plate edge 3352-3 of the first support plate 335 and the door plate 334, in the first direction A1, is a first dimension H1. When the folding mechanism 33 is in the folded state, a spacing between the first plate edge 3352-3 of the first support plate 335 and the door plate 334, in the first direction A1, is a second dimension H2, and the second dimension H2 is greater than the first dimension H1. It may be understood that the first dimension H1 may be zero, that is, there is no gap between the first plate edge 3352-3 of the first support plate 335 and the door plate 334. For a relationship between the second support plate 336 and the door plate 334, refer to a relationship between the first support plate 335 and the door plate 334. Details are not described herein again. In this embodiment, the second dimension H2 is greater than the first dimension H1, and that is, in a folding process, the first plate edge 3352-3 of the first support plate 335 moves away from the door plate 334. It may be understood that, the first plate edge 3362-3 of the second support plate 336 also moves away from the door plate 334, so that in the folding process, the first support plate 335, the second support plate 336, and the door plate 334 automatically avoid each other, to form accommodating space 359 for accommodating the flexible display. An area that is of the accommodating space 359 and that is adjacent to the door plate 334 has a large size, and an area that is of the accommodating space 359 and that is away from the door plate 334 has a small size. In this way, after the folding mechanism 33 is folded, a crease corresponding to the flexible display 2 disposed on the folding mechanism 33 is not obvious, and damage to the flexible display 2 in a bending process can be avoided.

Refer to FIG. 47. In a second direction A2, a vertical projection, on the door plate 334, of the second plate edge 3352-4 of the first support plate 335 is in the door plate 334, and a vertical projection, on the door plate 334, of the second plate edge 3362-4 of the second support plate 336 is in the door plate 334. That is, in a folding process, the second plate edge 3352-4 of the first support plate 335 and the second plate edge 3362-4 of the second support plate 336 are close to each other, so that the electronic device 100 to which the folding mechanism 33 is applied has no gap in sides after being folded, and good waterproof, dustproof and foreign matter-proof effect is implemented.

In another implementation, when a dimension of the door plate 334 in the first direction A1 is small, in the folded state, in the second direction A2, a vertical projection, on the door plate 334, of the second plate edge 3352-4 of the first support plate 335, and a vertical projection, on the door plate 334, of the second plate edge 3362-4 of the second support plate 336 may alternatively not be in the door plate 334.

Refer to FIG. 41, FIG. 42, FIG. 46, and FIG. 47 together. In a process of folding the folding mechanism 33 from the unfolded state shown in FIG. 46 to the folded state shown in FIG. 47, the first revolute pair 3324 of the first support 332 partially rotates out of the first mounting space 3311 of the shaft base 331, and the second pressing part 3324-4 of the first revolute pair 3324 is separated from the door plate 334, so that the door plate 334 moves towards the shaft base 331 under a downward pulling force provided by the first elastic connection structure 343 or the second elastic connection structure 344. The downward pulling force herein is a pulling force towards the shaft base 331. The door plate 334 moves downwards, that is, the door plate 334 moves towards the shaft base 331, so as to avoid and form accommodating space of the flexible display together with the first support plate 335 and the second support plate 336.

In addition, in the folding process, the first support 332 drives the first support plate 335 to move, that is, when the first support 332 rotates relative to the shaft base 331, the first support plate 335 rotates relative to the first support 332. Specifically, refer to FIG. 35. The rotating structure 3355 of the first kinematic pair 3353 of the first support plate 335 rotates relative to the first arc groove 3323-5 of the first support 332. The rotating structure 3355 partially rotates out of the first arc groove 3323-5 of the first support 332, so as to implement a rotation movement of the first support plate 335 relative to the first support 332.

In a process of unfolding the folding mechanism 33 from the folded state shown in FIG. 47 to the unfolded state shown in FIG. 46, the first revolute pair 3324 of the first support 332 rotates into the first mounting space 3311 of the shaft base 331, the second pressing part 3324-4 of the first revolute pair 3324 gradually approaches the door plate 334, and the second pressing part 3324-4 of the first revolute pair 3324 drives the door plate 334 to move in a direction away from the shaft base 331. The door plate 334 moves upwards to be even with the first support plate 335 and the second support plate 336, so that the door plate 334, the first support plate 335, and the second support plate 336 jointly provide support for a bending portion of the flexible display.

It may be understood that, in the second direction A2, the door plate 334 may be driven by the second pressing part 3324-4 of the first revolute pair 3324 of the first support 332 to move away from the shaft base 331, or the door plate 334 may be driven by the downward pulling force provided by the first elastic connection structure 343 or the second elastic connection structure 344 to move close to the shaft base 331, so as to implement lifting or lowering of the door plate 334.

In addition, in the unfolding process, the first support 332 drives the first support plate 335 to move, that is, when the first support 332 rotates relative to the shaft base 331, the first support plate 335 rotates relative to the first support 332. Specifically, refer to FIG. 35. The rotating structure 3355 of the first kinematic pair 3353 of the first support plate 335 rotates relative to the first arc groove 3323-5 of the first support 331. The rotating structure 3355 partially rotates into the first arc groove 3323-5, so as to implement rotation of the first support plate 335 relative to the first support 332.

In this embodiment, in a relative rotation process of the first support 332 and the shaft base 331, and a relative rotation process of the second support 333 and the shaft base 331, the first support 332 can drive the first support plate 335 to move and drive the door plate 334 to move in the second direction A2 relative to the shaft base 331, and the second support 333 can drive the second support plate 336 to move and drive the door plate 334 to move in the second direction A2 relative to the shaft base 331, so as to switch the first support plate 335, the second support plate 336, and the door plate 334 between the unfolded state and the folded state.

Refer to FIG. 46 and FIG. 47 together. In a process of folding the folding mechanism 33 from the unfolded state to the folded state, the door plate 334 moves towards the shaft base 331, and the first plate edge 3352-3 of the first support plate 335 moves away from the door plate 334. In addition, the first plate edge 3362-3 of the second support plate 336 moves away from the door plate 334, and the second plate edge 3352-4 of the first support plate 335 and the second plate edge 3362-4 of the second support plate 336 are close to each other. When the folding mechanism 33 is in the folded state, the support surface 3351 of the first support plate 335 and the support surface 3361 of the second support plate 336 are disposed opposite to each other, and are away from each other in a direction close to the shaft base 331.

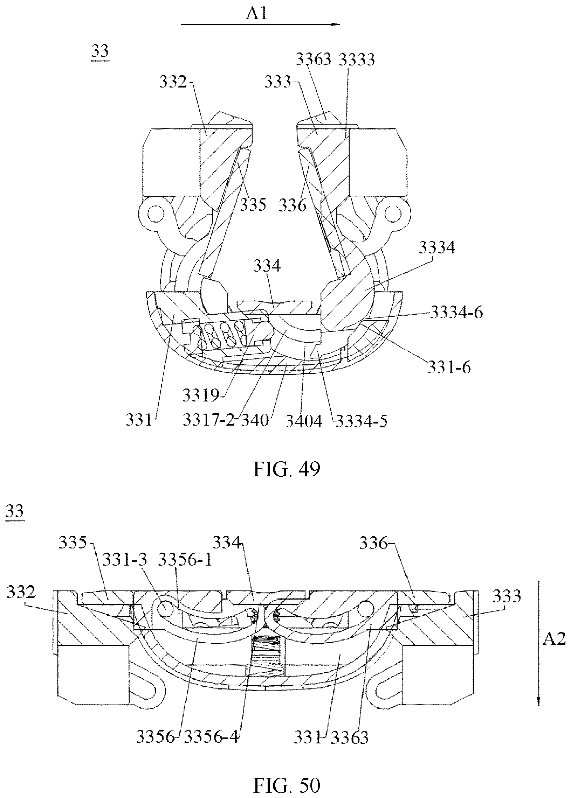

FIG. 48 is a cross-sectional view of the structure shown in FIG. 45 along F-F. FIG. 49 is a schematic diagram of the structure shown in FIG. 48 in another use state.

Refer to FIG. 21, FIG. 48, and FIG. 49 together. The second support 333 is rotatably connected to the shaft base 331 by using the slider 340. Specifically, the arc strip 3317-2 on the slider 340 of the shaft base 331 is located in the fourth arc groove 3334-3 on the second revolute pair 3334, and the ejecting structure 3319 in the second mounting space 3312 fits the open slot 3334-4 on the second revolute pair 3334, so that the second revolute pair 3334 can rotate along the arc strip 3317-2 on the slider 340, to implement a rotatable connection between the second support 333 and the shaft base 331.

Refer to FIG. 48. When the folding mechanism 33 is in an unfolded state, the second revolute pair 3334 of the second support 333 rotates into the second accommodating groove 3404 of the slider 340, and fits the arc strip 3317-2 on the inner wall of the second accommodating groove 3404. In this case, the second pressing part 3334-5 of the second revolute pair 3334 presses against a surface that is of the door plate 334 and that faces the shaft base 331, and the second pressing part 3334-5 of the second revolute pair 3334 provides an upward driving force for the door plate 334, so as to drive the door plate 334 to move away from the shaft base 331. The upward driving force herein is a driving force away from the shaft base 331. When the folding mechanism 33 is in the unfolded state, the second pressing part 3334-5 of the second revolute pair 3334 presses against the door plate 334.

Refer to FIG. 49. When the folding mechanism 33 is in a folded state, a portion of the second revolute pair 3334 rotates out of the second accommodating groove 3404 of the slider 340, and another portion of the second revolute pair 3334 that does not rotate out fits the arc strip 3317-2 of the slider 340. In this case, the second revolute pair 3334 is separated from the door plate 334, that is, the pressing part 3334-5 of the second revolute pair 3334 is no longer in contact with the door plate 334, and the second revolute pair 3334 no longer provides an upward driving force for the door plate 334.

Refer to FIG. 41, FIG. 42, FIG. 48, and FIG. 49 together. In a process of folding the folding mechanism 33 from the unfolded state shown in FIG. 48 to the folded state shown in FIG. 49, the second revolute pair 3334 of the second support 333 partially rotates out of the second accommodating groove 3404 of the slider 340 on the shaft base 331, and the second pressing part 3334-5 of the second revolute pair 3334 is separated from the door plate 334, so that the door plate 334 moves towards the shaft base 331 under a downward pulling force provided by the first elastic connection structure 343 or the second elastic connection structure 344. The downward pulling force herein is a pulling force towards the shaft base 331. The door plate 334 moves downwards, that is, the door plate 334 moves towards the shaft base 331, so as to avoid and form accommodating space of the flexible display together with the first support plate 335 and the second support plate 336.

In addition, in the folding process, the second support 333 drives the second support plate 336 to move, that is, when the second support 333 rotates relative to the shaft base 331, the second support plate 336 rotates relative to the second support 333. Specifically, the second kinematic pair 3363 of the second support plate 336 rotates relative to the second support 333, and the second kinematic pair 3363 partially rotates out of the third arc groove of the second support 333, so as to implement rotation of the second support plate 336 relative to the second support 333.

In a process of unfolding the folding mechanism 33 from the folded state shown in FIG. 49 to the unfolded state shown in FIG. 48, the second revolute pair 3334 of the second support 333 rotates into the second accommodating groove 3404 of the slider 340 on the shaft base 331, the second pressing part 3334-5 of the second revolute pair 3334 gradually approaches the door plate 334, and the second pressing part 3334-5 of the second revolute pair 3334 drives the door plate 334 to move in a direction away from the shaft base 331. The door plate 334 moves upwards to be even with the first support plate 335 and the second support plate 336, so that the door plate 334, the first support plate 335, and the second support plate 336 jointly provide support for a bending portion of the flexible display.

It may be understood that, in the second direction A2, the door plate 334 may be driven by the second pressing part 3334-5 of the second revolute pair 3334 of the second support 333 to move away from the shaft base 331, or the door plate 334 may be driven by the downward pulling force provided by the first elastic connection structure 343 or the second elastic connection structure 344 to move close to the shaft base 331, so as to implement lifting or lowering of the door plate 334.

In addition, in the unfolding process, the second support 333 drives the second support plate 336 to move, that is, when the second support 333 rotates relative to the shaft base 331, the second support plate 336 rotates relative to the second support 333. Specifically, the second kinematic pair 3363 of the second support plate 336 rotates relative to the second support 333, and the second kinematic pair 3363 partially rotates into the third arc groove of the second support 333, so as to implement rotation of the second support plate 336 relative to the second support 333.

Refer to FIG. 1 and FIG. 48 together. Because the slider 340 may slide in the first direction A1 relative to the shaft base 331, and the second revolute pair 3334 of the second support 333 is rotatably connected to the slider 340, the second support 333 may also slide in the first direction A1 relative to the shaft base 331. When the folding mechanism 33 is to be in the unfolded state, the ejecting structure 3319 presses against the second revolute pair 3334, so that the second support 333 and the slider 340 both slide in the first direction A1, and the second main body 3333 of the second support 333 gradually moves away from the shaft base 331. In this way, the second support 333 drives the second support plate 336 to slide, in the first direction A1, away from the door plate 334, and the second support 333 further drives the second frame body 33 to slide, in the first direction A1, away from the shaft base 331, to tension the flexible display 2 fastened to the support apparatus 3. This reduces the problem that the surface of the flexible display 2 in the unfolded state is uneven or creased. When there is no slider 340, because the second revolute pair 3334 rotatably fits the arc strip 3317-2 of the slider 340 of the shaft base 331 directly, a position of the arc strip 3317-2 in the shaft base 331 is fixed. In the unfolded state, the ejecting structure 3319 cannot make the second support 333 slide in the first direction A1, so that the second support 333 cannot drive the second support plate 336 to move in the first direction A1, and the flexible display 2 fastened to the folding mechanism 33 cannot be tightened. In this embodiment, the slider 340 that can slide relative to the shaft base 331 is disposed, and the second revolute pair 3334 of the second support 333 is rotatably connected to the slider 340. In this way, the second support 333 may rotate relative to the shaft base 331, and the second support 333 may also slide in the first direction A1 relative to the shaft base 331. When the ejecting structure 3319 presses against the second revolute pair 3334, the ejecting structure 3319 may make the second support 333 and the slider 340 both slide in the first direction A1.

Refer to FIG. 49. An arc surface 331-6 is disposed on the shaft base 331, and an arc surface 3334-6 is disposed on the second revolute pair 3334 of the second support 333. A bending radius of the arc surface 331-6 on the shaft base 331 is equal to that of the arc surface 3334-6 of the second revolute pair 3334. When the folding structure 33 is in a folded state, the arc surface 3334-6 of the second revolute pair 3334 overlaps with the arc surface 331-6 of the shaft base 331, so that after the folding mechanism 33 moves to be close to the folded state, the second revolute pair 3334 of the second support 333 can move to a fixed position. In addition, when the electronic device 100 to which the folding mechanism 33 is applied is in the folded state, the electronic device 100 has no gap in sides, and good waterproof, dustproof, and foreign matter-proof effect can be implemented.

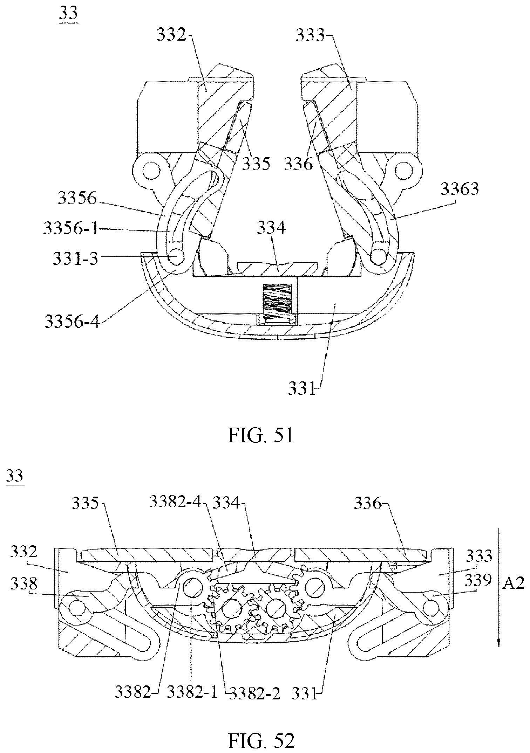

FIG. 50 is a cross-sectional view of the structure shown in FIG. 45 along G-G. FIG. 51 is a schematic diagram of the structure shown in FIG. 50 in another use state.

In this embodiment, the door plate 334 may be driven by using the first kinematic pair 3353 of the first support plate 335 and the second kinematic pair 3363 of the second support plate 336. That the first kinematic pair 3353 of the first support plate 335 drives the door plate 334 is used as an example. In a process of unfolding the folding mechanism 33 from the folded state shown in FIG. 51 to the unfolded state shown in FIG. 50, the first pressing part 3356-4 of the sliding structure 3356 of the first support plate 335 gradually approaches the door plate 334. When the first pressing part 3356-4 of the sliding structure 3356 of the first support plate 335 presses against the door plate 334, the first pressing part 3356-4 of the sliding structure 3356 of the first support plate 335 drives the door plate 334 to move in the second direction A2 away from the shaft base 331. When the folding mechanism 33 is in the unfolded state, the first pressing part 3356-4 of the sliding structure 3356 of the first support plate 335 presses against the door plate 334, and is used to support the door plate 334.

For driving the door plate 334 by the second kinematic pair 3363 of the second support plate 336, refer to driving the door plate 334 by the sliding structure 3356 of the first support plate 335. Details are not described herein again.

Refer to FIG. 41, FIG. 42, FIG. 50, and FIG. 51 together. In a process of folding the folding mechanism 33 from the unfolded state in FIG. 50 to the folded state in FIG. 51, the sliding structure 3356 of the first support plate 335 is separated from the door plate 334, and the door plate 334 moves towards the shaft base 331 under the downward pulling force provided by the first elastic connection structure 343 or the second elastic connection structure 344.

It may be understood that, the door plate 334 may be driven by the first pressing part 3356-4 of the sliding structure 3356 of the first support plate 335 to move away from the shaft base 331, or the door plate 334 may be driven by the downward pulling force provided by the first elastic connection structure 343 or the second elastic connection structure 344 to move close to the shaft base 331, so as to implement lifting or lowering of the door plate 334.

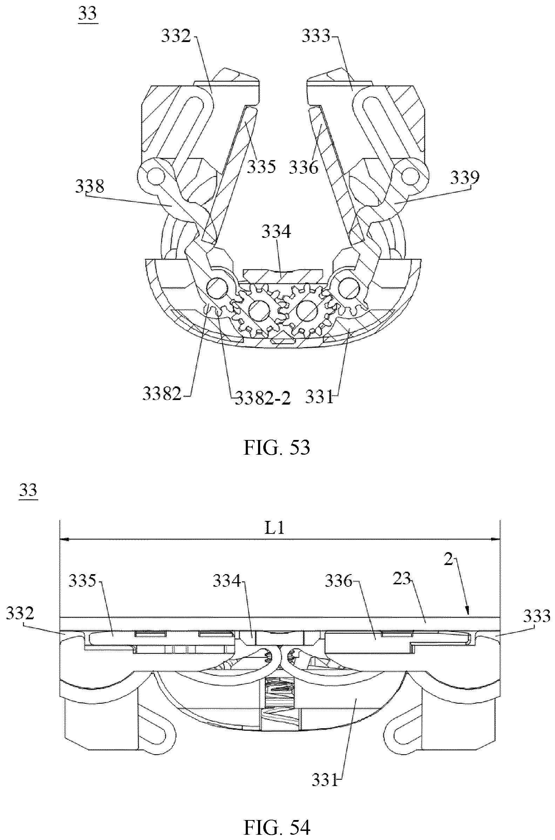

FIG. 52 is a cross-sectional view of the structure shown in FIG. 45 along H-H. FIG. 53 is a schematic diagram of the structure shown in FIG. 52 in another use state.

In this embodiment, the door plate 334 may be driven by using the first synchronous arm 338 and the second synchronous arm 339. That the first synchronous arm 338 drives the door plate 334 is used as an example. A third pressing part 3382-4 is disposed on the synchronization end 3382 (namely an end at which the first synchronous arm 338 is engaged with the synchronous gear 3371) of the first synchronous arm 338, and the third pressing part 3382-4 is protruded on the rotating part 3382-1. It may be understood that in a direction perpendicular to the paper, namely, in a third direction, the third pressing part 3382-4 of the first synchronous arm 338 and a gear of the gear part 3382-2 of the synchronization end 3382 are arranged side by side. In a process of unfolding the folding mechanism 33 from a folded state shown in FIG. 53 to an unfolded state shown in FIG. 52, the third pressing part 3382-4 of the first synchronous arm 338 gradually approaches the door plate 334. When the third pressing part 3382-4 of the first synchronous arm 338 presses against the door plate 334, the third pressing part 3382-4 of the first synchronous arm 338 drives the door plate 334 to move away from the shaft base 331 in a second direction A2. When the folding mechanism 33 is in the unfolded state, the third pressing part 3382-4 of the synchronization end 3382 of the first synchronous arm 338 presses against the door plate 334, and is used to support the door plate 334.

For driving the door plate 334 by the pressing part of the second synchronous arm 339, refer to driving the door plate 334 by the third pressing part 3382-4 of the first synchronous arm 338. Details are not described herein again.

Refer to FIG. 41, FIG. 42, FIG. 52, and FIG. 53 together. In a process of folding the folding mechanism 33 from the unfolded state in FIG. 52 to the folded state in FIG. 53, the third pressing part 3382-4 of the first synchronous arm 338 is separated from the door plate 334, and the door plate 334 moves towards the shaft base 331 under the downward pulling force provided by the first elastic connection structure 343 or the second elastic connection structure 344.

It may be understood that, the door plate 334 may be driven by the third pressing part 3382-4 of the first synchronous arm 338 to move away from the shaft base 331, or the door plate 334 may be driven by the downward pulling force provided by the first elastic connection structure 343 or the second elastic connection structure 344 to move close to the shaft base 331, so as to implement lifting or lowering of the door plate 334.

It should be noted that the movement of the door plate 334 towards the shaft base 331 or the movement of the door plate 334 away from the shaft base 331, namely, the lifting or lowering movement of the door plate 334, includes, but is not limited to being driven by the first revolute pair 3324 of the first support 332 shown in FIG. 46 and FIG. 47, driven by the second revolute pair 3334 of the second support 333 shown in FIG. 48 and FIG. 49, driven by the first kinematic pair 3353 of the first support plate 335 and the second kinematic pair 3363 of the second support plate 336 shown in FIG. 50 and FIG. 51, and driven by the first synchronous arm 338 and the second synchronous arm 339 shown in FIG. 52 and FIG. 53. The movement of the door plate 334 may also be driven in another manner, provided that the door plate 334 can be lifted and lowered. The movement of the door plate 334 close to the shaft base 331 may be driven by the downward pulling force provided by the first elastic connection structure 343 (refer to FIG. 41) or the second elastic connection structure 344 (refer to FIG. 42).

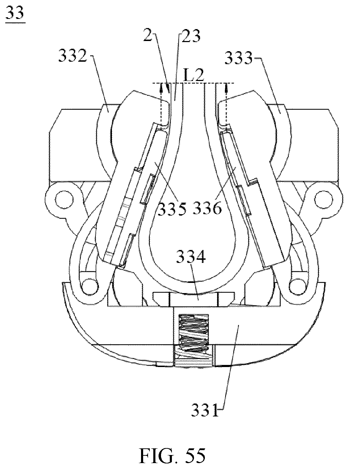

FIG. 54 is a schematic diagram of a structure of fitting between the folding mechanism 33 and the flexible display 2. FIG. 55 is a schematic diagram of the structure shown in FIG. 54 in another use state. The bending portion 23 of the flexible display 2 is disposed corresponding to the folding mechanism 33, and the bending portion 23 of the flexible display 2 is folded or unfolded through deformation of the folding mechanism 33. As shown in FIG. 54, when the folding mechanism 33 is in an unfolded state, the first support plate 335, the door plate 334, and the second support plate 336 jointly support the bending portion 23 of the flexible display 2, so that the bending portion 23 of the flexible display 2 is in the unfolded state. As shown in FIG. 55, when the folding mechanism 33 is in a folded state, the first support plate 335, the door plate 334, and the second support plate 333 jointly form accommodating space for accommodating the bending portion 23 of the flexible display 2.

As shown in FIG. 55, when the electronic device 100 is in the folded state, the bending portion 23 of the flexible display 2 is in a shape of a water drop. A bending radius of the bottom of the water drop-shaped bending portion 23 is large, and two opposite sides of the bending portion 23 gradually approach each other in a direction of extending upwards from the bottom. In this way, in the folded state, the electronic device 100 has no gap in sides, and has good aesthetic experience, and good waterproof and dustproof performance. In addition, because the bending radius of the bottom of the water drop-shaped bending portion 23 is large, a crease of the water drop-shaped bending portion 23 is not obvious. In this way, the crease of the bending portion 23 of the flexible display 2 can be effectively reduced, and damage to the flexible display 2 in a bending process can be avoided.

It may be understood that the flexible display 2 includes a plurality of film layers, and the plurality of films layer are stacked to form the flexible display 2. Because the folding mechanism 33 in this embodiment has a determined movement track, at least one film layer in the flexible display 2 keeps a length unchanged in the folding or unfolding process of the folding mechanism 33, that is, a length L1 of the at least one film layer in the flexible display 2 before folding is equal to a length L2 after folding. In other words, in a process of folding or unfolding the electronic device 100, at least one film layer in the flexible display 2 has a determined movement track, so that the flexible display 2 is not pulled or squeezed by an external force. This helps the flexible display 2 from being damaged, and effectively improves a service life and reliability of the electronic device 100.

Refer to FIG. 1, FIG. 3, FIG. 54, and FIG. 55 together. In a process of using the electronic device 100, a user holds the first frame body 31 and the second frame body 32, and applies a driving force to fold or unfold the first frame body 31 and the second frame body 32. The first frame body 31 and the second frame body 32 transfer the driving force to the first support 332 and the second support 333, so that the first support 332 and the second support 333 rotate relative to the shaft base 331. In addition, synchronous rotation of the first support 332 and the second support 333 may be implemented through joint action of the synchronization apparatus 337, the first synchronous arm 338, and the second synchronous arm 339. At the same time, the first support 332 and the second support 333 drive the first support plate 335 and the second support plate 336 to rotate, where the first support plate 335 and the second support plate 336 further slide relative to the shaft base 331. In addition, when the first support 332 and the second support 333 rotate relative to the shaft base 331, the door plate 334 is driven to ascend or lower. In this way, the support apparatus 3 is closed and opened. The support apparatus 3 drives the flexible display 2 to fold or unfold in a process of closing or opening, that is, the electronic device 100, electronic device, closes or opens.

The electronic device 100 is a flexible foldable device. Because the flexible display 2 of the electronic device 100 features a flexible and variable size in different application scenarios, the flexible electronic device 100 becomes a main direction of research and development. When the electronic device 100 is in a folded state, the electronic device 100 has a small size and is easy to carry. When the electronic device 100 is in an unfolded state, the electronic device 100 has a large display area, and can provide good visual experience and operation experience for a user.

In a process of folding the folding mechanism 33 in this application, the first support plate 335, the second support plate 336, and the door plate 334 automatically avoid each other, to form accommodating space 359 for accommodating the flexible display. A size of an area that is of the accommodating space 359 and that is adjacent to the door plate 334 is large. In this way, after the folding mechanism 33 is folded, a crease corresponding to the flexible display 2 disposed on the folding mechanism 33 is not obvious, and damage to the flexible display 2 in a bending process can be avoided. In addition, the electronic device 100 to which the folding mechanism 33 is applied has no gap in sides after being folded, and has good waterproof, dustproof and foreign matter-proof effect.

The folding mechanism in this application can be stably switched from the unfolded state to the folded state or from the folded state to the unfolded state. The folding mechanism has high precision in controlling internal movement such as a rotation action or a sliding action, and has good stability. In this application, a driving structure (the driving structure includes a first revolute pair of the first support 335, a second revolute pair of the second support 336, a first kinematic pair of the first support plate 335, a second kinematic pair of the second support plate 336, a synchronization apparatus 337, a first synchronous arm 338, and a second synchronous arm 339) of the folding mechanism 33 is disposed in an area between the first side end 334-1 and the second side end 334-1 of the door plate. That is, in the third direction A3, the driving structure of the folding mechanism 33 is disposed within a size range of the door plate 334. This reduces a dimension of the folding mechanism 33 in the third direction A3, helps reduce a bezel of the electronic device 100, and implements a narrow bezel design of the electronic device 100.

## Claims

1. A folding mechanism (33), comprising:
a shaft base (331);
a support (332, 333), comprising a main body (3323, 3333) and a revolute pair (3324, 3334), wherein the revolute pair (3324, 3334) is fixedly connected to the main body (3323, 3333), and rotatably connected to the shaft base (331);
a support plate (335, 336), comprising a main plate (3352, 3362) and a kinematic pair (3353, 3363), wherein the main plate (3352, 3362) comprises a first plate edge (3352-3, 3362-3) and a second plate edge (3352-4, 3362-4) that are disposed opposite to each other, and when the folding mechanism is in an unfolded state, the first plate edge (3352-3, 3362-3) and the second plate edge (3352-4, 3362-4) are arranged in a first direction (A1); and the kinematic pair (3353, 3363) is fixedly connected to the main plate (3352, 3362), and comprising a rotating structure (3355) and sliding structure (3356), the kinematic pair being rotatably connected to the main body (3323, 3333) by the rotating structure, and slidably connected to the shaft base (331) by the sliding structure, the sliding structure being configured to permit slidable rotation between the kinematic pair and the shaft base; and
a door plate (334) that can move relative to the shaft base (331) in a second direction (A2), wherein the second direction (A2) is perpendicular to the first direction (A1), and in the unfolded state, the second direction (A2) is perpendicular to a plane on which the main plate (3352, 3362) is located, wherein
in the unfolded state, the support plate (335, 336) and the door plate (334) are arranged side by side in the first direction (A1) and form a support surface (3351, 3341, 3361) for supporting a flexible display (2), the first plate edge (3352-3, 3362-3) is adjacent to the door plate (334), and a spacing between the first plate edge (3352-3, 3362-3) and the door plate (334) in the first direction (A1) is a first dimension (H1); and
in a folded state, the spacing between the first plate edge (3352-3, 3362-3) and the door plate (334) in the first direction (A1) is a second dimension (H2), and the second dimension (H2) is greater than the first dimension (H1) to completely close a first frame body (31) and a second frame body (32) fixedly connected to the support (332,333) and supporting the flexible display (2).

2. The folding mechanism (33) according to claim 1, wherein the door plate (334) comprises a first side end (334-1) and a second side end (334-2) that are disposed opposite to each other in a third direction (A3), and a third side end (334-3) and a fourth side end (334-4) that are disposed opposite to each other in the first direction (A1), the third direction (A3) is perpendicular to the first direction (A1), in the unfolded state, the first plate edge (3352-3, 3362-3) is adjacent to the third side end (334-3) and/or the fourth side end (334-3), and the revolute pair (3324, 3334) and the kinematic pair (3353, 3363) are located in an area between the first side end (334-1) and the second side end (334-2).

3. The folding mechanism (33) according to claim 2, wherein a dimension of the shaft base (331) in the third direction (A3) is less than a dimension of the support plate (335, 336) in the third direction (A3), and the kinematic pair (3353, 3363) and the shaft base (331) are arranged side by side in the third direction (A3).

4. The folding mechanism (33) according to claim 3, wherein the rotating structure (3355) and the sliding structure (3356) are located on a side that is of the support plate (335, 336) and that faces the support (332, 333), a joint (3358) is disposed between the rotating structure (3355) and the sliding structure (3356), the rotating structure (3355) extends from the joint (3358) to the second plate edge (3352-4, 3362-4), and the sliding structure (3356) extends from the joint (3358) to the first plate edge (3352-3, 3362-3).

5. The folding mechanism (33) according to claim 4, wherein the main body (3323, 3333) of the support (332, 333) is provided with a first end part (3323-6, 3333-6) and a second end part (3323-7, 3333-7) that are disposed opposite to each other in the third direction (A3), each of the first end part (3323-6, 3333-6) and the second end part (3323-7, 3333-7) is provided with a connection structure (3323-4, 3333-4), and the rotating structure (3355) is rotatably connected to the connection structure (3323-4, 3333-4).

6. The folding mechanism (33) according to claim 5, wherein the connection structure (3323-4, 3333-4) is provided with an arc groove (3323-5, 3333-5), the rotating structure (3355) comprises an arc strip (3355-2), and the arc strip (3355-2) fits the arc groove (3323-5, 3333-5) and can move in the arc groove (3323-5, 3333-5).

7. The folding mechanism (33) according to claim 6, wherein the arc groove (3323-5, 3333-5) comprises an opening (3323-8, 3333-8) and a bottom wall (3323-8, 3333-9) that are disposed opposite to each other, and a direction extending from the opening (3323-8, 3333-8) to the bottom wall (3323-8, 3333-9) is the third direction (A3).

8. The folding mechanism (33) according to claim 4, wherein the sliding structure (3356) is provided with a sliding slot (3356-1), the sliding slot (3356-1) comprises a first sliding end (3356-2) and a second sliding end (3356-3), the first sliding end (3356-2) is adjacent to the joint (3358), the second sliding end (3356-3) is adjacent to the first plate edge (3352-3, 3362-3) or extends out of the first plate edge (3352-3, 3362-3), the shaft base (331) comprises a sliding pin (331-3), the sliding pin (331-3) can slide relative to the sliding structure (3356) in the sliding slot (3356-1), when the folding mechanism is in the unfolded state, the sliding pin (331-3) is located at the first sliding end (3356-2), and when the folding mechanism is in the folded state, the sliding pin (331-3) is located at the second sliding end (3356-3).

9. The folding mechanism (33) according to any one of claims 4 to 8, wherein the sliding structure (3356) is provided with a first pressing part (3356-4), and the first pressing part (3356-4) extends out of the first plate edge (3352-3, 3362-3);
the first pressing part (3356-4) is configured to press against the door plate (334), to drive the door plate (334) to move away from the shaft base (331) in the second direction (A2); and
in the unfolded state, the first pressing part (3356-4) is configured to support the door plate (334).

10. The folding mechanism (33) according to claim 2, wherein mounting space (3311) is disposed on the shaft base (331), an arc strip (3317-1) is disposed on a side wall (3314, 3316) of the mounting space (3311), the revolute pair (3324) comprises an arc plate (3324-1) and a bump (3324-2) located on a concave side of the arc plate (3324-1), an edge of the arc plate (3324-1) and an edge of the bump (3324-2) form an arc groove (3324-3), the arc strip (3317-1) is located in the arc groove (3324-3), and the arc strip (3317-1) fits the arc groove (3324-3) and can move in the arc groove (3324-3).

11. The folding mechanism (33) according to claim 2, wherein the folding mechanism (33) comprises a slider (340) and an ejecting structure (3319), the slider (340) is slidably connected to the shaft base (331), the slider (340) can slide on the shaft base (331) in the first direction (A1), the revolute pair (3334) is rotatably connected to the slider (340), and the ejecting structure (3319) is configured to apply an ejecting force in the first direction (A1) to the revolute pair (3334).

12. The folding mechanism (33) according to claim 11, wherein the slider (340) comprises a body (3401), and a first accommodating groove (3403) and a second accommodating groove (3404) that are located on the body (3401), the first accommodating groove (3403) communicates with the second accommodating groove (3404), the ejecting structure (3319) is mounted on the shaft base (331), a portion of the ejecting structure (3319) is located in the first accommodating groove (3403), the revolute pair (3334) is located in the second accommodating groove (3404) and can rotate in the second accommodating groove (3404), and when the folding mechanism (33) is in the unfolded state, the ejecting structure (3319) ejects the revolute pair (3334).

13. The folding mechanism (33) according to claim 12, wherein the ejecting structure (3319) comprises an end cover (3319-1), an elastic part (3319-2), and an ejector pin (3319-3) that are connected in sequence, the end cover (3319-1) is mounted on the shaft base (331), the elastic part (3319-2) and the ejector pin (3319-3) extend into the first accommodating groove (3403), and when the folding mechanism (33) is in the unfolded state, the ejector pin (3319-3) presses against the revolute pair (3334).

14. The folding mechanism (33) according to claim 12, wherein an arc strip (3317-2) is disposed on a groove wall (3405, 3406) of the second accommodating groove (3404), the revolute pair (3334) comprises an arc plate (3334-1) and a bump (3334-2) located on a concave side of the arc plate (3334-1), an edge of the arc plate (3334-1) and an edge of the bump (3334-2) form an arc groove (3334-3), the arc strip (3317-2) is located in the arc groove (3334-3), and the arc strip (3317-2) fits the arc groove (3334-3) and can move in the arc groove (3334-3).

15. The folding mechanism (33) according to any one of claims 1 to 14, wherein the folding mechanism (33) comprises an elastic connection structure (343, 344), the elastic connection structure (343, 344) elastically connects the shaft base (331) to the door plate (334), and in a folding process of the folding mechanism (33), the elastic connection structure (343, 344) drives the door plate (334) to move towards the shaft base (331) in the second direction (A2).

## Patentansprüche

1. Klappmechanismus (33), umfassend:
eine Schaftbasis (331);
einen Träger (332, 333), der einen Hauptkörper (3323, 3333) und ein Gelenkpaar (3324, 3334) umfasst, wobei das Gelenkpaar (3324, 3334) fest mit dem Hauptkörper (3323, 3333) und drehbar mit der Schaftbasis (331) verbunden ist;
eine Trägerplatte (335, 336), die eine Hauptplatte (3352, 3362) und ein kinematisches Paar (3353, 3363) umfasst, wobei die Hauptplatte (3352, 3362) eine erste Plattenkante (3352-3, 3362-3) und eine zweite Plattenkante (3352-4, 3362-4) umfasst, die einander gegenüberliegend angeordnet sind, und, wenn sich der Klappmechanismus in einem ausgeklappten Zustand befindet, die erste Plattenkante (3352-3, 3362-3) und die zweite Plattenkante (3352-4, 3362-4) in einer ersten Richtung (A1) angeordnet sind; und das kinematische Paar (3353, 3363) fest mit der Hauptplatte (3352, 3362) verbunden ist und eine Drehstruktur (3355) und eine Gleitstruktur (3356) umfasst, wobei das kinematische Paar mit dem Hauptkörper (3323, 3333) durch die Drehstruktur drehbar verbunden ist und mit der Schaftbasis (331) durch die Gleitstruktur verschiebbar verbunden ist, wobei die Gleitstruktur dazu konfiguriert ist, eine verschiebbare Drehung zwischen dem kinematischen Paar und der Schaftbasis zu ermöglichen; und
eine Türplatte (334), die sich relativ zu der Schaftbasis (331) in einer zweiten Richtung (A2) bewegen kann, wobei die zweite Richtung (A2) senkrecht zu der ersten Richtung (A1) ist und in dem ausgeklappten Zustand die zweite Richtung (A2) senkrecht zu einer Ebene ist, auf der sich die Hauptplatte (3352, 3362) befindet, wobei
in dem ausgeklappten Zustand die Trägerplatte (335, 336) und die Türplatte (334) in der ersten Richtung (A1) nebeneinander angeordnet sind und eine Trägerfläche (3351, 3341, 3361) zum Tragen eines flexiblen Displays (2) bilden, die erste Plattenkante (3352-3, 3362-3) benachbart zu der Türplatte (334) ist und ein Abstand zwischen der ersten Plattenkante (3352-3, 3362-3) und der Türplatte (334) in der ersten Richtung (A1) eine erste Abmessung (H1) ist; und
in einem zusammengeklappten Zustand der Abstand zwischen der ersten Plattenkante (3352-3, 3362-3) und der Türplatte (334) in der ersten Richtung (A1) eine zweite Abmessung (H2) beträgt und die zweite Abmessung (H2) größer als die erste Abmessung (H1) ist, um einen ersten Rahmenkörper (31) und einen zweiten Rahmenkörper (32), die fest mit dem Träger (332, 333) verbunden sind und das flexible Display (2) tragen, vollständig zu schließen.

2. Klappmechanismus (33) nach Anspruch 1, wobei die Türplatte (334) ein erstes Seitenende (334-1) und ein zweites Seitenende (334-2), die einander in einer dritten Richtung (A3) gegenüberliegend angeordnet sind, und ein drittes Seitenende (334-3) und ein viertes Seitenende (334-4) umfasst, die einander in der ersten Richtung (A1) gegenüberliegend angeordnet sind, wobei die dritte Richtung (A3) senkrecht zu der ersten Richtung (A1) ist, wobei in dem ausgeklappten Zustand die erste Plattenkante (3352-3, 3362-3) benachbart zu dem dritten Seitenende (334-3) und/oder dem vierten Seitenende (334-3) ist und wobei sich das Gelenkpaar (3324, 3334) und das kinematische Paar (3353, 3363) in einem Bereich zwischen dem ersten Seitenende (334-1) und dem zweiten Seitenende (334-2) befinden.

3. Klappmechanismus (33) nach Anspruch 2, wobei eine Abmessung der Schaftbasis (331) in der dritten Richtung (A3) kleiner als eine Abmessung der Trägerplatte (335, 336) in der dritten Richtung (A3) ist und das kinematische Paar (3353, 3363) und die Schaftbasis (331) in der dritten Richtung (A3) nebeneinander angeordnet sind.

4. Klappmechanismus (33) nach Anspruch 3, wobei sich die Drehstruktur (3355) und die Gleitstruktur (3356) auf einer Seite befinden, die zu der Trägerplatte (335, 336) gehört und die dem Träger (332, 333) zugewandt ist, ein Gelenk (3358) zwischen der Drehstruktur (3355) und der Gleitstruktur (3356) angeordnet ist, sich die Drehstruktur (3355) von dem Gelenk (3358) bis zu der zweiten Plattenkante (3352-4, 3362-4) erstreckt und sich die Gleitstruktur (3356) von dem Gelenk (3358) bis zu der ersten Plattenkante (3352-3, 3362-3) erstreckt.

5. Klappmechanismus (33) nach Anspruch 4, wobei der Hauptkörper (3323, 3333) des Trägers (332, 333) mit einem ersten Endteil (3323-6, 3333-6) und einem zweiten Endteil (3323-7, 3333-7) bereitgestellt ist, die in der dritten Richtung (A3) einander gegenüberliegend angeordnet sind, wobei jedes des ersten Endteils (3323-6, 3333-6) und des zweiten Endteils (3323-7, 3333-7) mit einer Verbindungsstruktur (3323-4, 3333-4) bereitgestellt ist und die Drehstruktur (3355) drehbar mit der Verbindungsstruktur (3323-4, 3333-4) verbunden ist.

6. Klappmechanismus (33) nach Anspruch 5, wobei die Verbindungsstruktur (3323-4, 3333-4) mit einer Bogennut (3323-5, 3333-5) bereitgestellt ist, die Drehstruktur (3355) einen Bogenstreifen (3355-2) umfasst und der Bogenstreifen (3355-2) in die Bogennut (3323-5, 3333-5) passt und sich in der Bogennut (3323-5, 3333-5) bewegen kann.

7. Klappmechanismus (33) nach Anspruch 6, wobei die Bogennut (3323-5, 3333-5) eine Öffnung (3323-8, 3333-8) und eine Bodenwand (3323-8, 3333-9) umfasst, die einander gegenüberliegend angeordnet sind, und eine Richtung, die sich von der Öffnung (3323-8, 3333-8) zu der Bodenwand (3323-8, 3333-9) erstreckt, die dritte Richtung (A3) ist.

8. Klappmechanismus (33) nach Anspruch 4, wobei die Gleitstruktur (3356) mit einem Gleitschlitz (3356-1) bereitgestellt ist, der Gleitschlitz (3356-1) ein erstes Gleitende (3356-2) und ein zweites Gleitende (3356-3) umfasst, das erste Gleitende (3356-2) benachbart zu dem Gelenk (3358) ist, das zweite Gleitende (3356-3) benachbart zu der ersten Plattenkante (3352-3, 3362-3) ist oder sich aus der ersten Plattenkante (3352-3, 3362-3) heraus erstreckt, die Schaftbasis (331) einen Gleitstift (331-3) umfasst, der Gleitstift (331-3) relativ zu der Gleitstruktur (3356) in dem Gleitschlitz (3356-1) gleiten kann, wenn sich der Klappmechanismus in dem ausgeklappten Zustand befindet, sich der Gleitstift (331-3) an dem ersten Gleitende (3356-2) befindet und, wenn der Klappmechanismus in dem zusammengeklappten Zustand ist, sich der Gleitstift (331-3) an dem zweiten Gleitende (3356-3) befindet.

9. Klappmechanismus (33) nach einem der Ansprüche 4 bis 8, wobei die Gleitstruktur (3356) mit einem ersten Druckteil (3356-4) bereitgestellt ist und sich das erste Druckteil (3356-4) aus der ersten Plattenkante (3352-3, 3362-3) heraus erstreckt;
das erste Druckteil (3356-4) dazu konfiguriert ist, gegen die Türplatte (334) zu drücken, um die Türplatte (334) dazu anzutreiben, sich in die zweite Richtung (A2) von der Schaftbasis (331) wegzubewegen; und
in dem ausgeklappten Zustand das erste Druckteil (3356-4) dazu konfiguriert ist, die Türplatte (334) zu tragen.

10. Klappmechanismus (33) nach Anspruch 2, wobei ein Montageraum (3311) auf der Schaftbasis (331) angeordnet ist, ein Bogenstreifen (3317-1) auf einer Seitenwand (3314, 3316) des Montageraums (3311) angeordnet ist, das Gelenkpaar (3324) eine Bogenplatte (3324-1) und eine Erhebung (3324-2) umfasst, die sich auf einer konkaven Seite der Bogenplatte (3324-1) befindet, eine Kante der Bogenplatte (3324-1) und eine Kante der Erhebung (3324-2) eine Bogennut (3324-3) bilden, sich der Bogenstreifen (3317-1) in der Bogennut (3324-3) befindet und der Bogenstreifen (3317-1) in die Bogennut (3324-3) passt und sich in der Bogennut (3324-3) bewegen kann.

11. Klappmechanismus (33) nach Anspruch 2, wobei der Klappmechanismus (33) einen Schieber (340) und eine Auswurfstruktur (3319) umfasst, der Schieber (340) verschiebbar mit der Schaftbasis (331) verbunden ist, der Schieber (340) in der ersten Richtung (A1) auf der Schaftbasis (331) gleiten kann, das Gelenkpaar (3334) drehbar mit dem Schieber (340) verbunden ist und die Auswurfstruktur (3319) dazu konfiguriert ist, eine Auswurfkraft in der ersten Richtung (A1) auf das Gelenkpaar (3334) auszuüben.

12. Klappmechanismus (33) nach Anspruch 11, wobei der Schieber (340) einen Körper (3401) und eine erste Aufnahmenut (3403) und eine zweite Aufnahmenut (3404) umfasst, die sich auf dem Körper (3401) befinden, die erste Aufnahmenut (3403) mit der zweiten Aufnahmenut (3404) kommuniziert, die Auswurfstruktur (3319) auf der Schaftbasis (331) montiert ist, sich ein Abschnitt der Auswurfstruktur (3319) in der ersten Aufnahmenut (3403) befindet, sich das Gelenkpaar (3334) in der zweiten Aufnahmenut (3404) befindet und sich in der zweiten Aufnahmenut (3404) drehen kann und, wenn sich der Klappmechanismus (33) in dem ausgeklappten Zustand befindet, die Auswurfstruktur (3319) das Gelenkpaar (3334) auswirft.

13. Klappmechanismus (33) nach Anspruch 12, wobei die Auswurfstruktur (3319) eine Endabdeckung (3319-1), ein elastisches Teil (3319-2) und einen Auswurfstift (3319-3) umfasst, die in Reihe geschaltet sind, die Endabdeckung (3319-1) auf der Schaftbasis (331) montiert ist, sich das elastische Teil (3319-2) und der Auswurfstift (3319-3) in die erste Aufnahmenut (3403) erstrecken und, wenn sich der Klappmechanismus (33) in dem ausgeklappten Zustand befindet, der Auswurfstift (3319-3) gegen das Gelenkpaar (3334) drückt.

14. Klappmechanismus (33) nach Anspruch 12, wobei ein Bogenstreifen (3317-2) an einer Nutwand (3405, 3406) der zweiten Aufnahmenut (3404) angeordnet ist, das Gelenkpaar (3334) eine Bogenplatte (3334-1) und eine Erhebung (3334-2) umfasst, die sich an einer konkaven Seite der Bogenplatte (3334-1) befindet, eine Kante der Bogenplatte (3334-1) und eine Kante der Erhebung (3334-2) eine Bogennut (3334-3) bilden, sich der Bogenstreifen (3317-2) in der Bogennut (3334-3) befindet und der Bogenstreifen (3317-2) in die Bogennut (3334-3) passt und sich in der Bogennut (3334-3) bewegen kann.

15. Klappmechanismus (33) nach einem der Ansprüche 1 bis 14, wobei der Klappmechanismus (33) eine elastische Verbindungsstruktur (343, 344) umfasst, wobei die elastische Verbindungsstruktur (343, 344) die Schaftbasis (331) elastisch mit der Türplatte (334) verbindet und wobei bei einem Klappvorgang des Klappmechanismus (33) die elastische Verbindungsstruktur (343, 344) die Türplatte (334) dazu antreibt, sich in der zweiten Richtung (A2) in Richtung der Schaftbasis (331) zu bewegen.

## Revendications

1. Mécanisme de pliage (33), comprenant :
une base d'arbre (331) ;
un support (332, 333), comprenant un corps principal (3323, 3333) et une paire rotoïde (3324, 3334), dans lequel la paire rotoïde (3324, 3334) est connectée de manière fixe au corps principal (3323, 3333) et connectée de manière rotative à la base d'arbre (331) ;
une plaque de support (335, 336), comprenant une plaque principale (3352, 3362) et une paire cinématique (3353, 3363), dans lequel la plaque principale (3352, 3362) comprend un premier bord de plaque (3352-3, 3362-3) et un second bord de plaque (3352-4, 3362-4) qui sont disposés en face l'un de l'autre, et lorsque le mécanisme de pliage est dans un état déplié, le premier bord de plaque (3352-3, 3362-3) et le second bord de plaque (3352-4, 3362-4) sont agencés dans une première direction (A1) ; et la paire cinématique (3353, 3363) est connectée de manière fixe à la plaque principale (3352, 3362), et comprend une structure rotative (3355) et une structure coulissante (3356), la paire cinématique étant connectée de manière rotative au corps principal (3323, 3333) par la structure rotative, et connectée de manière coulissante à la base d'arbre (331) par la structure coulissante, la structure coulissante étant configurée pour permettre une rotation coulissante entre la paire cinématique et la base d'arbre ; et
une plaque de porte (334) qui peut se déplacer par rapport à la base d'arbre (331) dans une deuxième direction (A2), dans lequel la deuxième direction (A2) est perpendiculaire à la première direction (A1), et dans l'état déplié, la deuxième direction (A2) est perpendiculaire à un plan sur lequel se trouve la plaque principale (3352, 3362), dans lequel
dans l'état déplié, la plaque de support (335, 336) et la plaque de porte (334) sont agencées côte à côte dans la première direction (A1) et forment une surface de support (3351, 3341, 3361) pour supporter un affichage flexible (2), le premier bord de plaque (3352-3, 3362-3) est adjacent à la plaque de porte (334), et un espacement entre le premier bord de plaque (3352-3, 3362-3) et la plaque de porte (334) dans la première direction (A1) est une première dimension (H1) ; et
dans un état plié, l'espacement entre le premier bord de plaque (3352-3, 3362-3) et la plaque de porte (334) dans la première direction (A1) est une seconde dimension (H2), et la seconde dimension (H2) est supérieure à la première dimension (H1) pour fermer complètement un premier corps de cadre (31) et un second corps de cadre (32) connecté de manière fixe au support (332, 333) et supportant l'affichage flexible (2).

2. Mécanisme de pliage (33) selon la revendication 1, dans lequel la plaque de porte (334) comprend une première extrémité latérale (334-1) et une deuxième extrémité latérale (334-2) qui sont disposées en face l'une de l'autre dans une troisième direction (A3), et une troisième extrémité latérale (334-3) et une quatrième extrémité latérale (334-4) qui sont disposées en face l'une de l'autre dans la première direction (A1), la troisième direction (A3) est perpendiculaire à la première direction (A1), dans l'état déplié, le premier bord de plaque (3352-3, 3362-3) est adjacent à la troisième extrémité latérale (334-3) et/ou à la quatrième extrémité latérale (334-3), et la paire rotoïde (3324, 3334) et la paire cinématique (3353, 3363) sont situées dans une zone entre la première extrémité latérale (334-1) et la deuxième extrémité latérale (334-2).

3. Mécanisme de pliage (33) selon la revendication 2, dans lequel une dimension de la base d'arbre (331) dans la troisième direction (A3) est inférieure à une dimension de la plaque de support (335, 336) dans la troisième direction (A3), et la paire cinématique (3353, 3363) et la base d'arbre (331) sont agencées côte à côte dans la troisième direction (A3).

4. Mécanisme de pliage (33) selon la revendication 3, dans lequel la structure rotative (3355) et la structure coulissante (3356) sont situées sur un côté de la plaque de support (335, 336) et qui fait face au support (332, 333), une articulation (3358) est disposée entre la structure rotative (3355) et la structure coulissante (3356), la structure rotative (3355) se prolonge de l'articulation (3358) au second bord de plaque (3352-4, 3362-4), et la structure coulissante (3356) se prolonge de l'articulation (3358) au premier bord de plaque (3352-3, 3362-3) .

5. Mécanisme de pliage (33) selon la revendication 4, dans lequel le corps principal (3323, 3333) du support (332, 333) est doté d'une première partie d'extrémité (3323-6, 3333-6) et d'une seconde partie d'extrémité (3323-7, 3333-7) qui sont disposées en face l'une de l'autre dans la troisième direction (A3), chacune de la première partie d'extrémité (3323-6, 3333-6) et de la seconde partie d'extrémité (3323-7, 3333-7) est dotée d'une structure de connexion (3323-4, 3333-4), et la structure rotative (3355) est connectée de manière rotative à la structure de connexion (3323-4, 3333-4).

6. Mécanisme de pliage (33) selon la revendication 5, dans lequel la structure de connexion (3323-4, 3333-4) est dotée d'une rainure d'arc (3323-5, 3333-5), la structure rotative (3355) comprend une bande d'arc (3355-2), et la bande d'arc (3355-2) s'adapte à la rainure d'arc (3323-5, 3333-5) et peut se déplacer dans la rainure d'arc (3323-5, 3333-5).

7. Mécanisme de pliage (33) selon la revendication 6, dans lequel la rainure d'arc (3323-5, 3333-5) comprend une ouverture (3323-8, 3333-8) et une paroi inférieure (3323-8, 3333-9) qui sont disposées en face l'une de l'autre, et une direction se prolongeant de l'ouverture (3323-8, 3333-8) à la paroi inférieure (3323-8, 3333-9) est la troisième direction (A3).

8. Mécanisme de pliage (33) selon la revendication 4, dans lequel la structure coulissante (3356) est dotée d'une fente coulissante (3356-1), la fente coulissante (3356-1) comprend une première extrémité coulissante (3356-2) et une seconde extrémité coulissante (3356-3), la première extrémité coulissante (3356-2) est adjacente à l'articulation (3358), la seconde extrémité coulissante (3356-3) est adjacente au premier bord de plaque (3352-3, 3362-3) ou se prolonge hors du premier bord de plaque (3352-3, 3362-3), la base d'arbre (331) comprend une broche coulissante (331-3), la broche coulissante (331-3) peut coulisser par rapport à la structure coulissante (3356) dans la fente coulissante (3356-1), lorsque le mécanisme de pliage est dans l'état déplié, la broche coulissante (331-3) est située au niveau de la première extrémité coulissante (3356-2), et lorsque le mécanisme de pliage est dans l'état plié, la broche coulissante (331-3) est située au niveau de la seconde extrémité coulissante (3356-3).

9. Mécanisme de pliage (33) selon l'une quelconque des revendications 4 à 8, dans lequel la structure coulissante (3356) est dotée d'une première partie de pression (3356-4), et la première partie de pression (3356-4) se prolonge hors du premier bord de plaque (3352-3, 3362-3) ;
la première partie de pression (3356-4) est configurée pour appuyer contre la plaque de porte (334), pour amener la plaque de porte (334) à s'éloigner de la base d'arbre (331) dans la deuxième direction (A2) ; et
dans l'état déplié, la première partie de pression (3356-4) est configurée pour supporter la plaque de porte (334).

10. Mécanisme de pliage (33) selon la revendication 2, dans lequel l'espace de montage (3311) est disposé sur la base d'arbre (331), une bande d'arc (3317-1) est disposée sur une paroi latérale (3314, 3316) de l'espace de montage (3311), la paire rotoïde (3324) comprend une plaque d'arc (3324-1) et une bosse (3324-2) située sur un côté concave de la plaque d'arc (3324-1), un bord de la plaque d'arc (3324-1) et un bord de la bosse (3324-2) forment une rainure d'arc (3324-3), la bande d'arc (3317-1) est située dans la rainure d'arc (3324-3), et la bande d'arc (3317-1) s'adapte à la rainure d'arc (3324-3) et peut se déplacer dans la rainure d'arc (3324-3).

11. Mécanisme de pliage (33) selon la revendication 2, dans lequel le mécanisme de pliage (33) comprend un curseur (340) et une structure d'éjection (3319), le curseur (340) est connecté de manière coulissante à la base d'arbre (331), le curseur (340) peut coulisser sur la base d'arbre (331) dans la première direction (A1), la paire rotoïde (3334) est connectée de manière rotative au curseur (340), et la structure d'éjection (3319) est configurée pour appliquer une force d'éjection dans la première direction (A1) à la paire rotoïde (3334).

12. Mécanisme de pliage (33) selon la revendication 11, dans lequel le curseur (340) comprend un corps (3401) et une première rainure de logement (3403) et une seconde rainure de logement (3404) qui sont situées sur le corps (3401), la première rainure de logement (3403) communique avec la seconde rainure de logement (3404), la structure d'éjection (3319) est montée sur la base d'arbre (331), une partie de la structure d'éjection (3319) est située dans la première rainure de logement (3403), la paire rotoïde (3334) est située dans la seconde rainure de logement (3404) et peut tourner dans la seconde rainure de logement (3404), et lorsque le mécanisme de pliage (33) est dans l'état déplié, la structure d'éjection (3319) éjecte la paire rotoïde (3334).

13. Mécanisme de pliage (33) selon la revendication 12, dans lequel la structure d'éjection (3319) comprend un couvercle d'extrémité (3319-1), une partie élastique (3319-2) et une broche d'éjection (3319-3) qui sont connectés en séquence, le couvercle d'extrémité (3319-1) est monté sur la base d'arbre (331), la partie élastique (3319-2) et la broche d'éjection (3319-3) se prolongent dans la première rainure de logement (3403), et lorsque le mécanisme de pliage (33) est dans l'état déplié, la broche d'éjection (3319-3) appuie contre la paire rotoïde (3334).

14. Mécanisme de pliage (33) selon la revendication 12, dans lequel une bande d'arc (3317-2) est disposée sur une paroi de rainure (3405, 3406) de la seconde rainure de logement (3404), la paire rotoïde (3334) comprend une plaque d'arc (3334-1) et une bosse (3334-2) située sur un côté concave de la plaque d'arc (3334-1), un bord de la plaque d'arc (3334-1) et un bord de la bosse (3334-2) forment une rainure d'arc (3334-3), la bande d'arc (3317-2) est située dans la rainure d'arc (3334-3), et la bande d'arc (3317-2) s'adapte à la rainure d'arc (3334-3) et peut se déplacer dans la rainure d'arc (3334-3).

15. Mécanisme de pliage (33) selon l'une quelconque des revendications 1 à 14, dans lequel le mécanisme de pliage (33) comprend une structure de connexion élastique (343, 344), la structure de connexion élastique (343, 344) connecte élastiquement la base d'arbre (331) à la plaque de porte (334), et dans un processus de pliage du mécanisme de pliage (33), la structure de connexion élastique (343, 344) amène la plaque de porte (334) à se déplacer vers la base d'arbre (331) dans la deuxième direction (A2).
